# EUROPÄISCHE PATENTANMELDUNG

(11) **EP 3 424 579 A1**
(43) Veröffentlichungstag der Anmeldung: **09.01.2019**
(21) Anmeldenummer: 18183582.8
(22) Anmeldetag: 06.09.2014
(51) Int. Cl.: B01D 35/147, B01D 29/21, B01D 35/30

(54) **FILTEREINSATZ, DER ZUM ZUSAMMENWIRKEN MIT EINEM FILTER MIT EINEM FILTERUMGEHUNGSVENTIL AUSGEBILDET IST**

(30) Priorität: 10.09.2013 US 201361875834 P; 04.04.2014 US 201461975121 P; 28.08.2014 DE 202014104029 U
(62) Teilanmeldung aus: 14781055.0
(71) Anmelder: Hengst SE, 48147 Münster (DE)
(72) Erfinder: ARDES, Wilhelm, 59387 Ascheberg (DE)
(74) Vertreter: Linnemann, Winfried

(57) **Zusammenfassung**

Die Erfindung betrifft einen Filtereinsatz (3), der zum Zusammenwirken mit einem Filter (1) ausgebildet ist, der ein Filtergehäuse (2), einen Einlass (11) für zu filternde Flüssigkeit, eine Auslass (12) für gefilterte Flüssigkeit und ein Filterumgehungsventil (5) mit einem mittels einer Feder (52) in Schließrichtung vorbelasteten Ventilkörper (51) aufweist, wobei der Filtereinsatz (3) im in den Filter (1) eingebauten Zustand eine Rohseite (13) und eine Reinseite (14) des Filters (1) voneinander trennt und wobei der Filtereinsatz (3) austauschbar ist.

Der Filtereinsatz (3) gemäß Erfindung ist dadurch gekennzeichnet, dass er eine Federstütze (53) aufweist, mittels welcher im in das Filtergehäuse (2) eingebauten Zustand des Filtereinsatzes (3) die Feder (52) des Filterumgehungsventils (5) an ihrem von dem Ventilkörper (51) abgewandten Ende abstützbar und vorspannbar ist, dass der Filtereinsatz (3) aus einem hohlzylindrischen Filterstoffkörper (30) sowie zwei diesen stirnseitig einfassenden Stirnscheiben (31, 32) besteht, wobei eine oder jede Stirnscheibe (31, 32) eine zentrale Durchbrechung (31', 32') besitzt und wobei am Innenumfang des Filterstoffkörpers (30) ein innerer, gitterförmiger Stützkörper (37) zur radialen Abstützung des Filterstoffkörpers (30) bei seiner Durchströmung durch zu filternde Flüssigkeit in radialer Richtung von außen nach innen angeordnet ist, und dass die Federstütze (53) durch den oder an dem einen Teil des Filtereinsatzes (3) bildenden Stützkörper (37) ausgebildet ist.

## Beschreibung

Die vorliegende Erfindung betrifft einen Filtereinsatz, der zum Zusammenwirken mit einem Filter ausgebildet ist, der ein Filtergehäuse, einen Einlass für zu filternde Flüssigkeit, eine Auslass für gefilterte Flüssigkeit und ein Filterumgehungsventil, das aus einem Ventilsitz und aus einem relativ dazu beweglich geführten, in Schließrichtung vorbelasteten Ventilkörper besteht, aufweist, wobei der Ventilsitz filterfest im Filter angeordnet ist, wobei der Ventilkörper filterfest im Filter geführt ist, wobei eine den Ventilkörper in Schließrichtung vorbelastende Feder filterfest im Filter geführt ist, wobei der Filtereinsatz im in den Filter eingebauten Zustand eine Rohseite und eine Reinseite des Filters voneinander trennt und wobei der Filtereinsatz austauschbar ist.

Das Dokument US 6 579 448 B2 zeigt einen Filter mit einem auswechselbaren Filtereinsatz und mit einem Filterumgehungsventil. Ein Ventilsitz des Filterumgehungsventils ist am Filtereinsatz, konkret an dessen oberer Endscheibe, angeordnet. Ein Ventilkörper, eine diesen in Schließrichtung vorbelastende Feder und eine Federstütze sind gehäusefest ausgebildet. Konkret ist die Federstütze an einem zentralen gehäusefesten Rohrstutzen oder Stützkörper vorgesehen.

Das Dokument US 6 685 829 B1 zeigt ebenfalls einen Filter mit einem auswechselbaren Filtereinsatz und mit einem Filterumgehungsventil. Ein Ventilsitz ist am Filtereinsatz, hier konkret an dessen unterer Endscheibe, vorgesehen. Ein Ventilkörper, eine diesen in Schließrichtung vorbelastende Feder und eine Federstütze sind hier gehäusefest ausgeführt. Der Ventilkörper ist an einem zentralen gehäusefesten, jedoch axial begrenzt verschiebbaren, Rohrstutzen ausgebildet. Die Feder ist als Druckfeder zwischen dem Rohrstutzen und dem Gehäuse angeordnet.

Das Dokument DE 10 2009 021 973 A1 zeigt einen weiteren Filter mit einem auswechselbaren Filtereinsatz und mit einem Filterumgehungsventil. Der Ventilsitz, der Ventilkörper, die Feder und eine erste Federstütze des Filterumgehungsventils sind hier Teile des Filtereinsatzes. An einem filterfesten zentralen Rohrstutzen ist eine zweite Federstütze vorgesehen, die bei einem Aufsetzen des Filtereinsatzes auf den Rohrstutzen beim Einbauen des Filtereinsatzes in das Filtergehäuse das Abstützen der Feder übernimmt und deren Vorspannung erhöht.

Aus den Dokumenten US 8 123 937 B2 sind weitere Filter mit einem austauschbaren Filtereinsatz und mit einem Filterumgehungsventil bekannt. Der Ventilsitz und der Ventilkörper des Filterumgehungsventils sind hier jeweils am Filtereinsatz vorgesehen, konkret an dessen oberer Endscheibe. Eine den Ventilkörper in Schließrichtung vorbelastende Druckfeder und ein zusätzlicher Betätigungskörper, der bei eingebautem Filtereinsatz die Federkraft auf den Ventilkörper überträgt, sind gehäusefest angeordnet, konkret in einem gehäusefesten zentralen Stützkörper.

Das Dokument WO2006/112 853 A1 zeigt einen Filter mit einem auswechselbaren Filtereinsatz und mit einem Filterumgehungsventil. Der Ventilsitz ist hier am Filtereinsatz vorgesehen, konkret an dessen oberer Endscheibe. Ein Ventilkörper, eine diesen in Schließrichtung vorbelastende Feder und eine Federstütze sind gehäusefest ausgeführt. Konkret sind der Ventilkörper und die Feder in einem oberen Endbereich eines zentralen gehäusefesten Stützkörpers geführt. Die Federstütze ist ebenfalls an dem Stützkörper ausgebildet.

Bei Filtern der vorstehend beschriebenen Art, bei denen der Ventilsitz am auswechselbaren Filtereinsatz und der Ventilkörper filterfest ausgeführt sind, kommt es nach jedem Filtereinsatzwechsel zu einer Ventilpaarung mit zusammenwirkenden Ventilbauteilen, die nicht zuvor auf Dichtheit geprüft ist und auch nicht vorab auf Dichtheit prüfbar ist. Dies führt in der Praxis relativ häufig zu in ihrer Schließstellung undichten Filterumgehungsventilen, durch die in unerwünschter Weise ein ständiger Flüssigkeitsstrom fließt, der ungefiltert ist und der die für die vorgesehene Verwendung der gefilterten Flüssigkeit nötige Reinheit beeinträchtigt. Die aus dem Stand der Technik gemäß den drei vorstehend zuletzt genannten Dokumenten bekannten Lösungen, neben dem Ventilsitz auch den Ventilkörper am auswechselbaren Filtereinsatz vorzusehen, erfordern einen zusätzlichen Betätigungskörper und teils sogar eine weitere Feder, was nachteilig die Zahl der Bauteile und damit den Herstellungs-und Montageaufwand erhöht. Auch werden hierdurch die Filtereinsätze konstruktiv deutlich aufwendiger und dadurch teurer, was sich bei jedem Filtereinsatzwechsel erneut bemerkbar macht. Schließlich weisen die bekannten Filter den Nachteil auf, dass es relativ aufwendig ist, den Öffnungsdruck des Filterumgehungsventils zu verändern.

Für die vorliegende Erfindung stellt sich daher die Aufgabe, einen mit dem Filter zusammenwirkenden Filtereinsatz zu schaffen, der seinerseits ebenfalls möglichst einfach aufgebaut und kostengünstig herstellbar ist und mit dem der Filter zuverlässig und mit hoher Wirksamkeit betreibbar ist.

Zur Lösung der Aufgabe wird ein mit einem Filter der zuvor beschriebenen Art zusammenwirkender Filtereinsatz vorgeschlagen, der dadurch gekennzeichnet ist, dass er eine Federstütze aufweist, mittels welcher im in das Filtergehäuse eingebauten Zustand des Filtereinsatzes die Feder des Filterumgehungsventils an ihrem von dem Ventilkörper abgewandten Ende abstützbar und vorspannbar ist, dass der Filtereinsatz aus einem hohlzylindrischen Filterstoffkörper sowie zwei diesen stirnseitig einfassenden Stirnscheiben besteht, wobei eine oder jede Stirnscheibe eine zentrale Durchbrechung besitzt und wobei am Innenumfang des Filterstoffkörpers ein innerer, gitterförmiger Stützkörper zur radialen Abstützung des Filterstoffkörpers bei seiner Durchströmung durch zu filternde Flüssigkeit in radialer Richtung von außen nach innen angeordnet ist und dass die Federstütze durch den oder an dem einen Teil des Filtereinsatzes bildenden Stützkörper ausgebildet ist.

Mit einem derartigen erfindungsgemäßen Filtereinsatz kann der Filter, mit dem der Filtereinsatz zusammenwirkt, zweckentsprechend betrieben werden, wobei mittels der Federstütze am Filtereinsatz die Feder des Filterumgehungsventils im Filter vorspannbar ist und so mittels entsprechender Gestaltung des Filtereinsatzes der gewünschte Öffnungsdruck des Filterumgehungsventils festgelegt werden kann, ohne dass andere Teile des Filters dafür verändert oder ausgetauscht werden müssten. Es erfordert nur einen geringen Aufwand, den Öffnungsdruck des Filterumgehungsventils zu verändern, indem einfach der Filtereinsatz hinsichtlich der Lage oder Länge der die Feder abstützenden und vorspannenden Federstütze verändert wird. Auf diese Weise kann die Feder beim Einbauen des Filtereinsatzes mehr oder weniger stark vorgespannt werden, was ein problemloses Einstellen des gewünschten Öffnungsdrucks des Filterumgehungsventils erlaubt, selbst innerhalb einer laufenden Serienherstellung. Vorteilhaft ist auch, dass dabei das Filterumgehungsventil mit nur einer Feder auskommt und neben dem Ventilkörper keinen zusätzlichen beweglichen Betätigungskörper benötigt. Der Filtereinsatz braucht abgesehen von der Federstütze keine weiteren Teile des Filterumgehungsventils aufzunehmen oder aufzuweisen, wodurch der Filtereinsatz als Verbrauchsteil technisch einfach und preiswert bleibt.

An dem Filtereinsatz ist die Federstütze durch einen oder an einem einen Teil des Filtereinsatzes bildenden Stützkörper ausgebildet. Der Filtereinsatz weist in aller Regel ohnehin einen Stützkörper auf, der den Filterstoffkörper im Betrieb des Filters gegen ein Kollabieren infolge von Druckdifferenzen zwischen seinen beiden Seiten abstützt. Somit wird hier der Stützkörper nutzbringend zusätzlich für die Integration der Federstütze genutzt.

In weiterer Ausgestaltung des Filtereinsatzes ist vorgesehen, dass die Federstütze mit dem zentralen Stützkörper im Filterstoffkörper einstückig sowie in Form eines radial nach innen und im Einbauzustand axial nach unten weisenden, ringförmigen Stützkragens ausgeführt ist, dass der Stützkörper nur mit der im Einbauzustand unteren Stirnscheibe verbunden ist und dass das im Einbauzustand obere Ende des Stützkörpers in einem Abstand von der Unterseite der im Einbauzustand oberen Stirnscheibe liegt oder an der Unterseite der oberen Stirnscheibe abgestützt ist.

Eine alternative weiterer Ausgestaltung des Filtereinsatzes sieht vor, dass die Federstütze in Form von radial nach innen vorragenden Rippen einstückig mit dem gitterförmigen Stützkörper ausgeführt ist und dass der Stützkörper mit beiden Stirnscheiben verbunden ist.

Der Filtereinsatz kann vorteilhaft in verschiedenen Ausführungen, insbesondere mit unterschiedlicher axialer Länge oder Lage seiner Federstütze hergestellt werden, wodurch eine Vorspannung der Feder und so der Öffnungsdruck des Filterumgehungsventils eines mit dem Filtereinsatz ausgestatteten Filters auf einen gewünschten Wert festlegbar ist. Besonders vorteilhaft ist, dass bei Bedarf durch einen Austausch des Filtereinsatzes gegen einen solchen mit geänderter Federstützenlänge oder Federstützenlage der Öffnungsdruck des Filterumgehungsventils später auch noch veränderbar ist, ohne dass irgendwelche Änderungen am Filter selbst vorgenommen werden müssen.

Zwecks Vermeidung eines Ersatzes des erfindungsgemäßen Filtereinsatzes durch Fremd-Filtereinsätze wird für den Filtereinsatz erfindungsgemäß weiterhin vorgeschlagen, dass die Federstütze mehrere Stützarme aufweist, die entsprechend der Form und Anordnung von offenen Zwischenräume in einem Anschlag oder von Einführöffnungen in einem Ventilhalter des zugehörigen Filters geformt und angeordnet sind, wobei die Stützarme beim Einbauen des Filtereinsatzes in das Filtergehäuse durch die offenen Zwischenräume oder die Einführöffnungen hindurchführbar sind und wobei die Stützarme mit den offenen Zwischenräume oder mit den Einführöffnungen eine Schlüssel-Schloss-Codierung bilden. Damit ist in einen bestimmten Filter nur ein bestimmter, angepasster Filtereinsatz einbaubar, was den Einsatz von unpassenden und oft qualitativ minderwertigen Fremd-Filtereinsätzen verhindert.

Weiter wird für den Filtereinsatz gemäß Erfindung vorgeschlagen, dass er zusätzlich zu den die Federstütze bildenden Stützarmen erste Positionierelemente aufweist und dass mittels der ersten Positionierelemente und mittels damit zusammenwirkender zweiter, am Ventilhalter zusätzlich zu den Einführöffnungen vorgesehener Positionierelemente der Filtereinsatz bei seinem Einbauen in den Filter in eine in Umfangsrichtung eingriffsgerechte Stellung seiner Stützarme relativ zu den Einführöffnungen des Ventilhalters führbar ist. Die Stützarme können dadurch relativ filigran ausgeführt werden, weil sie nur axiale Kräfte auf die Feder oder auf einen die Feder abdeckenden Abdeckkörper ausüben müssen. Von in Umfangsrichtung wirkenden Kräften, wie sie bei der Positionierung des Filtereinsatzes relativ zum Filterumgehungsventil oder zu dessen Ventilhalter auftreten, sind die Stützarme dagegen vollständig entlastet, da diese Kräfte allein von den Positionierelementen aufgenommen werden. Die Stützarme einerseits und die Positionierelemente andererseits können deshalb jeweils für ihren Zweck optimal konturiert und dimensioniert werden, was der Haltbarkeit und Betriebssicherheit zugutekommt.

Dabei ist bevorzugt vorgesehen, dass die ersten Positionierelemente am Innenumfang des Stützkörpers zwischen den Stützarmen angeordnet sind und die Form von in Axialrichtung verlaufenden, radial nach innen vorstehenden länglichen Rippen oder Stegen haben.

Weiter wird ein Filtereinsatz vorgeschlagen, der zum Zusammenwirken mit einem Filter, der ein Rücklaufsperrventil mit einer flexible Ventilmembran und einen starren Membranträger aufweist, ausgebildet ist, welcher dadurch gekennzeichnet ist, dass bei in den Filter eingebautem Filtereinsatz die Ventilmembran an ihrem radial inneren Randbereich mittels des Filtereinsatzes gegen den Membranträger einklemmbar ist.

Dabei ist vorzugsweise mittels eines radial innen am Filtereinsatz angeordneten Dichtrings die Ventilmembran an ihrem radial inneren Randbereich gegen den Membranträger einklemmbar.

Weiter schlägt die Erfindung einen Filtereinsatz vor, der zum Zusammenwirken mit einem Filter ausgebildet ist, der als Anschraubwechselfilter ausgeführt ist und dessen eine Stirnseite als Verbindungsflansch zum Verbinden des Filters mit einem Anschlussflansch einer einen Kreislauf mit zu filternder Flüssigkeit besitzenden Vorrichtung ausgeführt ist, welcher dadurch gekennzeichnet ist, dass mit einer im in den Filter eingebauten Zustand flanschseitigen Stirnscheibe des Filtereinsatzes radial außen ein Dichtringträger verbunden oder einstückig ausgeführt ist, auf dem ein Dichtring angebracht oder anbringbar ist, mittels welchem der Filter gegen den Anschlussflansch der den Kreislauf mit zu filternder Flüssigkeit besitzenden Vorrichtung abdichtbar ist.

In weiterer Ausgestaltung ist vorgesehen, dass der Dichtringträger mit der Stirnscheibe über in Umfangsrichtung gesehen in Abständen voneinander angeordnete Verbindungsstege verbunden ist.

Dabei kann auf einer radial nach außen weisenden Oberfläche der Verbindungsstege oberhalb des umlaufenden Dichtungsträgers jeweils ein Wulst oder Rastnocken angeformt sein.

In weiterer Ausgestaltung des Filtereinsatzes kann die/jede Durchbrechung eine diese radial außen umgreifende Dichtlippe besitzen.

Auch besteht die Möglichkeit, dass der Stützkörper im Inneren des Filterstoffkörpers relativ zum übrigen Filtereinsatz drehbar und/oder in Axialrichtung verschiebbar angeordnet ist.

Eine andere Ausgestaltung sieht vor, dass der Stützkörper des Filtereinsatzes als separates Einzelteil am Innenumfang des Filterstoffkörpers angeordnet ist und sich mit seinem im Einbauzustand oberen Ende gegen die Unterseite der oberen Stirnscheibe abstützt und dass das andere Ende des Stützkörpers die Federstütze bildet.

Weiter ist für den erfindungsgemäßen Filtereinsatz vorgesehen, dass ein im Einbauzustand des Filtereinsatzes oberes Ende des Stützkörpers als Losdrehsicherungsring ausgebildet ist, an dessen Stirnseite Nocken einstückig angeformt sind, die im Einbauzustand des Filtereinsatzes mit Eintiefungen an einem radial innen vom Filterstoffkörper liegenden Gewindestutzen des Filtergehäuses in Eingriff stehen und eine Losdrehsicherung bilden.

Es besteht auch die Möglichkeit, dass der Stützkörper im Filtereinsatz in Axialrichtung verschiebbar und relativ zum übrigen Filtereinsatz verdrehbar ist, dass der Stützkörper im Einbauzustand des Filtereinsatzes relativ zu einem einen Teil des Filters bildenden, den Filtereinsatz tragenden, verdrehfesten zentralen Rohrstutzen in Umfangsrichtung nicht oder nur sehr begrenzt verdrehbar ist und dass der Stützkörper im Einbauzustand des Filtereinsatzes von der Feder in Eingriffsrichtung der Losdrehsicherung beaufschlagt ist.

Gemäß einer weiteren Alternative kann der Stützkörper des Filtereinsatzes einstückig mit der im Einbauzustand oberen Stirnscheibe des Filtereinsatzes ausgeführt sein.

Es ist auch möglich, dass der Stützkörper sowohl mit der unteren Stirnscheibe als auch mit der oberen Stirnscheibe des Filtereinsatzes verbunden ist.

Eine Alternative schlägt vor, dass der Stützkörper nur mit der unteren Stirnscheibe verbunden ist und dass das obere Ende des Stützkörpers in einem Abstand von der Unterseite der oberen Stirnscheibe liegt.

Schließlich ist für den erfindungsgemäßen Filtereinsatz vorgesehen, dass an der einen Stirnscheibe des Filtereinsatzes Rastarme angeordnet sind, mittels welcher der Filtereinsatz mit einem Schraubdeckel des den Filtereinsatz aufnehmenden Filtergehäuses des Filters lösbar verrastbar ist.

Im Folgenden werden Ausführungsbeispiele der Erfindung anhand einer Zeichnung erläutert. Die Figuren der Zeichnung zeigen:
- Figur 1: einen ersten Filter mit einem damit zusammenwirkenden, auswechselbaren Filtereinsatz und mit einem Filterumgehungsventil, in einem abgewinkelten Längsschnitt,
- Figur 2: den Filter aus Figur 1 im Querschnitt gemäß der Schnittlinie II-II in Figur 1,
- Figur 3: ein vergrößertes Detail des Filters aus Figur 1, mit dem Filterumgehungsventil in Schließstellung,
- Figur 4: das gleiche Detail wie Figur 3, nun mit dem Filterumgehungsventil in Öffnungsstellung,
- Figur 5: den Filter mit einem damit zusammenwirkenden, auswechselbaren Filtereinsatz in einer zweiten Ausführung, im Anlieferungszustand, im Längsschnitt,
- Figur 6: den Filter mit einem damit zusammenwirkenden, auswechselbaren Filtereinsatz aus Figur 5 im Einbauzustand, mit geschlossenem Filterumgehungsventil, im Längsschnitt,
- Figur 7: den Filtereinsatz des Filters nach Figur 5 und 6 als Einzelteil, im Längsschnitt,
- Figur 8: den Filter aus Figur 6, nun mit offenem Filterumgehungsventil, im Längsschnitt,
- Figur 9: den Filter mit einem damit zusammenwirkenden, auswechselbaren Filtereinsatz in einer dritten Ausführung, im Einbauzustand mit geschlossenem Filterumgehungsventil und mit einer Losdrehsicherung, im Längsschnitt,
- Figur 10: den Filter aus Figur 9 im Querschnitt gemäß der Schnittlinie B-B in Figur 9,
- Figur 11: den Filter aus Figur 9 im Querschnitt gemäß der Schnittlinie C-C in Figur 9,
- Figur 12: den Filter aus den Figuren 9 bis 11 im Längsschnitt gemäß der Schnittlinie D-D in Figur 11,
- Figur 13: den Filter aus den Figuren 9 bis 12 im Längsschnitt gemäß der Schnittlinie E-E in Figur 12,
- Figur 14: den Filter aus den Figuren 9 bis 13 im Längsschnitt gemäß der Schnittlinie F-F in Figur 12,
- Figur 15: einen Stützkörper als Teil des Filtereinsatzes nach Figur 9 bis14, als Einzelteil in Ansicht schräg von oben,
- Figur 16: ein vergrößertes Detail aus Figur 13 mit der Losdrehsicherung in einer ersten Ausführung,
- Figur 17: das Detail aus Figur 13 mit der Losdrehsicherung in einer zweiten Ausführung,
- Figur 18: den Filter mit einem damit zusammenwirkenden, auswechselbaren Filtereinsatz in einer vierten Ausführung, im Einbauzustand mit geschlossenem Filterumgehungsventil und mit einem in der linken und rechten Hälfte der Figur in zwei unterschiedlichen Ausführungen dargestellten ersten Filtereinsatz, im Längsschnitt,
- Figur 19: den Filter in einer gegenüber der Figur 18 geänderten Ausführung, im Einbauzustand mit geschlossenem Filterumgehungsventil und mit einem in der linken und rechten Hälfte der Figur in zwei unterschiedlichen Ausführungen dargestellten zweiten Filtereinsatz, im Längsschnitt,
- Figur 20: einen Filter mit einem damit zusammenwirkenden, auswechselbaren Filtereinsatz in einer weiteren Ausführung, im Längsschnitt,
- Figur 21: den Filter mit einem damit zusammenwirkenden, auswechselbaren Filtereinsatz in einer weiteren Ausführung, im Längsschnitt,
- Figur 22: den Filter und den Filtereinsatz aus Figur 21 im Querschnitt gemäß der Schnittlinie G - G in Figur 21,
- Figur 23: den Filter und den Filtereinsatz aus Figur 21 im Querschnitt gemäß der Schnittlinie H - H in Figur 21,
- Figur 24: das Filtergehäuse und den darin angeordneten Filtereinsatz des Filters aus Figur 21, im Längsschnitt,
- Figur 25: das Filtergehäuse mit dem Filtereinsatz aus Figur 24, in Ansicht schräg von unten,
- Figur 26: den Filtereinsatz des Filters aus Figur 21 in Ansicht schräg von unten,
- Figur 27: den Filtereinsatz aus Figur 26 im Längsschnitt,
- Figur 28: den Filtereinsatz aus Figur 27 im Querschnitt nach der Schnittlinie F' - F' in Figur 27,
- Figur 29: das Detail W aus Figur 21 in vergrößerter Darstellung,
- Figur 30: den Filtereinsatz des Filters in einer geänderten Ausführung für einen Filter ohne Rücklaufsperrventil, in Ansicht schräg von unten,
- Figur 31: den Filtereinsatz aus Figur 30 im Längsschnitt,
- Figur 32: einen Filter mit einem damit zusammenwirkenden, auswechselbaren Filtereinsatz in einer weiteren Ausführung im Längsschnitt,
- Figur 33: das Filtergehäuse mit darin angeordnetem Filtereinsatz des Filters aus Figur 32, in Ansicht schräg von unten,
- Figur 34: das Filtergehäuse mit Filtereinsatz aus Figur 33, im Längsschnitt,
- Figur 35: einen Filter mit einem damit zusammenwirkenden, auswechselbaren Filtereinsatz in einer weiteren Ausführung, im Längsschnitt,
- Figur 36: einen Filter mit einem damit zusammenwirkenden, auswechselbaren Filtereinsatz in einer weiteren Ausführung, im Längsschnitt,
- Figur 37: einen Filter mit einem damit zusammenwirkenden, auswechselbaren Filtereinsatz in einer weiteren Ausführung, im Längsschnitt,
- Figur 38: einen Filter mit einem damit zusammenwirkenden, auswechselbaren Filtereinsatz in einer weiteren Ausführung, im Längsschnitt,
- Figur 39: den Filter mit dem Filtereinsatz aus Figur 38 im Querschnitt gemäß der Schnittlinie B - B in Figur 38,
- Figur 40: das Detail V aus Figur 39 in vergrößerter Darstellung,
- Figur 41: den Filter mit dem Filtereinsatz aus Figur 38 im Querschnitt gemäß der Schnittlinie D - D in Figur 38,
- Figur 42: das Detail U aus Figur 41 in vergrößerter Darstellung,
- Figur 43: den Filter mit dem Filtereinsatz aus Figur 38 im Längsschnitt gemäß der Schnittlinie C - C in Figur 39,
- Figur 44: das Detail X in Figur 43 in vergrößerter Darstellung,
- Figur 45: den Filter aus Figur 43 im Querschnitt gemäß der Schnittlinie I - I in Figur 43,
- Figur 46: das Detail W in Figur 45 in vergrößerter Darstellung,
- Figur 47: einen Filter mit einem damit zusammenwirkenden, auswechselbaren Filtereinsatz in einer weiteren Ausführung, im Längsschnitt,
- Figur 48: das Detail Y aus Figur 47 in vergrößerter Darstellung,
- Figur 49: den Filter mit dem Filtereinsatz gemäß Figur 47 ohne Filtergehäuse und mit nur teilweise dargestelltem Filtereinsatz in einer ersten Phase der Montage am Anschlussflansch, in Ansicht, teils im Längsschnitt,
- Figur 50: den Filter mit dem Filtereinsatz aus Figur 49 in gleicher Darstellung in einer zweiten Phase der Montage am Anschlussflansch,
- Figur 51: den Filter mit dem Filtereinsatz aus Figur 49 in gleicher Darstellung in einer dritten Phase der Montage am Anschlussflansch,
- Figur 52: den Filter mit dem Filtereinsatz aus Figur 49 in gleicher Darstellung in einer vierten Phase der Montage am Anschlussflansch,
- Figur 53: das Filtergehäuse und den darin angeordneten Filtereinsatz, in einer längs geschnittenen Ansicht,
- Figur 54: einen Filter mit einem damit zusammenwirkenden, auswechselbaren Filtereinsatz in einer weiteren Ausführung, im Längsschnitt,
- Figur 55: einen Filter mit einem damit zusammenwirkenden, auswechselbaren Filtereinsatz in einer weiteren Ausführung, im Längsschnitt,
- Figur 56: den Filter aus Figur 55 in einem Zustand mit vom Anschlussflansch abgebautem Filtergehäuse und Filtereinsatz, im Längsschnitt,
- Figur 57: einen Filter mit einem damit zusammenwirkenden, auswechselbaren Filtereinsatz in einer weiteren Ausführung, in einem an einen Anschlussflansch angebauten Zustand, im Längsschnitt, und
- Figur 58: den Filter mit dem Filtereinsatz aus Figur 57 in einem vom Anschlussflansch abgebauten Zustand, im Längsschnitt.

In der nachfolgenden Figurenbeschreibung sind gleiche Teile in den verschiedenen Figuren der Zeichnung stets mit den gleichen Bezugsziffern versehen, so dass nicht jede Bezugsziffer in jeder Zeichnungsfigur erneut erläutert werden muss.

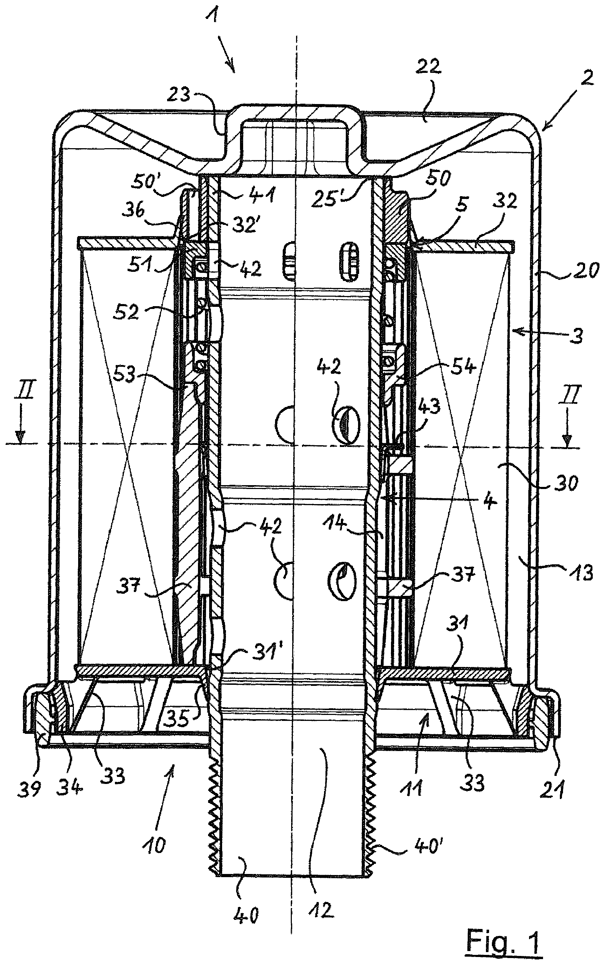

Die Figur 1 der Zeichnung zeigt ein Ausführungsbeispiel für einen auswechselbaren Filtereinsatz 3, der mit einem Filter 1, der als Anschraubwechselfilter ausgeführt ist und hier im Längsschnitt dargestellt ist, zusammenwirkt. Der Filter 1 besitzt ein im Wesentlichen becherförmiges Filtergehäuse 2 mit einer Umfangswand 20, mit einer hier nach unten weisenden offenen Stirnseite 21 und einer hier nach oben weisenden geschlossenen Stirnseite 22. Im Zentrum der oberen Stirnseite 22 ist ein Werkzeugansatz 23, wie Sechskant, angeformt, an dem ein Schraubwerkzeug angesetzt werden kann.

Zentral durch das Innere des Filters 1 verläuft ein zentraler Rohrstutzen 4, der mit seinem äußeren, hier unteren Endbereich 40 aus dem Filtergehäuse 2 in Axialrichtung vorsteht und dort mit einem äußeren Schraubgewinde 40' versehen ist. An seinem inneren, hier oberen Endbereich 41 liegt der Rohrstutzen 4 an der Unterseite der oberen Stirnseite 22 des Filtergehäuses 2 an. Hier ist bei dem gezeigten Ausführungsbeispiel der Rohrstutzen 4 mit dem Filtergehäuse 2 fest verbunden, beispielsweise entlang einer Schweißnaht 25' verschweißt. Dazu bestehen das Filtergehäuse 2 und der Rohrstutzen 4 beispielsweise aus Stahlblech. In seinem im Inneren des Filtergehäuses 2 liegenden Bereich besitzt der Rohrstutzen 4 mehrere in Umfangs- und Längsrichtung verteilte Durchbrechungen 42.

Weiterhin ist im Filtergehäuse 2 des Filters 1 der auswechselbare Filtereinsatz 3 angeordnet, der aus einem hohlzylindrischen Filterstoffkörper 30 sowie zwei diesen stirnseitig einfassenden Stirnscheiben 31 und 32 besteht. Jede Stirnscheibe 31, 32 besitzt eine zentrale Durchbrechung 31', 32', so dass der Filtereinsatz 3 von unten her auf den Rohrstutzen 4 aufsteckbar und so in das Innere des Filtergehäuses 2 einführbar ist. Am Innenumfang des Filterstoffkörpers 30 ist außerdem ein innerer, gitterförmiger Stützkörper 37 zur radialen Abstützung des Filterstoffkörpers 30 bei seiner Durchströmung durch zu filternde Flüssigkeit in radialer Richtung von außen nach innen angeordnet.

Weiter weist der Filter 1 ein integriertes Filterumgehungsventil 5 auf, welches hier in Höhe der oberen Stirnscheibe 32 des Filtereinsatzes 3 angeordnet ist. Das Filterumgehungsventil 5 besitzt einen Ventilsitz 50, der als Ringkörper ausgebildet und dicht auf dem Außenumfang des inneren Endbereichs 41 des Rohrstutzens 4 angebracht ist. Durch den als Ringkörper ausgebildeten Ventilsitz 50 verlaufen mehrere axiale Durchlassöffnungen 50', von denen in Figur 1 nur eine zu sehen ist.

Mit dem Ventilsitz 50 wirkt ein ebenfalls ringförmiger Ventilkörper 51 zusammen, der unterhalb des Ventilsitzes 50 axial verschieblich auf dem Außenumfang des Rohrstutzens 4 geführt ist. Mittels einer als Schraubendruckfeder ausgeführten Feder 52 wird der Ventilkörper 51 in Richtung zum Ventilsitz 50 und somit in Schließrichtung des Filterumgehungsventils 5 vorbelastet. An ihrem von dem Ventilkörper 51 abgewandten Ende ist die Feder 52 durch den Filtereinsatz 3 abgestützt. Hierzu besitzt der Filtereinsatz 3 beim dargestellten Ausführungsbeispiel eine Federstütze 53, die hier die Form von vier in Axialrichtung nach oben verlaufenden, vorragenden Stützarmen 53' hat und die einstückig mit dem inneren Stützkörper 37 ausgebildet ist. Diese Federstütze 53 stützt über einen Zwischenring 54, der axial verschieblich auf dem Außenumfang des Rohrstutzens 4 geführt ist, die Feder 52 an ihrem unteren Ende ab.

Die Kraft, mit der die Feder 52 auf den Ventilkörper 51 in Schließrichtung wirkt, wird also unter anderem durch die Federstütze 53, hier konkret durch deren axiale Länge oder axiale Lage, bestimmt. Dies bietet die vorteilhafte Möglichkeit, den Öffnungsdruck des Filterumgehungsventils 5 auf einfache Art und Weise zu verändern, indem in den Filter 1 ein Filtereinsatz 3 mit einer entsprechend geänderten Federstütze 53 eingebaut wird. Eine größere axiale Länge der Federstütze 53 führt zu einer höheren Vorspannung der Feder 52 und damit zu einem höheren Öffnungsdruck des Filterumgehungsventils 5. Umgekehrt führt eine geringere axiale Länge der Federstütze 53 zu einer verminderten Vorspannung der Feder 52 und damit zu einem niedrigeren Öffnungsdruck des Filterumgehungsventils 5.

Schließlich ist auf dem Außenumfang des Rohrstutzens 4 unterhalb der Feder 52 noch ein Anschlag 43 axial unverschiebbar und in Umfangsrichtung unverdrehbar angeordnet, der hier durch ein Blechformteil gebildet und auf den Rohrstutzen 4 zum Beispiel aufgepresst ist. Über seinen Umfang verteilt besitzt der Anschlag 43 mehrere in Figur 1 nicht sichtbare Ausnehmungen oder offene Zwischenräume 44, durch welche jeweils ein Stützarm 53' der Federstütze 53 verläuft. Dabei bilden die Zwischenräume 44 und die Stützarme 53' der Federstütze 53 miteinander eine Schlüssel-Schloss-Codierung, die nur den Einbau eines passenden, auf die Codierung abgestimmten Filtereinsatzes 3 in den Filter 1 erlaubt.

Der Filtereinsatz 3 trennt eine außen vom Filtereinsatz 3 liegende Rohseite 13 des Filters 1 von einer im Inneren des Filtereinsatzes 3 und des Rohrstutzens 4 liegenden Reinseite 14 des Filters 1. Zur Abdichtung des Filtereinsatzes 3 gegen den Rohrstutzen 4, auf den der Filtereinsatz 3 aufgesteckt ist, besitzt der Filtereinsatz 3 an seiner unteren Stirnscheibe 31 eine die Durchbrechung 31' radial außen umgreifende Dichtlippe 35 und an seiner oberen Stirnscheibe 32 ebenfalls eine die Durchbrechung 32' radial außen umgreifende Dichtlippe 36.

Die untere Stirnseite 21 des Filters 1 ist als Verbindungsflansch 10 ausgebildet, der mit einem Anschlussflansch an einer einen Kreislauf mit zu filternder Flüssigkeit, wie Schmieröl, aufweisenden Vorrichtung, wie Brennkraftmaschine, mittels des Gewindes 40' des Rohrstutzens 4 in eine lösbare Verbindung bringbar ist. Radial außen vom äußeren Endbereich 40 des Rohrstutzens 4 liegt ein Einlass 11, durch welchen die zu filternde Flüssigkeit von unten nach oben in die Rohseite 13 des Filters 1 einströmen kann. Das Innere des Rohrstutzens 4 bildet einen Auslass 12 für gefilterte Flüssigkeit.

Zum Abdichten der Flanschverbindung zwischen dem Filter 1 und der zugehörigen, in der Figur 1 nicht dargestellten Vorrichtung, wie Brennkraftmaschine, dient ein Dichtring 39, der an der unteren Stirnseite 21 des Filters 1 angeordnet ist. Der Dichtring 39 wird hier von einem Dichtringträger 34 gehalten, der radial innen vom Dichtring 39 umlaufend angeordnet ist. Der Dichtringträger 34 ist hier einstückig mit der unteren Stirnscheibe 31 des Filtereinsatzes 3 ausgeführt und mit der Stirnscheibe 31 über in Umfangsrichtung gesehen in Abständen voneinander angeordnete Verbindungsstege 33 verbunden. Der Einlass 11 für die zu filternde Flüssigkeit verläuft durch die Zwischenräume zwischen den Verbindungsstegen 33.

Im normalen Betrieb des Filters 1 strömt die zu reinigende Flüssigkeit, wie Schmieröl einer Brennkraftmaschine, durch den an der unteren Stirnseite 21 ausgebildeten Einlass 11 auf die Rohseite 13 des Filters 1 und von dort durch den Filterstoffkörper 30 des Filtereinsatzes 3 auf die radial innen von diesem liegende Reinseite 14 des Filters 1. Von dort gelangt die gefilterte Flüssigkeit durch die Durchbrechungen 42 im Rohrstutzen 4 in dessen Inneres und strömt durch diesen hindurch nach unten durch den Auslass 12 ab. Das Filterumgehungsventil 5 befindet sich dabei in seiner Schließstellung, wie sie in Figur 1 dargestellt ist.

Die räumliche Ausrichtung des Filters 1 spielt dabei für seinen Betrieb keine Rolle; der Filter 1 und der Filtereinsatz 3 sind in jeder räumlichen Lage einsetzbar. Die in der Zeichnung dargestellte Ausrichtung ist lediglich beispielhaft. Bevorzugt ist bei der Filterausführung nach Figur 1 aber eine stehende Anordnung, bei der das Filterumgehungsventil 5 oben im Filter liegt. Hierdurch wird ein möglicherweise die Funktion störendes Absetzen von Schmutzpartikeln auf den Teilen des Filterumgehungsventils 5 weitestgehend vermieden. Auch wird so verhindert, dass bei einem Öffnen des Filterumgehungsventils 5 zuvor im tiefsten Bereich des Filters auf dessen Rohseite 13 abgesetzte Schmutzpartikel auf die Reinseite 14 mitgenommen werden.

Tritt zwischen der Rohseite 13 und der Reinseite 14 des Filters 1 eine unzulässig hohe Druckdifferenz oberhalb eines vorgebbaren Grenzwertes auf, führt dies dazu, dass die Flüssigkeit auf der Rohseite 13 durch die Durchlassöffnungen 50' so stark auf den Ventilkörper 51 einwirkt, dass dieser gegen die Kraft der Feder 52 vom Ventilsitz 50 weg bewegt wird, das Filterumgehungsventil 5 also öffnet. In diesem Zustand wird ein den Filterstoffkörper 30 umgehender Strömungsweg für die Flüssigkeit von der Rohseite 13 durch die Durchlassöffnungen 50' zur Reinseite 14 und durch die Durchbrechungen 42 in das Innere des Rohrstutzens 4, also zum Auslass 12 des Filters 1, freigegeben. Wenn die Druckdifferenz unter den Grenzwert absinkt, überwiegt wieder die Kraft der Feder 52 und das Filterumgehungsventil 5 schließt.

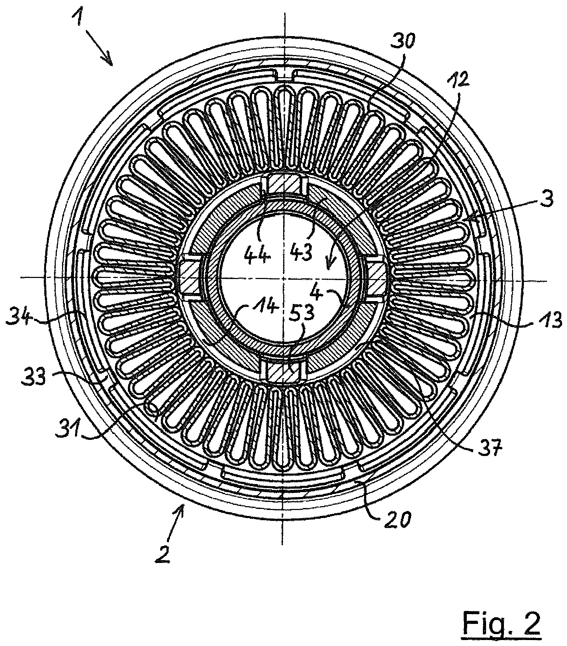

In Figur 2 ist der Filter 1 mit dem damit zusammenwirkenden, auswechselbaren Filtereinsatz 3 aus Figur 1 in Querschnitt gezeigt. Radial außen verläuft die Umfangswand 20 des Filtergehäuses 2. Im Inneren des Gehäuses 2 liegt der Filtereinsatz 3 mit dem Filterstoffkörper 30, der durch eine in Falten gelegte Filterstoffbahn gebildet ist. Unter dem Filterstoffkörper 30 liegt die untere Stirnscheibe 31 des Filtereinsatzes 3, mit der der Dichtringträger 34 über die Verbindungsstege 33 einstückig verbunden ist.

Radial innen vom Filterstoffkörper 30 liegt der innere Stützkörper 37 mit der Federstütze 53 in Form der vier in Axialrichtung verlaufenden Stützarme 53'. Zwischen den Stützarmen 53' der Federstütze 53 ist der Anschlag 43 mit den darin vorgesehenen offenen Zwischenräumen 44 für die Stützarme 53' der Federstütze 53 sichtbar. Den radial innersten Teil bildet der zentrale Rohrstutzen 4, an dessen unteren inneren Ende der Auslass 12 liegt.

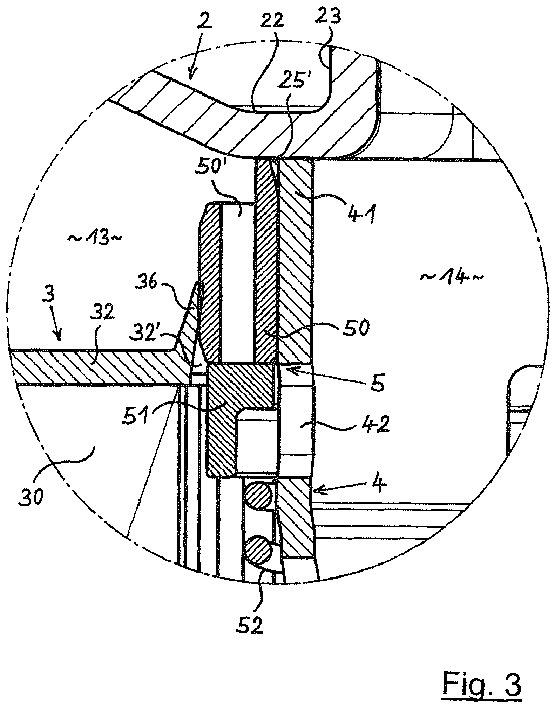

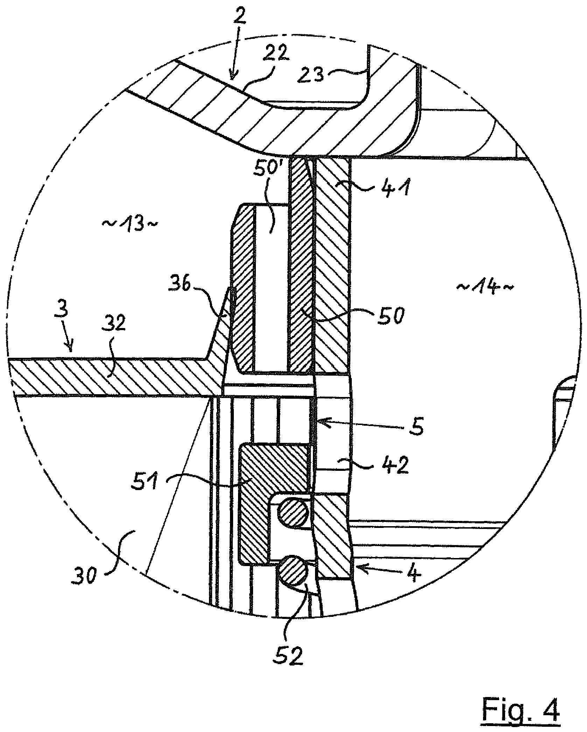

Die Figuren 3 und 4 zeigen ein vergrößertes Detail aus dem Filter 1 mit dem Filterumgehungsventil 5 nach Figur 1, das in Figur 3 in Schließstellung und in Figur 4 in Öffnungsstellung dargestellt ist.

Oben ist in Figur 3 und 4 jeweils ein Teil der oberen Stirnseite 22 des Filtergehäuses 2 mit dem Werkzeugansatz 23 erkennbar. An die Unterseite der Stirnseite 22 ist der zentrale Rohrstutzen 4 mit seinem inneren Endbereich 41 angeschweißt und verläuft von dort nach unten.

Im linken Teil der Figuren 3 und 4 ist jeweils ein kleiner Teil des Filtereinsatzes 3 erkennbar, mit dem Filterstoffkörper 30 und der oberen Stirnscheibe 32 mit ihrer Dichtlippe 36, die am Außenumfang des Ventilsitzes 50 dichtend anliegt und hier die Rohseite 13 von der Reinseite 14 des Filters 1 trennt.

Auf dem Außenumfang des inneren Endbereichs 41 des Rohrstutzens 4 ist der die Form eines Ringkörpers aufweisende Ventilsitz 50 fest und dicht angebracht. Durch den Ventilsitz 50 verlaufen die Durchlassöffnungen 50' in axialer Richtung.

Axial unterhalb des Ventilsitzes 50 liegt der ebenfalls in Form eines Ringkörpers ausgeführte Ventilkörper 51, der in Axialrichtung verschiebbar auf dem Außenumfang des Rohrstutzens 4 geführt ist. Mittels der unterhalb des Ventilkörpers 51 angeordneten Feder 52 ist der Ventilkörper 51 mit einer in Schließrichtung wirkenden Kraft vorbelastet. Solange die Druckdifferenz zwischen der Rohseite 13 und der Reinseite 14 einen vorgebbaren Grenzwert nicht überschreitet, hält die Feder 52 den Ventilkörper 51 in flüssigkeitsdichter Anlage am Ventilsitz 50 und eine Strömung der Flüssigkeit von der Rohseite 13 zur Reinseite 14 ist nur unter Durchströmung des Filterstoffkörpers 30 des Filtereinsatzes 3 möglich.

Figur 4 zeigt den geöffneten Zustand des Filterumgehungsventils 5, der auftritt, wenn die Druckdifferenz zwischen der Rohseite 13 und der Reinseite 14 den vorgegebenen Grenzwert überschreitet. In diesem Fall ist die von der auf der Rohseite 13 befindlichen Flüssigkeit durch die Durchlassöffnungen 50' auf den Ventilkörper 51 ausgeübte Kraft in Öffnungsrichtung größer als die von der Feder 52 auf den Ventilkörper 51 in Schließrichtung ausgeübte Kraft. Der Ventilkörper 51 ist nun vom Ventilsitz 50 durch Verschieben in Axialrichtung nach unten entfernt, wodurch ein Strömungsweg für die Flüssigkeit von der Rohseite 13 zur Reinseite 14 durch die Durchlassöffnungen 50' und die Durchbrechungen 42 des zentralen Rohrstutzens 4 unter Umgehung des Filterstoffkörpers 30 freigegeben wird. Auf diese Weise können unzulässig hohen Druckdifferenzen zwischen Rohseite 13 und Reinseite 14 vermieden werden, die beispielsweise bei Zähflüssigkeit der zu filternden Flüssigkeit infolge von niedriger Temperatur und/oder bei mit Schmutzpartikeln zugesetztem Filterstoffkörper 30 auftreten.

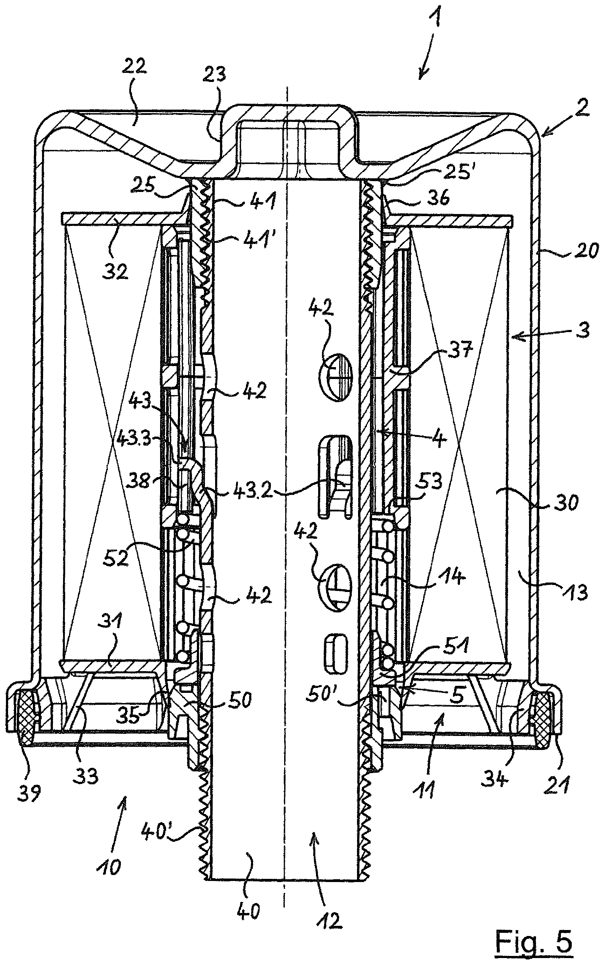

Figur 5 zeigt einen Filter 1 mit einem damit zusammenwirkenden, auswechselbaren Filtereinsatz 3 in einer zweiten Ausführung, im Anlieferungszustand, im Längsschnitt. Der Filter 1 besitzt auch hier ein becherförmiges Filtergehäuse 2 mit einer Umfangswand 20, mit einer offenen, hier unteren Stirnseite 21 und einer geschlossenen, hier oberen Stirnseite 22, in deren Zentrum ein Werkzeugansatz 23 angeformt ist. Mit der oberen Stirnseite 22 des Filtergehäuses 2 ist ein konzentrisch zur Umfangswand 20 in das Innere des Filtergehäuses 2 vorragender Gewindestutzen 25 fest verbunden, hier mittels einer Schweißnaht 25' verschweißt. Dazu bestehen das Filtergehäuse 2 und der Gewindestutzen 25 hier aus Stahlblech, wobei das Gehäuse 2 bevorzugt ein Tiefziehteil ist.

Konzentrisch zur Umfangswand 20 ist im Inneren des Filtergehäuses 2 weiterhin ein zentraler Rohrstutzen 4 angeordnet, der in seinem inneren, hier oberen Endbereich 41 mit einem Außengewinde 41' versehen ist, mittels welchem der Rohrstutzen 4 in den Gewindestutzen 25 eingeschraubt ist.

In seinem äußeren, hier unteren Endbereich 40 besitzt der Rohrstutzen 4 ein Außengewinde 40', mittels welchem der Filter 1 an einen Anschlussflansch einer zugehörigen, hier nicht dargestellten Vorrichtung, wie Brennkraftmaschine eines Kraftfahrzeugs, anschraubbar ist. In seinem Bereich zwischen dem äußeren Endbereich 40 und dem inneren Endbereich 41 besitzt der Rohrstutzen 4 mehrere in Umfangs-und Axialrichtung verteilte Durchbrechungen 42. Außerdem besitzt der Rohrstutzen 4 etwa in seiner Längsmitte über seinen Umfang verteilt hier drei Anschläge 43. Jeder Anschlag 43 ist hier durch eine einstückig aus dem Material des Rohrstutzens 4 herausgedrückte Anschlagzunge 43.2 mit einer in Radialrichtung nach außen weisenden Anschlaglasche 43.3 gebildet.

Auf den Außenumfang des Rohrstutzens 4 und des Gewindestutzens 25 ist der Filtereinsatz 3 von unten her aufgesteckt. Der Filtereinsatz 3 besteht aus einem hohlzylindrischen Filterstoffkörper 30, der stirnseitig von einer unteren Stirnscheibe 31 und einer oberen Stirnscheibe 32 eingefasst ist. Jede Stirnscheibe 31, 32 besitzt je eine zentrale Durchbrechung 31', 32' mit jeweils einer zugeordneten Dichtlippe 35, 36. Radial innen vom Filterstoffkörper 30 ist ein gitterförmiger Stützkörper 37 angeordnet.

Mit der unteren Stirnscheibe 31 ist über Verbindungsstege 33 ein Dichtringträger 34 einstückig verbunden, der einen umlaufende Dichtring 39 trägt. Im unbelasteten Zustand ragt der Dichtring 39 in Axialrichtung nach außen, hier unten, über die untere Stirnseite 21 des Filtergehäuses 2 vor und dichtet im montierten Zustand des Filters 1 diesen an einem zugehörigen Anschlussflansch ab.

Schließlich umfasst der Filter 1 nach Figur 5 noch ein Filterumgehungsventil 5, das hier im unteren Bereich des Filtergehäuses 2 in Höhe der unteren Stirnscheibe 31 des Filtereinsatzes 3 auf dem Rohrstutzen 4 angeordnet ist. Ein Ventilsitz 50 ist durch einen dicht auf dem Rohrstutzen 4 angeordneten Ringkörper mit in Umfangsrichtung einander benachbarten, in Axialrichtung verlaufenden Durchlassöffnungen 50' gebildet. Im montierten Zustand des Filters 1 ist der Ventilsitz 50 in Axialrichtung und Umfangsrichtung fixiert. Mit dem Ventilsitz 50 wirkt ein in Axialrichtung auf dem Rohrstutzen 4 verschiebbarer, ringförmiger Ventilkörper 51 zusammen, der durch eine Feder 52 in Form einer Schraubendruckfeder in Schließrichtung des Filterumgehungsventils 5 vorbelastet ist. Das von dem Ventilkörper 51 abgewandten Ende der Feder 52 wird dabei durch eine Federstütze 53 abgestützt, die an dem Stützkörper 37, genauer am unteren Stirnende von dessen axialen Streben 38, des Filtereinsatzes 3 ausgebildet ist. In Figur 5 ist das Filterumgehungsventil 5 in seiner Schließstellung gezeigt. Dabei liegt der Ventilkörper 51 dichtend an dem Ventilsitz 50 an und verschließt die darin vorhandenen Durchlassöffnungen 50'.

Die in Figur 5 nach unten weisende Seite des Filters 1 bildet einen Verbindungsflansch 10 zum Verbinden des Filters 1 mit einem zugehörigen Anschlussflansch. Radial außen von dem vorstehenden unteren Endbereich 40 des zentralen Rohrstutzens 4 verläuft ein Einlass 11 für zu reinigende Flüssigkeit, wie Schmieröl, in das Innere des Filters 1 auf dessen Rohseite 13. Radial innen vom Filterstoffkörper 30 liegt ein Reinbereich 14 des Filters, der über die Durchbrechungen 42 mit dem Inneren des Rohrstutzens 4 verbunden ist, welcher einen nach unten führenden Auslass 12 für gefilterte Flüssigkeit bildet.

In dem Zustand, wie er in Figur 5 dargestellt ist, kann der Filter 1 mit dem Filtereinsatz 3 als vorgefertigte Baueinheit z. B. einem Motoren- oder Fahrzeughersteller zugeliefert werden, der den Filter 1 dann schnell und einfach montieren kann. Dabei ist für diese Filterausführung eine hängende Anordnung bevorzugt, bei der das Filterumgehungsventil 5 dann oben im Filter 1 in dessen sauberstem Bereich liegt. Generell ist aber auch dieser Filter 1 mit dem Filtereinsatz 3 in jeder räumlichen Lage einsetzbar.

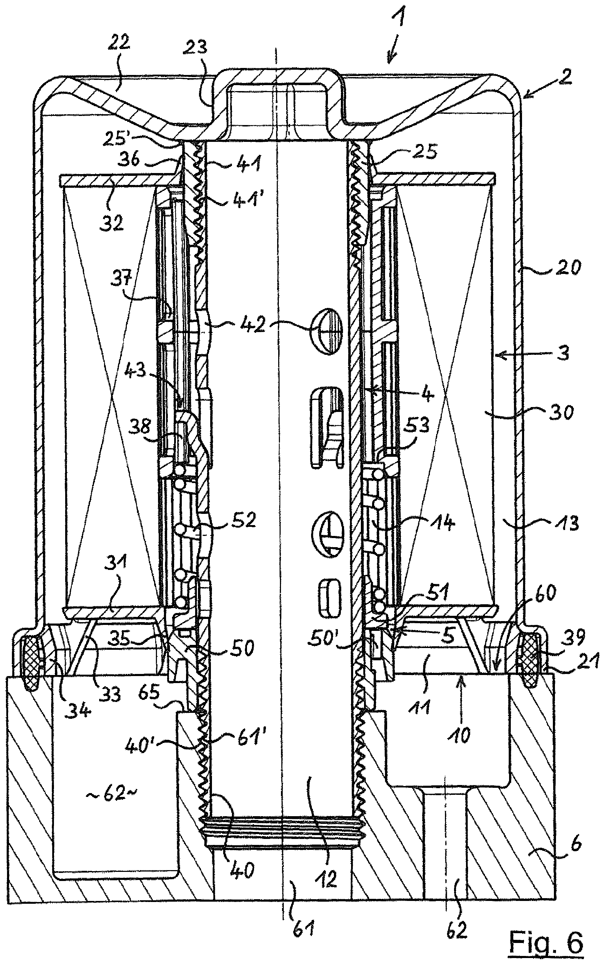

Die Figur 6 zeigt den Filter 1 mit dem Filtereinsatz 3 aus Figur 5 im Einbauzustand, mit geschlossenem Filterumgehungsventil 5, im Längsschnitt. Im unteren Teil der Figur 6 ist ein Teil einer Vorrichtung 6, wie des Kurbelgehäuses einer Brennkraftmaschine, dargestellt, welche oberseitig einen Anschlussflansch 60 aufweist, an den der Filter 1 mit seinem Verbindungsflansch 10 angebaut ist. Zu diesem Zweck wird der Filter 1 mittels eines an dem Werkzeugansatz 23 angesetzten Schraubwerkzeuges mit dem mit dem Gewinde 40' versehenen unteren Endbereich 40 des Rohrstutzens 4 in ein Gegengewinde 61' des Anschlussflansches 60 eingeschraubt, bis die untere Stirnseite 21 des Filtergehäuses 2 an der Oberfläche des Anschlussflansches 60 anliegt oder ein vorgebbares Anzugsdrehmoment erreicht ist. Nach außen hin ist die Flanschverbindung durch den nun komprimierten Dichtring 39 flüssigkeitsdicht abgedichtet, wobei in der Zeichnung lediglich aus zeichnungstechnischen Gründen der Dichtring 39 in seinem entspannten, nicht komprimierten Zustand dargestellt ist. Der Ventilsitz 50 liegt nun mit seinem unteren Stirnende an einem im Anschlussflansch 60 ausgebildeten Anschlag 65 an, wodurch die axiale Position des Ventilsitzes 50 festgelegt und gesichert ist.

Im normalen Betrieb dieses Filters 1 strömt zu reinigende Flüssigkeit, wie Schmieröl, durch einen Rohflüssigkeitskanal 62 in der Vorrichtung 6 zum Einlass 11 des Filters 1 und auf dessen Rohseite 13. Die Flüssigkeit durchströmt dann den Filterstoffkörper 30 des Filtereinsatzes 3 in Radialrichtung von außen nach innen und gelangt unter Zurücklassung von Schmutzpartikeln im Filterstoffkörper 30 auf die Reinseite 14 des Filters 1. Durch die Durchbrechungen 42 hindurch fließt die gereinigte Flüssigkeit nach unten und über den Auslass 12 in den Reinflüssigkeitskanal 61 der Vorrichtung 6.

In diesem normalen Zustand, bei dem eine Druckdifferenz zwischen der Rohseite 13 und der Reinseite 14 unterhalb eines vorgebbaren Grenzwertes bleibt, ist das Filterumgehungsventil 5 geschlossen, wie in Figur 6 dargestellt.

In seinen weiteren Teilen entspricht der Filter 1 in Figur 6 dem Filter 1 in Figur 5, auf deren Beschreibung verwiesen wird.

Zum Einbauen des Filtereinsatzes 3 in den Filter 1 wird das Filtergehäuse 2 entfernt, hier von dem zentralen Rohrstutzen 4 abgeschraubt. Zu diesem Zweck ist die Verschraubung des unteren Endbereichs 40 des Rohrstutzens 4 mit dem Außengewinde 40' im Gewinde 61' des Anschlussflansches 60 mit einem größeren Losdrehwiderstand ausgeführt als die Verschraubung zwischen dem Gewindestutzen 25 am Filtergehäuse 2 und dem Gewinde 41' am oberen Endbereich 41 des Rohrstutzens 4. Beim Abschrauben des Filtergehäuses 2 bleibt hier also der Rohrstutzen 4 mit dem Anschlussflansch 60 verbunden. Der größere Losdrehwiderstand der Verschraubung zwischen dem Rohrstutzen 4 und dem Anschlussflansch 60 kann beispielsweise dadurch erreicht werden, dass diese Verschraubung mit einer mikroverkapselten Schraubensicherung versehen wird, die ihre Sicherungswirkung beim ersten Herstellen der Verschraubung entfaltet.

Bei entferntem Filtergehäuse 2 kann hier der Filtereinsatz 3 von oben her auf den Rohrstutzen 4 aufgesteckt werden und dann das Filtergehäuse 2 wieder angeschraubt werden. Sobald der Filtereinsatz 3 zusammen mit dem Filtergehäuse 2 um einen gewissen Weg auf dem Rohrstutzen 4 nach unten bewegt ist, tritt die Federstütze 53 am Stützkörper 37 des Filtereinsatzes 3 in Eingriff mit dem oberen, vom Ventilkörper 51 abgewandten Ende der Feder 52 und spannt diese bei der weiteren Bewegung nach unten auf ein gewünschtes Maß vor. Somit sorgt auch hier der Filtereinsatz 3 für die Einstellung einer gewünschten Vorspannung der Feder 52 und damit für einen gewünschten Öffnungsdruck des Filterumgehungsventils 5.

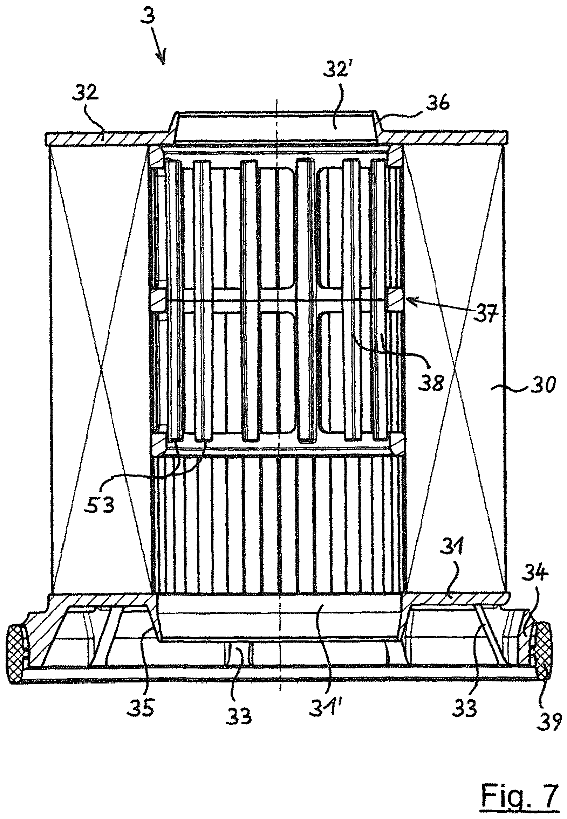

Die Figur 7 zeigt den Filtereinsatz 3 des Filters 1 nach Figur 5 und 6 als Einzelteil im Längsschnitt. Der hohlzylindrische Filterstoffkörper 30 ist an seinen beiden Stirnseiten von den Stirnscheiben 31 und 32 dicht eingefasst. Die untere Stirnscheibe 31 besitzt die zentrale Durchbrechung 31' mit der umlaufenden Dichtlippe 35. Außerdem ist mit der unteren Stirnscheibe 31 über die Verbindungsstege 33 der Dichtringträger 34 mit dem daran gehaltenen Dichtring 39 einstückig verbunden. Die obere Stirnscheibe 32 besitzt eine zentrale Durchbrechung 32', die von der Dichtlippe 36 umgeben ist.

In Inneren des Filterstoffkörpers 30 ist der gitterförmige Stützkörper 37 angeordnet, der in Umfangsrichtung voneinander beabstandet mehrere axiale Streben 38 aufweist. Deren unteres Ende bildet hier die Federstütze 53 für die Feder 52 des Filterumgehungsventils 5.

Im Rahmen einer Filterwartung wird ein verbrauchter Filtereinsatz 3 gegen einen frischen Filtereinsatz 3 getauscht; alle weiteren Teile des Filters 1 werden weiter verwendet. Der Filtereinsatz 3 besteht zweckmäßig vollständig aus verbrennbaren Materialien, sodass verbrauchte Filtereinsätze 3 problemlos und vollständig thermisch verwertet werden können.

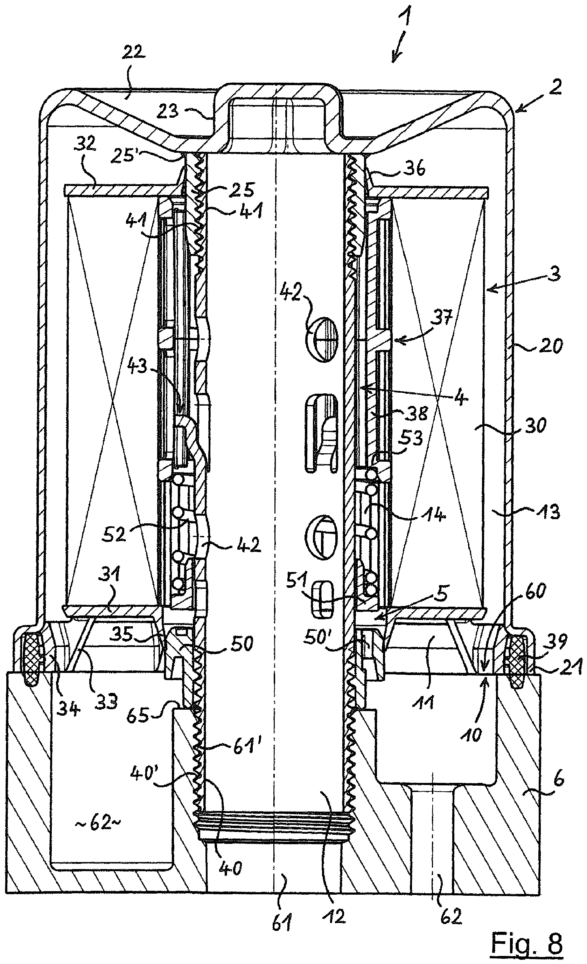

Figur 8 zeigt den Filter 1 mit dem damit zusammenwirkenden, auswechselbaren Filtereinsatz 3 aus Figur 6, nun in einem Betriebszustand mit offenem Filterumgehungsventil 5, im Längsschnitt. Dieser Betriebszustand tritt dann ein, wenn eine Druckdifferenz zwischen der Rohseite 13 und der Reinseite 14 des Filters 1 einen vorgebbaren Grenzwert überschreitet, beispielsweise in Folge einer hohen Viskosität der Flüssigkeit bei niedriger Temperatur und/oder bei einem durch Schmutzpartikel zugesetztem Filterstoffkörper 30. Dies führt dazu, dass die von der Flüssigkeit auf den Ventilkörper 51 in Öffnungsrichtung ausgeübte Kraft die von der Feder 52 auf den Ventilkörper 51 in Schließrichtung ausgeübte Kraft übersteigt. In diesem Fall sorgt die Kraft der Flüssigkeit dafür, dass der Ventilkörper 51 gegen die Kraft der Feder 52 in Axialrichtung auf dem Außenumfang des Rohrstutzens 4 verschoben und von dem Ventilsitz 50 abgehoben wird. Hierdurch wird eine unmittelbare Strömungsverbindung von der Rohseite 13 durch die Durchlassöffnungen 50' des Ventilsitzes 50 zur Reinseite 14 und durch das Innere des Rohrstutzens 4 zum Auslass 12 des Filters 1 unter Umgehung des Filterstoffkörpers 30 freigegeben.

Hinsichtlich der weiteren in Figur 8 dargestellten Teile wird auf die Beschreibung der Figur 6 verwiesen.

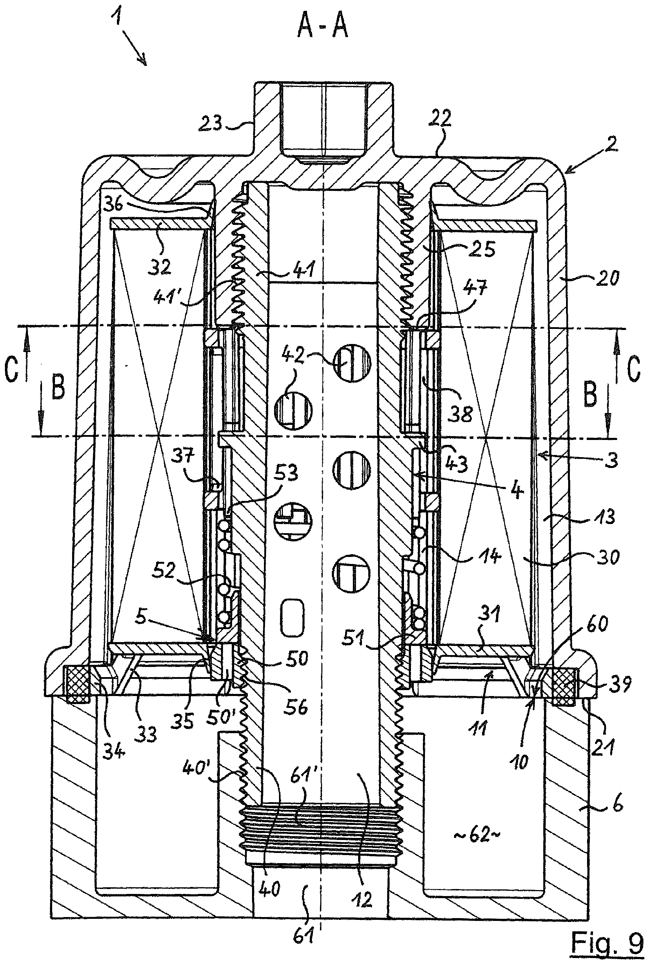

Die Figur 9 der Zeichnung zeigt einen Filter 1 mit einem damit zusammenwirkenden, auswechselbaren Filtereinsatz 3 in einer dritten Ausführung, im Einbauzustand mit geschlossenem Filterumgehungsventil 5 und zusätzlich mit einer Losdrehsicherung 47, im Längsschnitt. Für eine sichere Funktion eines Flüssigkeitsfilters 1 mit einem Anschraubgehäuse, wie es das Filtergehäuse 2 bei dem Filter 1 nach Figur 9 darstellt, ist es wesentlich, dass ein selbsttätiges Losdrehen sicher vermieden wird. Hierzu dient bei dem Beispiel des Filters 1 nach Figur 9 eine integrierte Losdrehsicherung 47. Die Losdrehsicherung 47 ist hier zwischen dem Stützkörper 37 des Filtereinsatzes 3 einerseits und dem Gewindestutzen 25 an der Innenseite des Filtergehäuses 2 andererseits ausgebildet. Der Stützkörper 37 ist relativ zu dem zentralen Rohrstutzen 4 nicht oder nur sehr begrenzt in Umfangsrichtung verdrehbar, aber in Axialrichtung verschiebbar ausgeführt. Da, wie auch bei den zuvor beschriebenen Ausführungsbeispielen, hier die an dem Stützkörper 37 ausgebildete Federstütze 53 die Feder 52 des Filterumgehungsventils 5 an ihrem vom Ventilkörper 51 entfernten Ende abstützt, übt die Feder 53 eine in Axialrichtung auf den axial beweglichen Stützkörper 37 in Richtung zum Gewindestutzen 25 wirkende Kraft aus. Hierdurch werden ein oberes Stirnende des Stützkörpers 37 und eine untere Stirnseite des Gewindestutzens 25 mit einer durch die Federkraft der Feder 52 bestimmten Kraft aneinander angedrückt. Zudem sind der Stützkörper 37 und der Gewindestutzen 25 an ihren miteinander in Kontakt tretenden Flächen mit ineinandergreifenden Konturen ausgebildet, wie später noch erläutert wird. Diese Konturen sorgen für die gewünschte Sicherung des als Schraubgehäuse ausgebildeten Filtergehäuses 2 gegen ein unerwünschtes selbsttätiges Losdrehen von dem zentralen Rohrstutzen 4.

Auch in dieser Ausführung des Filters 1 besitzt der zentrale Rohrstutzen 4 in seinem mittleren Bereich an seinem Umfang den Anschlag 43, der hier in Form von einstückig mit dem Rohrstutzen 4 ausgebildeten, in Radialrichtung nach außen vorstehenden Nasen ausgebildet ist.

Bei dem Beispiel nach Figur 9 ist bevorzugt vorgesehen, dass das Filtergehäuse 2 mit dem Gewindestutzen 25 einstückig ausgebildet ist und ein Spritzgussteil aus Kunststoff ist. Bevorzugt ist weiter vorgesehen, dass auch der zentrale Rohrstutzen 4 hier ein Spritzgussteil aus Kunststoff ist. Ein geeigneter Kunststoff, der die nötige mechanische, thermische und chemische Stabilität aufweist, ist beispielsweise Polyamid (PA), welcher einen gewissen Anteil an Glasfasern enthalten kann.

Wie schon die zuvor beschriebenen Ausführungsbeispiele ist auch dieses Ausführungsbeispiel des Filters 1 mit dem damit zusammenwirkenden, auswechselbaren Filtereinsatz 3 nach Figur 9 mit einem Filterumgehungsventil 5 ausgestattet. Dazu ist der Ventilsitz 50 mit seinen Durchlassöffnungen 50' auch hier auf das Außengewinde 40' des unteren Endbereichs 40 des Rohrstutzens 4 aufgeschraubt. Der Ventilkörper 51 befindet sich oberhalb des Ventilsitzes 50 und ist auch hier in Axialrichtung auf dem Außenumfang des Rohrstutzens 4 verschiebbar. Die Feder 52 beaufschlagt den Ventilkörper 51 mit einer in Schließrichtung wirkenden Kraft.

Hinsichtlich der weiteren Teile in Figur 9 und deren Funktion wird auf die vorhergehende Beschreibung, insbesondere der Figur 6, verwiesen.

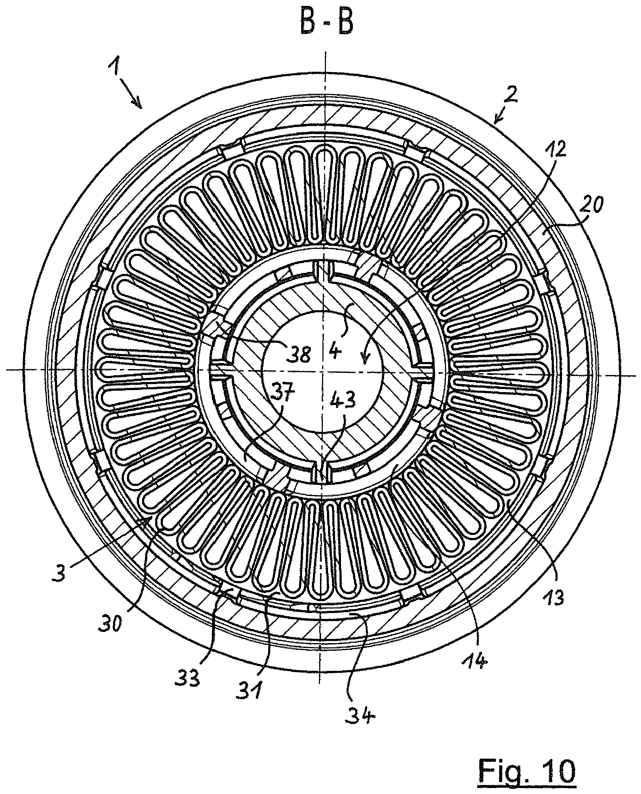

Figur 10 zeigt den Filter 1 mit dem damit zusammenwirkenden, auswechselbaren Filtereinsatz 3 aus Figur 9 im Querschnitt gemäß der Schnittlinie B-B in Figur 9. Radial außen ist das Filtergehäuse 2 mit seiner Umfangswand 20 sichtbar. Radial innen davon liegt im Hintergrund die untere Stirnscheibe 31 mit den Verbindungsstegen 33 für den Dichtringträger 34. Auf der unteren Stirnscheibe 31 ist der Filterstoffkörper 30 in Form der gefalteten Filterstoffbahn angeordnet. Radial innen vom Filterstoffkörper 30 liegt der gitterförmige Stützkörper 37. Den radial innersten Teil des Filters 1 bildet auch hier wieder der zentrale Rohrstutzen 4, von dem über dessen Außenumfang verteilt insgesamt vier vorspringenden Nasen als Anschlag 43 vorragen. Die Figur 10 verdeutlicht, dass der Stützkörper 37 und die den Anschlag 43 bildenden Nasen sich in Radialrichtung gesehen überlappen, so dass ein Verdrehen des Stützkörpers 37 relativ zum zentralen Rohrstutzen 4 nicht oder nur sehr begrenzt möglich ist.

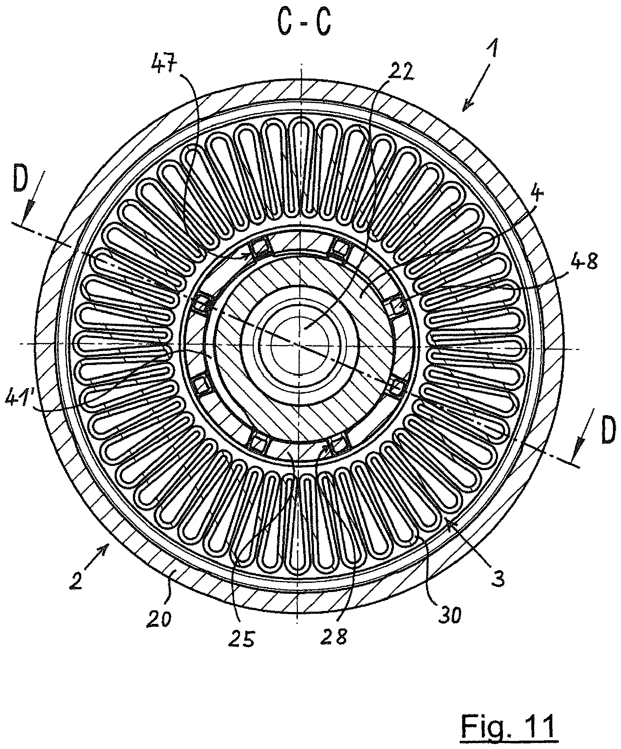

Die Figur 11 zeigt den Filter 1 aus Figur 9 ebenfalls im Querschnitt, nun gemäß der Schnittlinie C - C in Figur 9. Der radial äußere Teil des Filters 1 bis einschließlich des Filterstoffkörpers 30 entspricht demjenigen der Figur 10, auf deren Beschreibung diesbezüglich verwiesen wird.

Radial innen vom Filterstoffkörper 30 ist nun der Gewindestutzen 25 des Filtergehäuses 2 nahe seiner unteren Stirnseite geschnitten, in welcher hier insgesamt acht Eintiefungen 28 in Umfangsrichtung regelmäßig voneinander beabstandet als stirnseitige Kontur eingeformt sind. Umgekehrt sind auf der zum Gewindestutzen 25 weisenden Stirnseite des einen Teil des Stützkörpers 37 bildenden Losdrehsicherungsrings 47' Nocken 48 einstückig angeformt, die mit den Eintiefungen 28 in Eingriff treten. Die Eintiefungen 28 und die Nocken 48 bilden zusammen mit der Feder 52 die Losdrehsicherung 47. Da der Stützkörper 37, wie zuvor beschrieben, von der Feder 52 in Richtung zum Gewindestutzen 25 vorbelastet wird, bilden die Eintiefungen 28 und die Nocken 48 eine Art Rasteingriff, der ein unerwünschtes selbsttätiges Verdrehen des Filtergehäuses 2 gegen den Stützkörper 37 verhindert. Da der Stützkörper 37 seinerseits gegen ein Verdrehen relativ zum Rohrstutzen 4 gesichert ist, kann sich das Filtergehäuse 2 auch bei im Betrieb des Filters 1 in der Praxis auftretenden Erschütterungen oder Druckpulsationen nicht selbsttätig von dem zentralen Rohrstutzen 4 losdrehen.

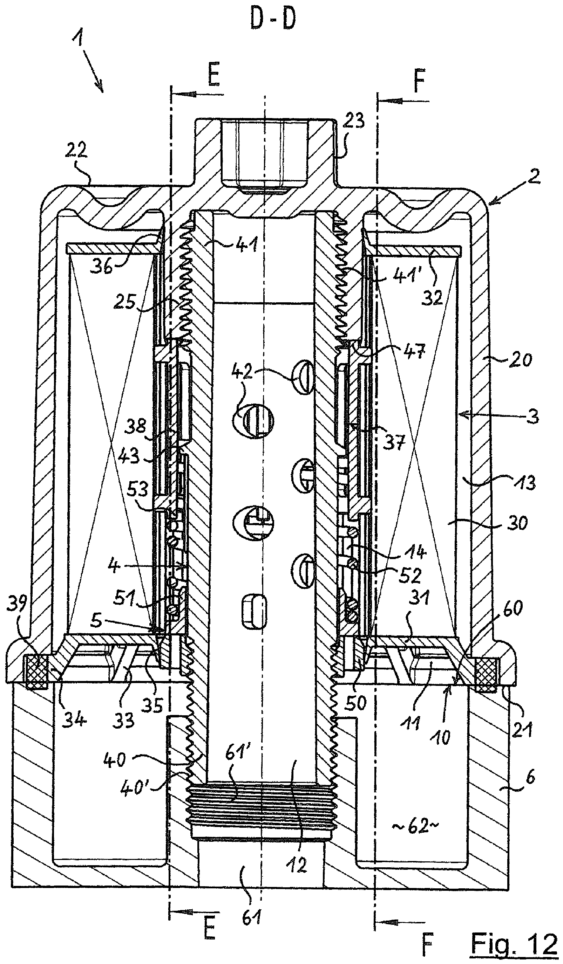

Die Figur 12 zeigt den Filter 1 mit dem damit zusammenwirkenden, auswechselbaren Filtereinsatz 3 aus den Figuren 9 bis 11 im Längsschnitt gemäß der Schnittlinie D-D in Figur 11. Unterhalb des Gewindestutzens 25 des Filtergehäuses 2 ist auf dem Außenumfang des zentralen Rohrstutzens 4 der Stützkörper 37 des Filtereinsatzes 3 axial verschieblich angeordnet. Das nach oben weisende Stirnende des Stützkörpers 37 und die nach unten weisende Stirnseite des Gewindestutzens 25 bilden zusammen die zuvor beschriebene Losdrehsicherung 47.

Das nach unten weisende Stirnende des Stützkörpers 37 bildet hier wieder die Federstütze 53, welche das von dem Ventilkörper 51 abgewandte Ende der Feder 52 abstützt. Die einstückig an den zentralen Rohrstutzen 4 angeformten Nasen des Anschlags 43 sorgen einerseits für die gewünschte Verdrehsicherung des Stützkörpers 37 relativ zum Rohrstutzen 4 und bilden andererseits den Anschlag für die Feder 52, wenn sich im Filter 1 kein Filtereinsatz 3 befindet.

Hinsichtlich der weiteren Teile in Figur 12 und deren Funktion wird auf die vorhergehende Beschreibung verwiesen.

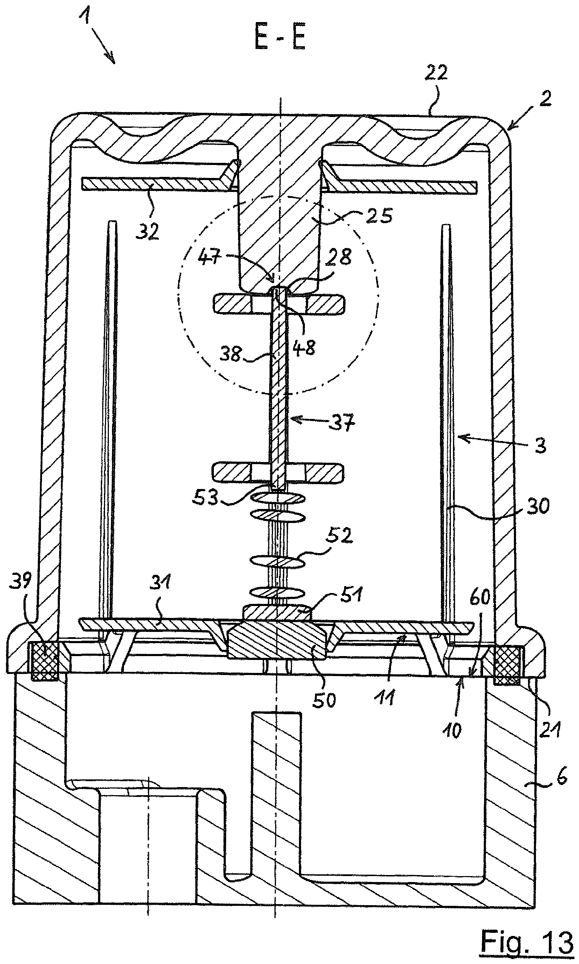

Die Figur 13 zeigt den Filter 1 aus den Figuren 9 bis 12 im Längsschnitt gemäß der Schnittlinie E-E in Figur 12, wobei hier insbesondere die Losdrehsicherung 47 veranschaulicht wird. Im oberen Bereich des Filtergehäuses 2 ist der Gewindestutzen 25 in seinem Randbereich geschnitten. In der Stirnfläche des Gewindestutzens 25 ist hier eine der Eintiefungen 28 erkennbar. In die Eintiefung 28 greift einer der Nocken 48 ein, der auf der oberen Stirnseite des Stützkörpers 37, hier in Fortsetzung einer von dessen axialen Streben 38, angeformt ist.

Hinsichtlich der weiteren Einzelheiten in Figur 13 wird wieder auf die vorhergehende Beschreibung verwiesen.

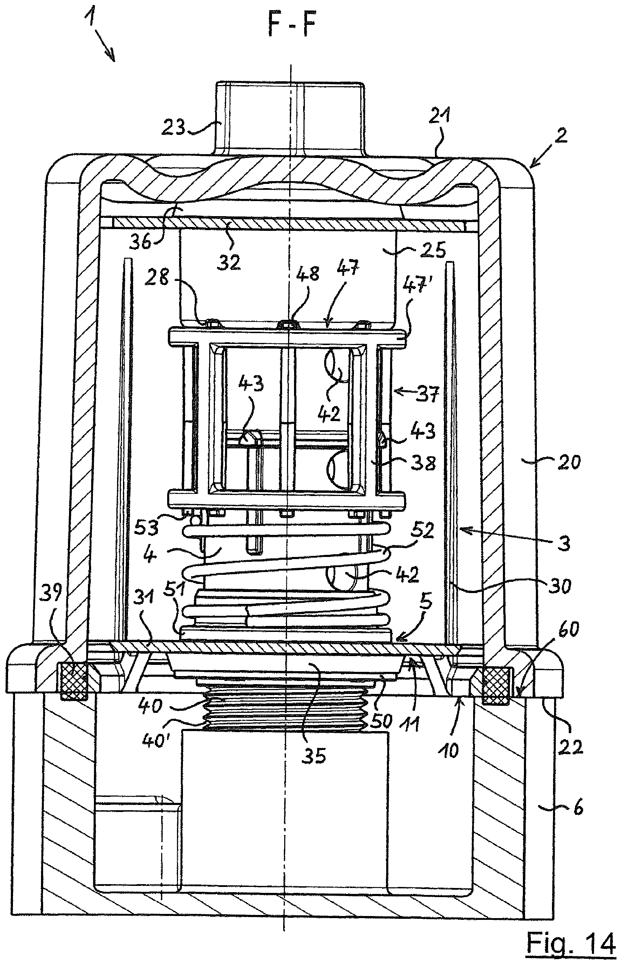

Die Figur 14 zeigt den Filter 1 aus den Figuren 9 bis 13 nochmals im Längsschnitt, nun gemäß der Schnittlinie F-F in Figur 12. In diesem Schnitt sind der zentrale Rohrstutzen 4, der Stützkörper 37, der Ventilsitz 50, der Ventilkörper 51 und die Feder 52 in Seitenansicht sichtbar. Die Feder 52 beaufschlagt mit ihrem unteren Ende den Ventilkörper 51 mit einer in Schließrichtung des Filterumgehungsventils 5, das heißt mit einer in Richtung zum Ventilsitz 50, wirkenden Kraft.

Mit ihrem oberen Ende beaufschlagt dieselbe Feder 52 den Stützkörper 37 mit einer nach oben in Richtung zum Gewindestutzen 25 wirkenden Kraft. Das obere Ende des Stützkörpers 37 ist als Losdrehsicherungsring 47' der Losdrehsicherung 47 ausgebildet. Über die Oberseite des Losdrehsicherungsrings 47' ragen die Nocken 48 vor, welche hier wieder in Eingriff mit den stirnseitigen Eintiefungen 28 des Gewindestutzens 25 stehen und so zusammen die Losdrehsicherung 47 bilden.

Hinsichtlich der weiteren Teile in Figur 14 wird auf die vorhergehende Beschreibung verwiesen.

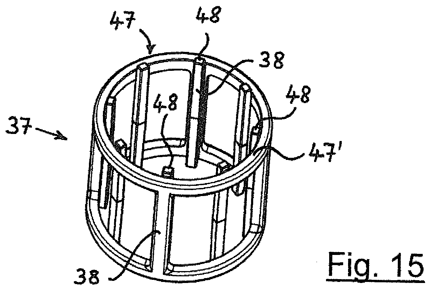

Die Figur 15 zeigt den Stützkörper 37 als Teil des Filters 1 nach Figur 9 bis 14 als Einzelteil in Ansicht schräg von oben. Insbesondere wird hier deutlich, dass der Stützkörper 37 die Form eines hohlzylindrischen, ringförmigen Gitters hat, welches eine Anzahl von axialen Streben 38 sowie oben unten jeweils eine ringförmige Strebe aufweist. Die obere ringförmige Strebe bildet dabei den Losdrehsicherungsring 47' mit den Nocken 48 der Losdrehsicherung 47. Der Stützkörper 37 ist bevorzugt ein Spritzgussteil aus Kunststoff.

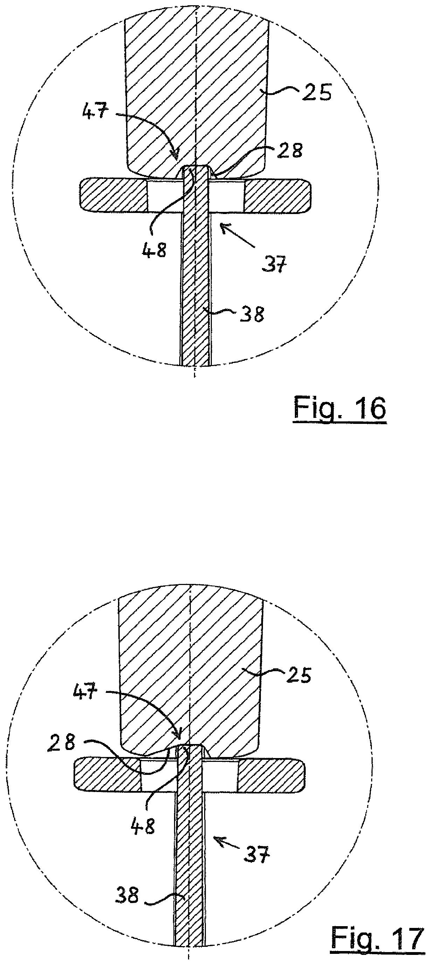

Die Figur 16 zeigt ein vergrößertes Detail aus Figur 13 mit der Losdrehsicherung 47 in einer ersten Ausführung. Oben in Figur 16 ist ein Randbereich des Gewindestutzens 25 mit einer der Eintiefungen 28 in seiner Stirnfläche sichtbar. Darunter ist ein Teil des Stützkörpers 37 des Filtereinsatzes 3 mit einer seiner axialen Streben 38 und einem der Nocken 48 erkennbar. Die Eintiefung 28 und der Nocken 48 stehen hier in Eingriff miteinander, um auf diese Weise die Losdrehsicherung 47 zu bilden. Wie schon weiter oben beschrieben, wird der in Axialrichtung bewegliche Stützkörper 37 des Filtereinsatzes 3 durch die hier nicht sichtbare Feder 52 mit einer in Richtung zum Gewindestutzen 25 weisenden Kraft beaufschlagt. Wie die Figur 16 veranschaulicht, besitzt die Eintiefung 28 hier in beiden Drehrichtungen, das heißt in Figur 16 nach links und nach rechts, symmetrische Schrägen mit jeweils gleicher Steigung beziehungsweise gleichem Gefälle.

Die Figur 17 zeigt das Detail aus Figur 13 mit der Losdrehsicherung 47 in einer zweiten Ausführung, für die charakteristisch ist, dass die Eintiefung 28 in der Stirnfläche des Gewindestutzens 25 in Drehrichtung, das heißt in Figur 17 nach links und rechts, zwei unterschiedliche Steigungen beziehungsweise Gefälle aufweist, also unsymmetrisch ist. Nach rechts hin ist in Figur 17 die Steigung der Eintiefung 28 stärker als nach links hin. Hierdurch werden unterschiedliche Drehwiderstände je nach Drehrichtung des Filtergehäuses 2 relativ zum Stützkörper 37 des Filtereinsatzes 3 bewirkt, zweckmäßig derart, dass in Festdrehrichtung ein geringerer Widerstand und in Losdrehrichtung ein größerer Widerstand der Losdrehsicherung 47 erzeugt wird.

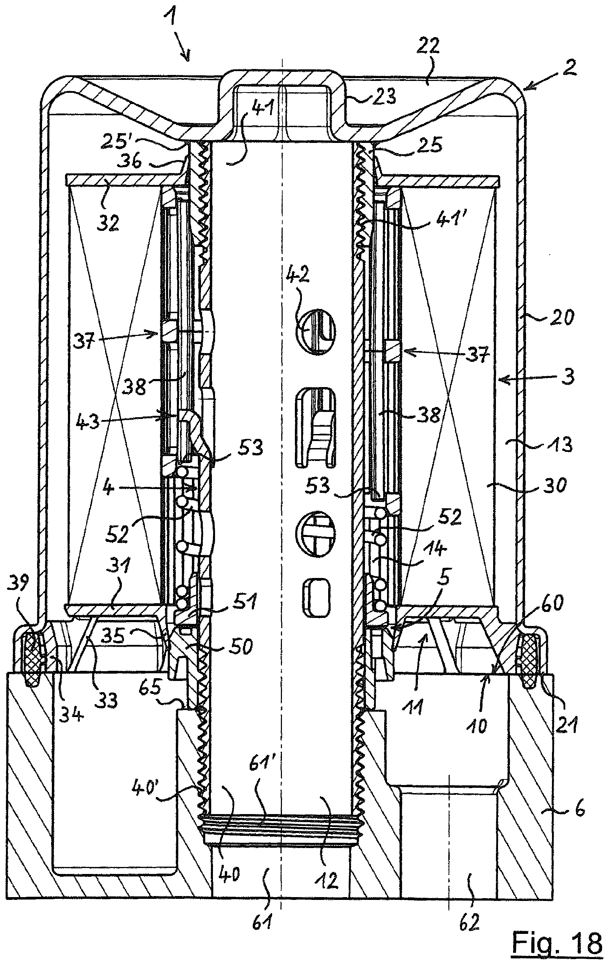

Figur 18 der Zeichnung zeigt den Filter 1 im Einbauzustand mit geschlossenem Filterumgehungsventil 5, im Längsschnitt, wobei in der linken und rechten Hälfte der Figur 18 zwei unterschiedlichen Ausführungen eines zu dem Filter 1 nach Figur 18 passenden Filtereinsatzes 3 dargestellt sind. Der Stützkörper 37 des Filtereinsatzes 3 ist hier in beiden Ausführungen als separates Einzelteil am Innenumfang des Filterstoffkörpers 30 angeordnet und stützt sich mit seinem oberen Ende gegen die Unterseite der oberen Stirnscheibe 32 ab. Das untere Ende des Stützkörpers 37 bildet, wie weiter oben schon beschrieben, die Federstütze 53 für die Feder 52 des Filterumgehungsventils 5.

Die beiden Filtereinsätze 3 in Figur 18 unterscheiden sich durch die Lage der jeweils daran ausgebildeten Federstütze 53; die Feder 52 ist in beiden Hälften der Figur 18 die gleiche. Bei dem Filtereinsatz 3, der in der linken Hälfte der Figur 18 dargestellt ist, liegt die Federstütze 53 in einem größeren axialen Abstand zum Ventilkörper 51, während bei dem in der rechten Hälfte der Figur 18 dargestellten Filtereinsatz 3 dessen Federstütze 53 in einem geringeren Abstand zum Ventilkörper 51 angeordnet ist. Der Filtereinsatz 3 in der linken Hälfte der Figur 18 erzeugt somit also eine geringere Vorspannung der Feder 52 als der Filtereinsatz 3 in der rechten Hälfte der Figur 18. Dadurch werden auch entsprechend unterschiedliche Öffnungsdrücke des Filterumgehungsventils 5 eingestellt. Damit ist es also vorteilhaft möglich, allein durch Änderung der Lage der Federstütze 53 innerhalb des auswechselbaren Filtereinsatzes 3 den Öffnungsdruck des Filterumgehungsventils 5 auf einen gewünschten Wert festzulegen beziehungsweise bei Bedarf auch einfach zu ändern, ohne dass irgendwelche anderen Teile des Filters 1 verändert werden müssen.

Hinsichtlich der weiteren Teile in Figur 18 und deren Funktion wird auf die vorhergehende Beschreibung, insbesondere der Figuren 5 und 6, verwiesen.

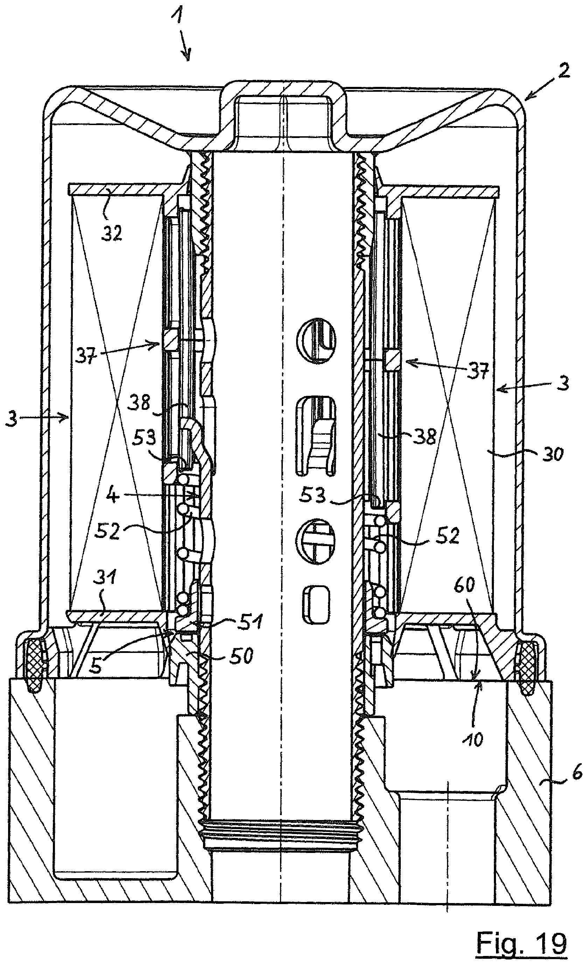

Figur 19 zeigt den Filter 1 mit dem damit zusammenwirkenden, auswechselbaren Filtereinsatz 3 in einer gegenüber der Figur 18 geänderten Ausführung, wieder im Einbauzustand mit geschlossenem Filterumgehungsventil 5 und mit einem in der linken und rechten Hälfte der Figur 19 in zwei unterschiedlichen Ausführungen dargestellten zweiten Filtereinsatz 3, im Längsschnitt.

Im Unterschied zur Figur 18 ist bei dem Beispiel nach Figur 19 der Stützkörper 37 des Filtereinsatzes 3 einstückig mit der oberen Stirnscheibe 32 ausgeführt, so dass hier die obere Stirnscheibe 32 zusammen mit dem damit einstückigen Stützkörper 37 zur Einstellung der Vorspannung der Feder 52 genutzt wird. Die unterschiedliche Vorspannung der Feder 52 erfolgt auch hier durch unterschiedliche axiale Positionen der Federstütze 53 am Filtereinsatz 3, wie ein Vergleich der linken und rechten Hälfte der Figur 19 zeigt. Auch hier kann also durch Auswahl eines Filtereinsatzes 3 aus Filtereinsätzen 3 mit unterschiedlicher axialer Lage der Federstütze 53 der Öffnungsdruck des Filterumgehungsventils 5 festgelegt und bei Bedarf durch einfachen Austausch des Filtereinsatzes 3 gegen einen Filtereinsatz 3 mit anderer axialer Lage der Federstütze 53 auf einen anderen Wert eingestellt werden, ohne dass am übrigen Filter 1 Änderungen vorgenommen werden müssen.

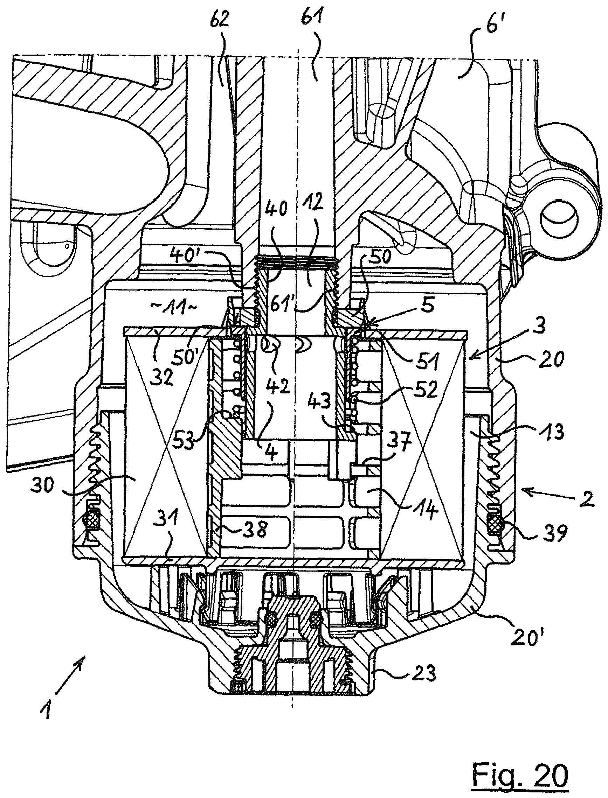

Bei den zuvor beschriebenen Ausführungsbeispielen ist der Filter 1 ein Anschraubwechselfilter mit auswechselbarem Filtereinsatz 3, der anstelle einer nur insgesamt austauschbaren Anschraubwechselfilterpatrone an dem Anschlussflansch 60 der zugehörigen Vorrichtung 6, wie Brennkraftmaschine, anbringbar ist. Die Figur 20 zeigt im Unterschied dazu einen Filter 1 in einem abgewinkelten Längsschnitt, der einen eigenen Sockel 6' aufweist, mit dem er mit einer zugehörigen Vorrichtung 6, wie Brennkraftmaschine, oder mit einem einen Teil der Vorrichtung bildenden Funktionsmodul verbindbar ist. Außerdem handelt es sich bei dem Filter 1 nach Figur 20 um einen sogenannten hängenden Filter 1, bei dem ein einen lösbaren Teil des Filtergehäuses 2 bildender Schraubdeckel 20' nach unten hin abschraubbar und demontierbar ist. Dementsprechend wird hier der Filtereinsatz 3 auch von unten her eingebaut und nach unten hin entnommen.

Der nicht lösbare Teil des Filtergehäuses 2 ist hier mit dem Sockel 6' einstückig ausgeführt und beispielsweise ein Druckgussteil aus Leichtmetall, wie Aluminium. Der Schraubdeckel 20' kann ebenfalls ein Druckgussteil aus Leichtmetall oder alternativ auch ein Spritzgussteil aus Kunststoff sein. Mittels eines Dichtrings 39 ist der Schraubdeckel 20' in seinem eingeschraubten Zustand gegen das übrige Filtergehäuse 2 flüssigkeitsdicht abgedichtet. An seiner hier nach unten weisenden Außenseite besitzt der Schraubdeckel 20' einen Werkzeugansatz 23, beispielsweise einen Sechskant. Innerhalb des Werkzeugansatzes 23 ist hier ein übliches und an sich bekanntes Schraubventil als Entleerungsventil angeordnet, um vor einem Öffnen des Filtergehäuses 2 das Innere des Filters 1 sauber von Flüssigkeit entleeren zu können.

Im Inneren des Filtergehäuses 2 ist auch hier der Filtereinsatz 3 angeordnet, der aus einem hohlzylindrischen Filterstoffkörper 30 besteht, welcher an seinen beiden Stirnseiten von Stirnscheiben 31 und 32 dicht eingefasst ist. Im Inneren des Filterstoffkörpers 30 ist auch hier ein gitterförmiger, in seiner Grundform hohlzylindrischer Stützkörper 37 angeordnet. Wie an sich bekannt, ist hier der Filtereinsatz 3 mittels an seiner unteren Stirnscheibe 31 angeordneter Rastarme mit dem Schraubdeckel 20' lösbar verrastet.

Weiterhin ist im Inneren des Filtergehäuses 2 ein zentraler Rohrstutzen 4 angeordnet, der in seinem oberen Endbereich 40 außen ein Schraubgewinde 40' aufweist, mit dem er in ein Gegengewinde 61' im Sockel 6' eingeschraubt ist. Mit seiner in Figur 20 oberen, eine zentrale Durchbrechung aufweisenden Stirnscheibe 32 ist der Filtereinsatz 3 von unten her auf den zentralen Rohrstutzen 4 aufgesteckt.

Auf dem Außenumfang des Rohrstutzens 4 ist in Höhe der oberen Stirnscheibe 32 ein Filterumgehungsventil 5 angeordnet. Hierzu ist unmittelbar oberhalb der oberen Stirnscheibe 32 ein ringförmiger Ventilsitz 50 in Axialrichtung unverschieblich auf dem Außenumfang des Rohrstutzens 4 angebracht, hier angeschraubt. Durch den Ventilsitz 50 verlaufen Durchlassöffnungen 50' in dessen Axialrichtung.

Unmittelbar unterhalb des Ventilsitzes 50 ist auf dem Außenumfang des Rohrstutzens 4 ein Ventilkörper 51 in Axialrichtung verschieblich geführt. Im Längsschnitt gesehen hat der Ventilkörper 51 die Form eines auf dem Kopf stehenden L, wobei ein längerer L-Schenkel die Führung auf dem Rohrstutzen 4 bildet und ein kürzerer L-Schenkel radial nach außen vorsteht. Eine obere Stirnseite des kürzeren L-Schenkels wirkt mit einer unteren Stirnseite des Ventilsitzes 50 zusammen; eine untere Stirnseite des kürzeren L-Schenkels bildet eine Anlagefläche für eine Feder 52, die den Ventilkörper 51 in Schließrichtung mit einer Vorbelastungskraft beaufschlagt. Das von dem Ventilkörper 51 abgewandte, untere Ende der Feder 52 ist hier an einer links in Figur 20 sichtbaren, geschnittenen Federstütze 53 abgestützt, die ein integraler und einstückiger Teil des Stützkörpers 37 innerhalb des Filtereinsatzes 3 ist.

Es ist ersichtlich, dass auch bei dieser Ausführung des Filters 1 die Vorspannung der Feder 52 und damit der Öffnungsdruck des Filterumgehungsventils 5 durch die axiale Lage der Federstütze 53 am Filtereinsatz 3 bestimmt und festgelegt beziehungsweise bei Bedarf geändert werden kann.

Im Betrieb des Filters 1 gemäß Figur 20 strömt eine zu reinigende Flüssigkeit, wie Schmieröl einer Brennkraftmaschine, durch einen Rohflüssigkeitskanal 62 im Sockel 6'zum Einlass 11 des Filters 1 und auf dessen Rohseite 13. Mittels Durchströmung des Filterstoffkörpers 30 des Filtereinsatzes 3 gelangt die Flüssigkeit unter Zurücklassung von Schmutzpartikeln auf die Reinseite 14 des Filters 1 und durch den Stützkörper 37 hindurch in den zentralen Rohrstutzen 4 und durch diesen zum Auslass 12, der seinerseits in einen Reinflüssigkeitskanal 61 im Sockel 6' übergeht.

Solange eine Druckdifferenz zwischen Rohseite 13 und Reinseite 14 unterhalb eines vorgebbaren Grenzwertes bleibt, bleibt das Filterumgehungsventil 5 geschlossen. Überschreitet die Druckdifferenz den vorgebbaren Grenzwert, öffnet die Kraft der durch die Durchlassöffnungen 50' auf den Ventilkörper 51 wirkenden Flüssigkeit das Filterumgehungsventil 5 und es wird ein Strömungsweg von der Rohseite 13 durch die Durchlassöffnungen 50' und die Durchbrechungen 42 im Rohrstutzen 4 unmittelbar zur Reinseite 14 unter Umgehung des Filterstoffkörpers 30 freigegeben.

Dabei wird der Ventilkörper 51 gegen die Kraft der Feder 52 auf dem Außenumfang des zentralen Rohrstutzens 4 in dessen Axialrichtung verschoben. Zwecks einer guten, verkantungsfreien Führung des Ventilkörpers 51 auf dem zentralen Rohrstutzen 4 sollte zweckmäßig die axiale Länge des Ventilkörpers 51 mindestens so groß wie dessen Innendurchmesser sein.

Zur Wartung des Filters 1 gemäß Figur 20 wird dieser zunächst durch Öffnen des Entleerungsventils von Flüssigkeit entleert. Anschließend wird der Schraubdeckel 20' abgeschraubt, womit gleichzeitig der damit verrastete Filtereinsatz 3 aus dem Filtergehäuse 2 heraus nach unten bewegt und vom zentralen Rohrstutzen 4 abgezogen wird. Dadurch wird auch die Federstütze 53 als Teil des Filtereinsatzes 3 von dem nach unten weisenden Ende der Feder 52 entfernt. Damit die Feder 52 nicht aus dem Filtergehäuse 2 herausfällt und verloren geht, sind an dem inneren, hier nach unten weisenden Ende des Rohrstutzens 4 über dessen Umfang verteilt mehrere radial nach außen vorstehende Nasen als Anschlag 43 angeformt, an die sich die Feder 52 anlegt, wenn der Filtereinsatz 3 ausgebaut wird. Somit sind die Feder 52 und der Ventilkörper 51 unverlierbar auf dem zentralen Rohrstutzen 4 gesichert.

Bei der Herstellung und Erstmontage des Filters 1 nach Figur 20 wird der zentrale Rohrstutzen 4 mit dem darauf angeordneten Ventilsitz 50 und Ventilkörper 51 sowie der Feder 52 in das Gewinde 61' des Reinflüssigkeitskanals 61 mittels des Gewindes 40' am oberen Endbereich 40 eingeschraubt und verbleibt dann dort. Bei der Filterwartung wird dann nur noch der Schraubdeckel 20' abgeschraubt und der Filtereinsatz 3 einschließlich der darin integriert ausgebildeten Federstütze 53 ausgetauscht.

Wie weiter oben schon erwähnt, ist der Filter 1 in jeder beliebigen räumlichen Lage betriebsfähig; so kann der Filter 1 statt als hängender Filter, wie in Figur 12, auch als liegender oder stehender Filter oder in einer beliebigen Zwischen- oder Schräglage eingesetzt werden. Dabei ist das Filterumgehungsventil 5 zweckmäßig in einer im Betrieb möglichst hoch liegenden Position angeordnet, um eine Verschmutzung von Ventilsitz 50 und Ventilkörper 51 durch sich absetzende Schmutzpartikel aus der Flüssigkeit möglichst gering zu halten.

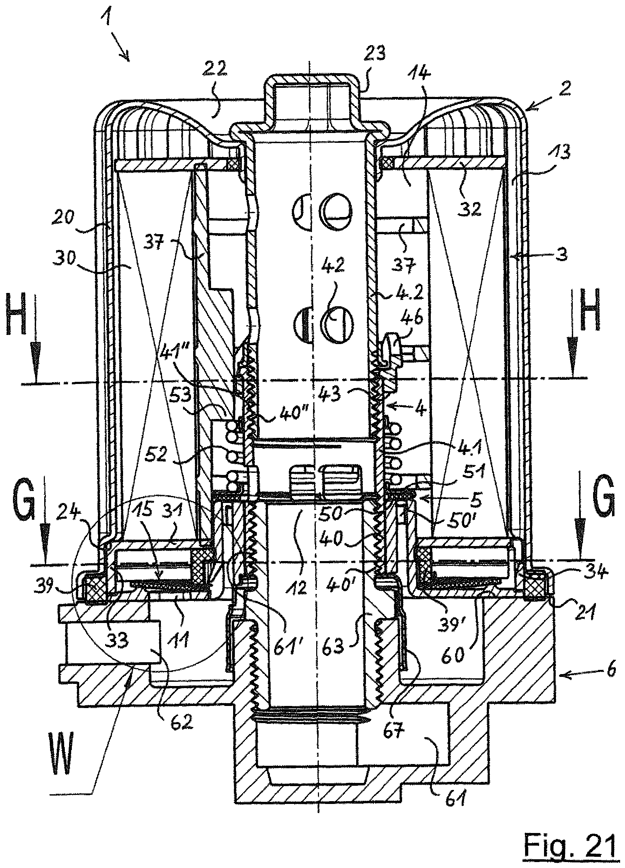

Figur 21 zeigt einen Filter 1 mit dem damit zusammenwirkenden, auswechselbaren Filtereinsatz 3 in einer weiteren Ausführung, im Längsschnitt, in einem an einen Anschlussflansch 60 einer Vorrichtung 6 angebauten Zustand. Der Filter 1 besitzt wieder ein becherförmiges Filtergehäuse 2, welches an seiner flanschseitigen Stirnseite 21 offen ist. In Inneren des Filtergehäuses 2 ist ein zentraler Rohrstutzen 4 angeordnet, der aus einem ersten, flanschseitigen Rohrstutzenabschnitt 4.1 und einem mit der flanschfernen Stirnseite 22 des Filtergehäuses 2 dicht verbundenen zweiten, flanschfernen Rohrstutzenabschnitt 4.2 besteht, wobei die beiden Rohrstutzenabschnitte 4.1 und 4.2 miteinander verschraubt sind.

Auf dem flanschseitigen Rohrstutzenabschnitt 4.1 sind die Teile des Filterumgehungsventils 5 angeordnet, nämlich unten zunächst der Ventilsitz 50, darüber der axial verschiebliche Ventilkörper 51 und darüber die Feder 52, die den Ventilkörper 51 in Schließrichtung des Filterumgehungsventils 5 vorbelastet. An ihrem vom Ventilkörper 51 abgewandten Ende wird die Feder 52 im in Figur 21 gezeigten betriebsbereiten Zustand von der Federstütze 53 abgestützt und vorgespannt. Die Federstütze 53 ist auch hier Teil des Filtereinsatzes 3, genauer von dessen zentralem Stützkörper 37.

Am oberen Ende des flanschseitigen Rohrstutzenabschnitts 4.1 ist ein Anschlag 43 angeordnet, an den sich das obere Ende der Feder 52 anlegt, wenn das Filtergehäuse 2 und mit diesem zusammen der Filtereinsatz 3 vom übrigen Filter 1 getrennt werden. Die Feder 52 und der Ventilkörper 51 sind somit gegen ein Verlieren gesichert. Oberseitig ist der Anschlag 43 mit dachförmig verlaufenden Einführschrägen 46 ausgeführt, über welche die Stützarme 53' beim Zusammenbauen des Filters 1 geführt werden.

Neben dem Filterumgehungsventil 5 besitzt der Filter 1 nach Figur 21 auch ein Rücklaufsperrventil 15, welches den Einlass 11 überdeckt und ein Leerlaufen des Filters 1 bei Stillstand des Flüssigkeitskreislaufs unterbindet.

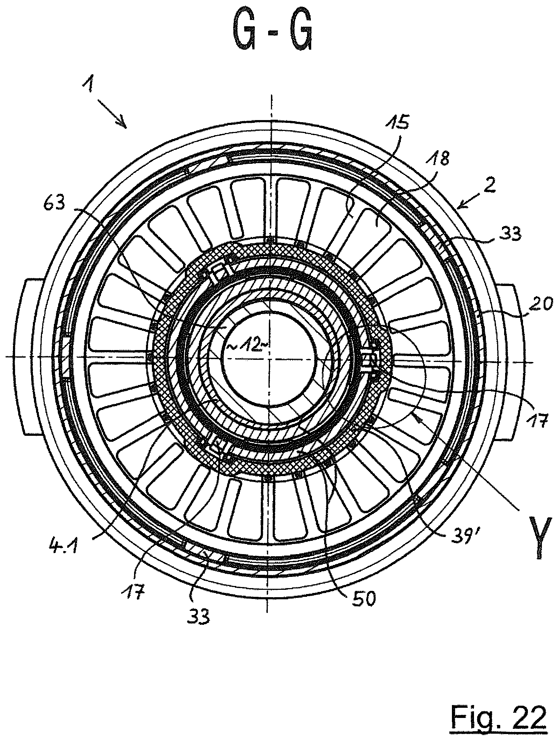

Figur 22 zeigt den Filter 1 aus Figur 21 im Querschnitt gemäß der Schnittlinie G - G in Figur 21. Radial außen verläuft die Umfangswand 20 des Filtergehäuses 2. Radial innen davon ist das Rücklaufsperrventil 15 mit der Federzungenscheibe 18 sichtbar. Als nächstes folgt weiter radial nach innen der Dichtring 39', auf welchen dann der Ventilsitz 50 folgt. Noch weiter radial innen ist der flanschseitige Rohrstutzenabschnitt 4.1 geschnitten, auf den noch weiter radial innen der Gewindenippel 63 des zugehörigen Anschlussflansches 60 folgt. Im Zentrum der Figur 22 liegt der Auslass 12 des Filters 1.

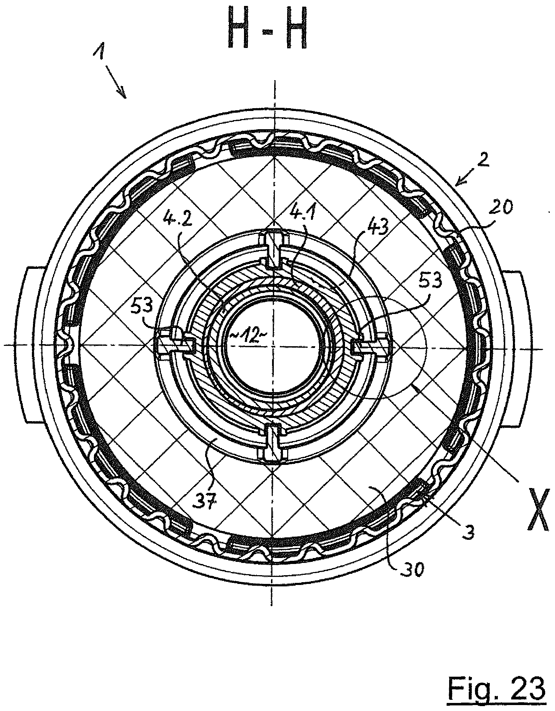

Figur 23 zeigt den Filter 1 aus Figur 21 im Querschnitt gemäß der Schnittlinie H - H in Figur 21. Auch hier ist radial außen zunächst die Umfangswand 20 des Filtergehäuses 2 geschnitten. Radial innen davon liegt der Filterstoffkörper 30 des Filtereinsatzes 3 mit dem zentralen Stützkörper 37. An vier in Umfangsrichtung gleichmäßig beabstandeten Stellen des Stützkörpers 37 sind die Federstützen 53 an den Stützkörper 37 angeformt und ragen radial nach innen vor. Radial innen vom Stützkörper 37 folgen dann der Anschlag 43 und die Rohrstutzenabschnitte 4.1 und 4.2.

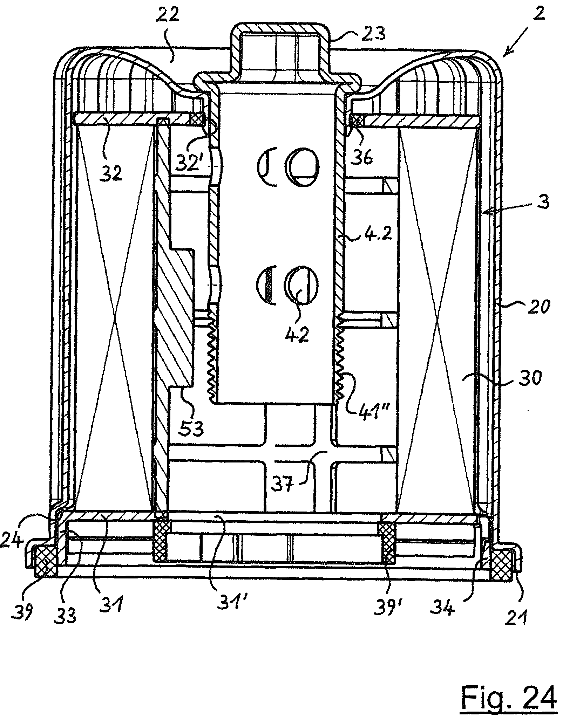

Figur 24 zeigt das Filtergehäuse 2 und den darin angeordneten Filtereinsatz 3 des Filters 1 aus Figur 21 im Längsschnitt, die zusammen die Baueinheit bilden, die bei einer Wartung des Filters 1 abgebaut wird. Hierzu ist durch Verdrehen des Filtergehäuses 2 der flanschferne Rohrstutzenabschnitt 4.2 mit seinem unteren Außengewinde 41" aus dem flanschseitigen Rohrstutzenabschnitt 4.1 herausgeschraubt, wobei der Filtereinsatz 3 aufgrund seiner Reibung zum Filtergehäuse 2 mitgenommen wird. Wenn das Filtergehäuse 2 vollständig abgeschraubt ist, kann der Filtereinsatz 3 durch die offene Unterseite des Filtergehäuses 2 aus diesem herausgezogen und durch einen frischen Filtereinsatz 3 einschließlich des Stützkörpers 37 mit der Federstütze 53 ersetzt werden.

Die Dichtung 39 ist hier ebenfalls Teil des Filtereinsatzes 3 und wird von einem Dichtringträger 34 getragen, der über Verbindungsstege 33 mit der unteren, flanschseitigen Stirnscheibe 31 des Filtereinsatzes 3 verbunden oder einstückig ausgeführt ist.

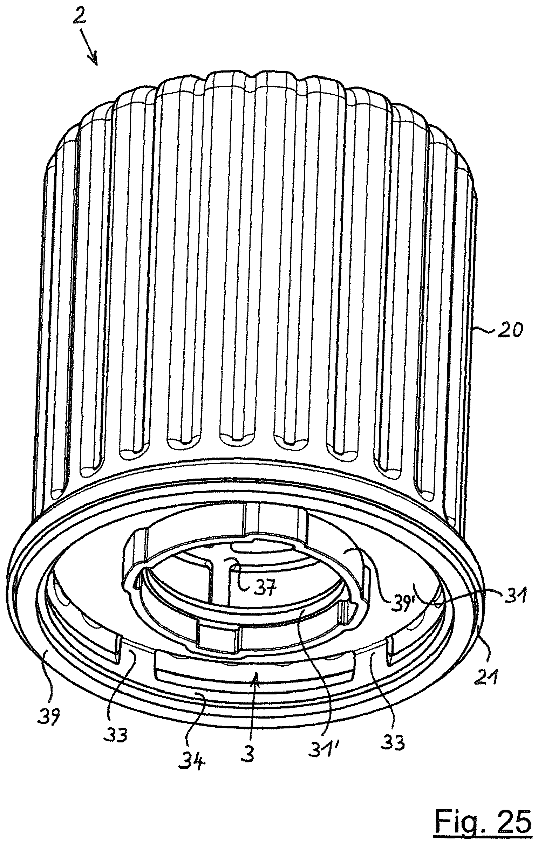

Figur 25 zeigt das Filtergehäuse 2 mit dem Filtereinsatz 3 aus Figur 24 in Ansicht schräg von unten. Von dem Filtereinsatz 3 sind hier dessen untere, flanschseitige Stirnscheibe 31, die Verbindungsstege 33, der Dichtringträger 34 und der radial äußere Dichtring 39 sichtbar. Um die zentrale Durchbrechung 31' der Stirnscheibe 31 herum verläuft der radial innere Dichtring 39'. Durch die Durchbrechung 31' hindurch ist ein Teil des inneren Stützkörpers 37 des Filtereinsatzes 3 sichtbar.

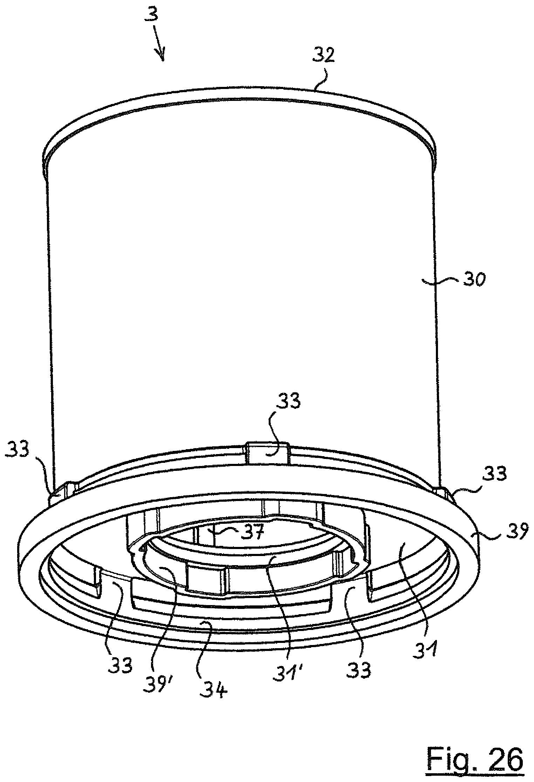

Figur 26 zeigt den Filtereinsatz 3 des Filters 1 aus Figur 21 in Ansicht schräg von unten. Den wesentlichen Teil des Filtereinsatzes 3 bildet dessen hohlzylindrischer Filterstoffkörper 30, der unterseitig von der Stirnscheibe 31 und oberseitig von der Stirnscheibe 32 abgedeckt ist. Vom radial äußeren Rand der unteren Stirnscheibe 31 gehen mehrere, hier fünf, gleichmäßig über den Umfang verteilte Verbindungsstege 33 in Axialrichtung nach unten hin aus, die den Dichtringträger 34 tragen, auf dem außen der äußere Dichtring 39 angeordnet ist. Um die zentrale Durchbrechung 31' der unteren Stirnscheibe 31 herum ist wieder die radial innere Dichtung 39' sichtbar. Durch die Durchbrechung 31' hindurch ist ein kleiner Teil des gitterförmigen inneren Stützkörpers 37 sichtbar. Hier wird besonders deutlich, dass beide Dichtringe 39 und 39' Teile des Filtereinsatzes 3 sind, die bei jeder Filterwartung ohne besondere Maßnahmen jeweils mit dem Filtereinsatz 3 erneuert werden.

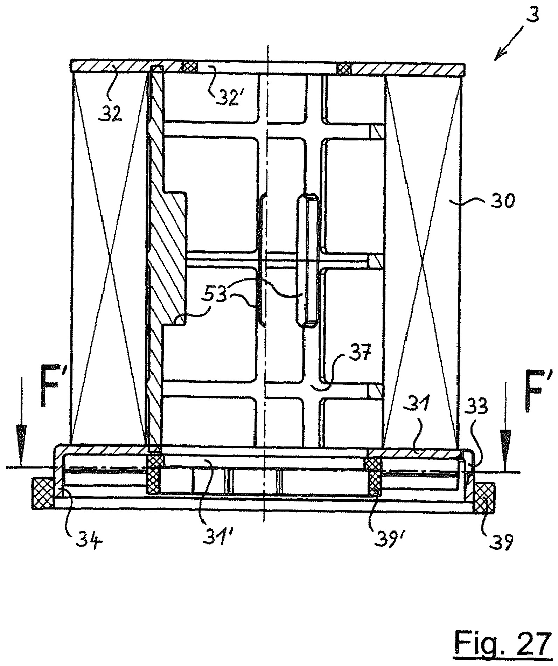

Figur 27 zeigt den Filtereinsatz 3 aus Figur 26 in einem abgewinkelten Längsschnitt. Im Inneren des Filterstoffkörpers 30 liegt der Stützkörper 37 mit den Federstützen 53, die über den Innenumfang des Stützkörpers 37 verteilt angeordnet sind. Um die Durchbrechung 31' der unteren Stirnscheibe 31 herum verläuft an der Unterseite des Filtereinsatzes 3 der radial innere Dichtring 39'. Auf dem Außenumfang des Dichtringträgers 34 ist der radial äußere Dichtring 39 angeordnet.

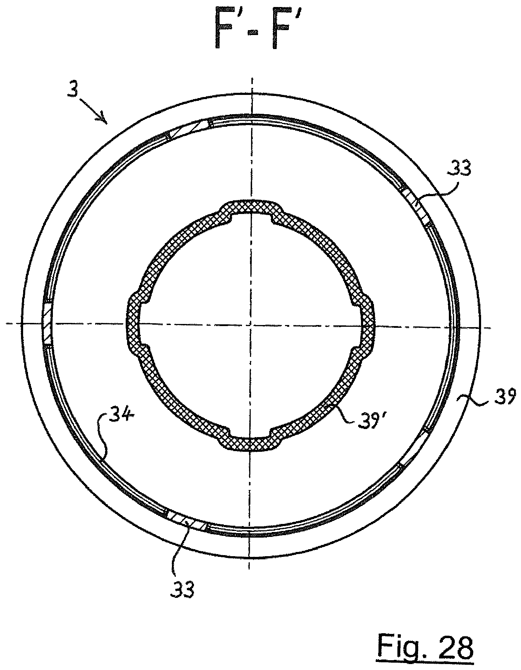

Figur 28 zeigt den Filtereinsatz 3 aus Figur 27 im Querschnitt nach der Schnittlinie F' - F' in Figur 27. Radial außen ist der Dichtring 39 sichtbar, der von dem radial innen davon verlaufenden Dichtringträger 34 getragen wird. Von dem Dichtringträger 34 gehen die Verbindungsstege 33 nach oben hin ab. Weiter radial innen ist der zweite Dichtring 39' geschnitten.

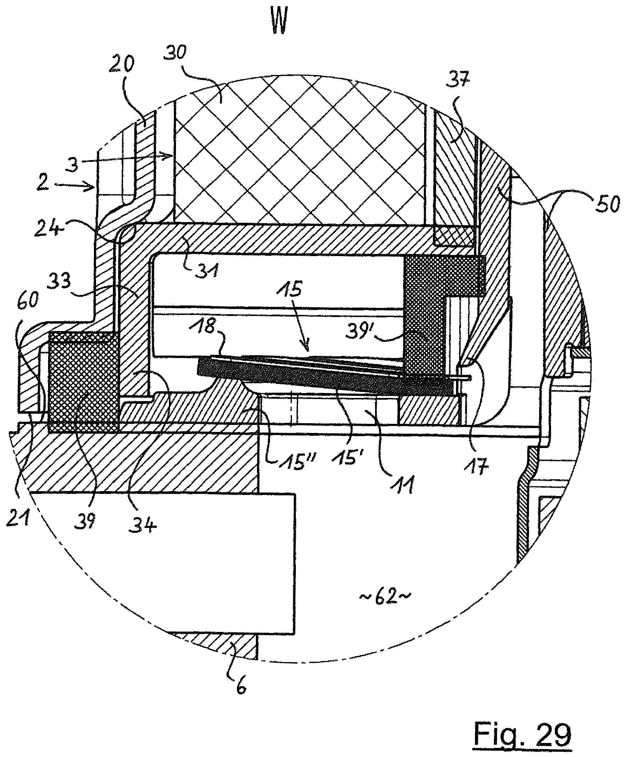

Figur 29 zeigt das Detail W aus Figur 21 in vergrößerter Darstellung, in einem Zustand mit eingebautem Filtereinsatz 3 und angebautem Filtergehäuse 2. Wie diese Figur 29 veranschaulicht, drückt in diesem zusammengebautem Zustand der radial innere Dichtring 39' die Ventilmembran 15' und die zugehörige Federzungenscheibe 18 gegen den Membranträger 15" und sorgt so für einen sicheren Zusammenhalt und flüssigkeitsdichten Abschluss in diesem Bereich. Nach außen hin wird das Filtergehäuse 2 durch den radial äußeren Dichtring 39 flüssigkeitsdicht abgedichtet, der zwischen dem Filtergehäuse 2 und dem Anschlussflansch 60 liegt.

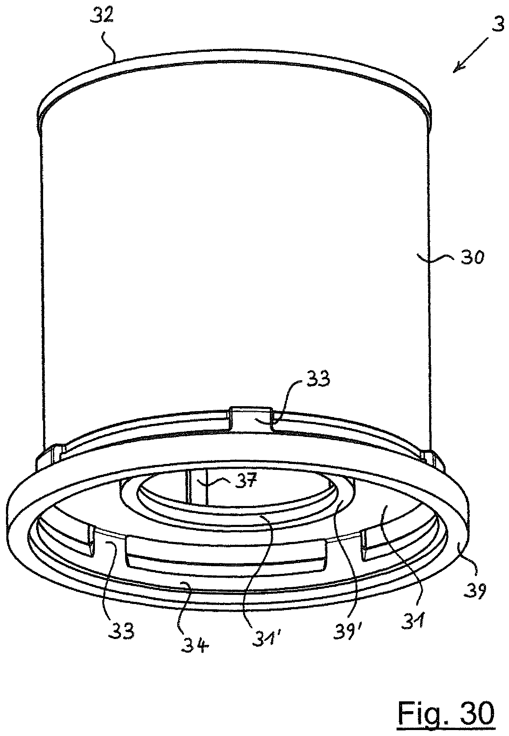

Figur 30 zeigt den Filtereinsatz 3 des Filters 1 in einer geänderten Ausführung für einen Filter 1 ohne Rücklaufsperrventil 15, in Ansicht schräg von unten. Im Unterschied zu dem Filtereinsatz 3 für einen Filter 1 mit Rücklaufsperrventil 15 ist bei dem Filtereinsatz 3 gemäß Figur 30 der radial innere Dichtring 39' kreisrund ausgeführt, da er hier nicht die besondere Formgebung zur Berücksichtigung der Lage der Rastverbindungen 17 benötigt. In seinen übrigen Teilen entspricht der Filtereinsatz 3 gemäß Figur 30 dem zuvor erläuterten Ausführungsbeispiel.

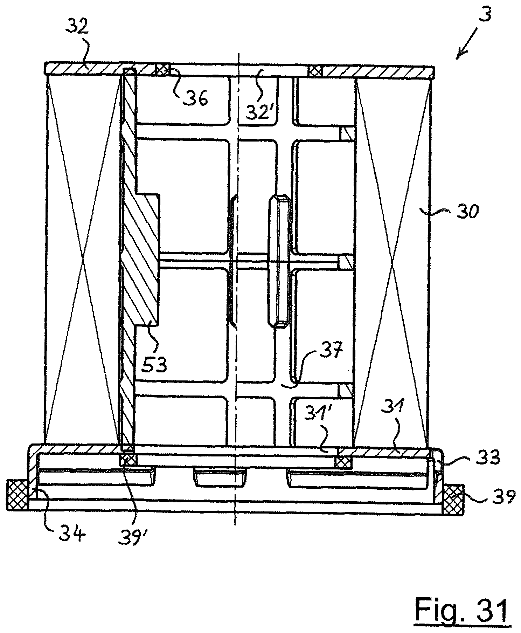

Figur 31 zeigt den Filtereinsatz 3 aus Figur 30 im Längsschnitt, wobei auch hier der durchgehend kreisrunde Verlauf des radial inneren Dichtrings 39' sichtbar ist. Hinsichtlich der weiteren Elemente des Filtereinsatzes 3 gemäß Figur 31 wird auf die vorhergehende Beschreibung verwiesen.

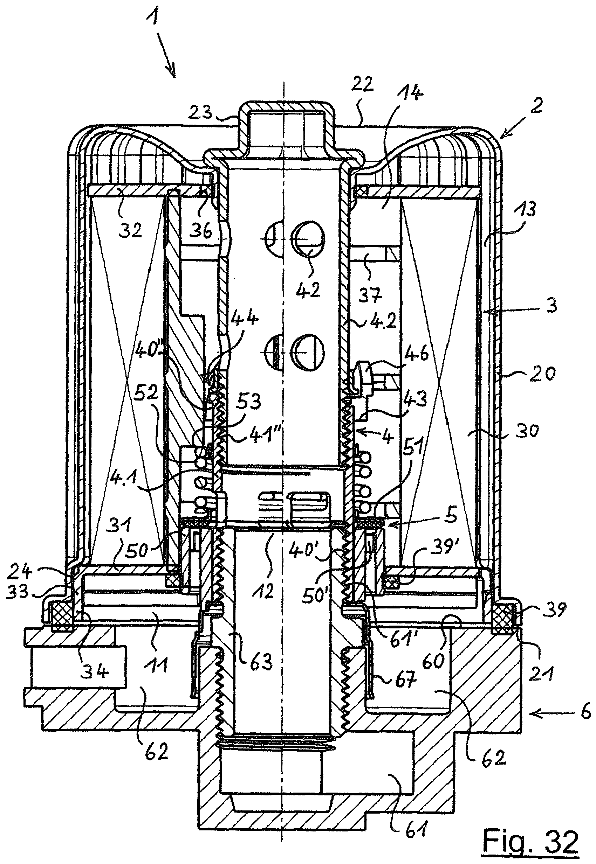

Figur 32 zeigt einen Filter 1 mit dem damit zusammenwirkenden, auswechselbaren Filtereinsatz 3 in einer weiteren Ausführung im Längsschnitt, wobei für diese Ausführung im Unterschied zu dem Beispiel nach Figur 21 charakteristisch ist, dass kein Rücklaufsperrventil 15 vorhanden ist. Der die zu filternde Flüssigkeit aus dem Rohflüssigkeitskanal 62 auf die Rohseite 13 des Filters 1 führende Einlass 11 ist hier ständig offen. Im Übrigen entspricht der Filter 1 dem anhand von Figur 21 beschriebenen Ausführungsbeispiel. Der Filter 1 mit dem Filtereinsatz 3 nach Figur 32 ist insbesondere für Anwendungen geeignet, bei denen es nicht störend ist, wenn bei Stillstand des Flüssigkeitskreislaufs die Flüssigkeit aus dem Filter 1 abfließt.

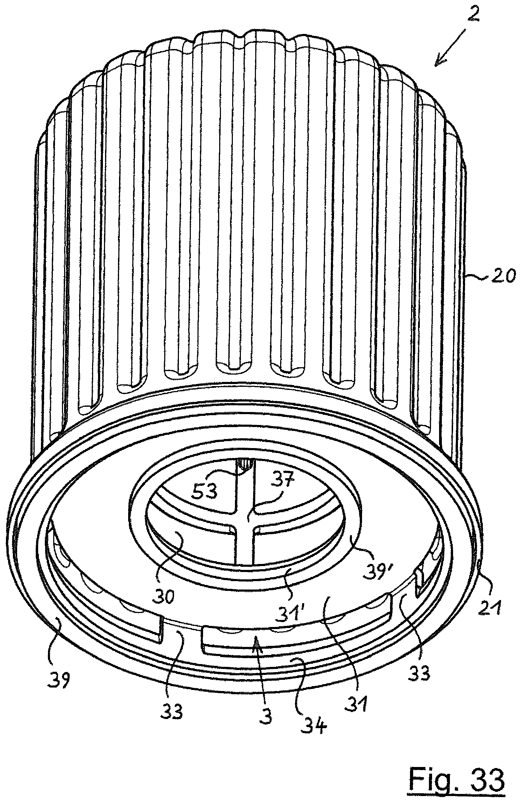

Figur 33 zeigt das Filtergehäuse 2 mit darin angeordnetem Filtereinsatz 3 des Filters 1 aus Figur 32, in Ansicht schräg von unten. Radial innen von der nach unten weisenden offenen Stirnseite 21 der Umfangswand 20 des Filtergehäuses 2 verläuft der Dichtring 39, der von dem Dichtringträger 34 getragen wird. Der Dichtringträger 34 ist mittels der Verbindungsstege 33 mit der unteren Stirnscheibe 31 des Filtereinsatzes 3 verbunden. Um die zentrale Durchbrechung 31' in der unteren Stirnscheibe 31 herum ist der kreisringförmige verlaufende innere Dichtring 39' angeordnet. Durch die Durchbrechung 31' hindurch ist ein Teil des inneren Stützkörpers 37 mit einem kurzen Abschnitt einer der Federstützen 53 sichtbar. Radial außen von dem Stützkörper 37 liegt der Filterstoffkörper 30.

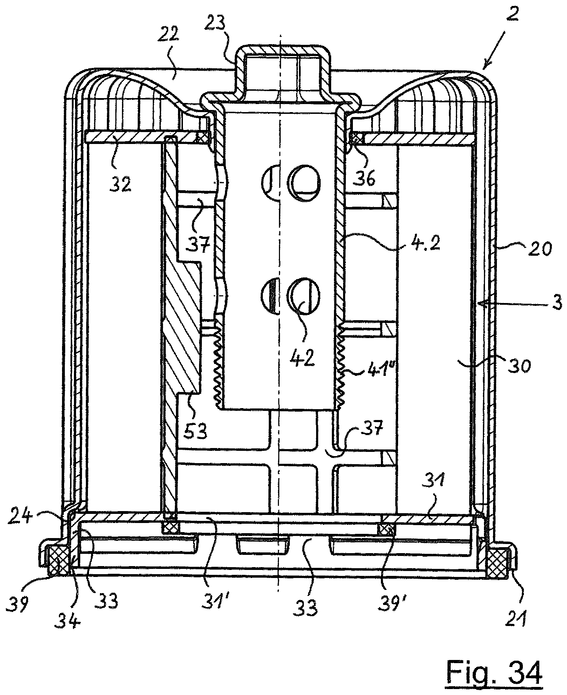

Figur 34 zeigt das Filtergehäuse 2 mit Filtereinsatz 3 aus Figur 33 im Längsschnitt. In die obere Stirnseite 22 ist der flanschferne Rohrstutzenabschnitt 4.2 dichtend eingesetzt, wobei hier sowohl das Filtergehäuse 2 als auch der Rohrstutzenabschnitt 4.2 Teile aus Metall, wie Stahlblech, sind. Zur gegenseitigen Fixierung und Abdichtung sind zweckmäßig das Filtergehäuse 2 und der Rohrstutzenabschnitt 4.2 in dem Bereich, in dem sie aneinander anliegen, miteinander verschweißt. Am unteren Endbereich des Rohrstutzenabschnitts 4.2 ist das Gewinde 41" sichtbar, dass zum Verschrauben mit dem flanschseitigen Rohrstutzenabschnitt 4.1 dient.

In Höhe der unteren Stirnscheibe 31 des Filtereinsatzes 3 besitzt die Umfangswand 20 eine Innendurchmesserstufe 24, an welcher die untere Stirnscheibe 31 mit ihrer Oberseite anliegt, wodurch der Filtereinsatz 3 relativ zum Filtergehäuse 2 in Axialrichtung eine definierte Lage erhält. Außerdem wird der Filtereinsatz 3 durch die an der unteren Stirnscheibe 31 vorhandenen Verbindungsstege einerseits und durch die Dichtung 36 am Innenumfang der oberen Stirnscheibe 32 andererseits in Radialrichtung relativ zum Filtergehäuse 2 zentriert. Der radial außen angeordnete Dichtring 39 stützt sich an einer axial nach unten weisenden umlaufenden Fläche der Umfangswand 20 ab. Um die zentrale Durchbrechung 31' in der unteren Stirnscheibe 31 herum verläuft der radial innere Dichtring 39'.

In Inneren des Filterstoffkörpers 30 ist der gitterförmige Stützkörper 37 angeordnet, mit dem hier die Federstützen 53 als radial nach innen vorragende Rippen einstückig ausgeführt sind. Aufgrund eines abgewinkelten Verlaufs des Schnitts ist nur eine der Federstützen 53 in der linken Hälfte der Figur 34 sichtbar. Der Stützkörper 37 ist hier sowohl mit der unteren Stirnscheibe 31 als auch mit der oberen Stirnscheibe 32 verbunden, beispielsweise verklebt oder verschweißt.

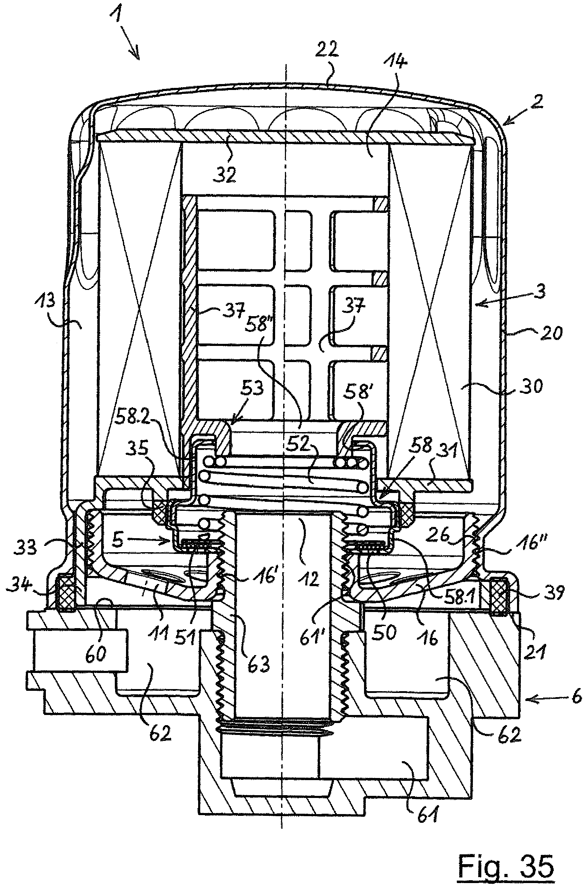

Figur 35 zeigt einen Filter 1 mit dem damit zusammenwirkenden, auswechselbaren Filtereinsatz 3 in einer weiteren Ausführung im Längsschnitt. Auch bei diesem Filter 1 handelt es sich wieder um einen Anschraubfilter, der an einen Anschlussflansch 60 einer Vorrichtung 6 mit Flüssigkeitskreislauf angeschraubt ist. Der Anschlussflansch 60 weist hier einen zentralen Gewindenippel 63 mit einem aus der Ebene des Anschlussflansches 60 vorragenden Gewinde 61' auf. Neben seinem Filtergehäuse 2 und Filtereinsatz 3 besitzt der Filter 1 eine Grundplatte 16, die radial innen ein Innengewinde 16' und radial außen ein Außengewinde 16" aufweist und die in ihrem zwischen den beiden genannten Gewinden 16', 16" liegenden Bereich mehrere in Umfangsrichtung verteilte Durchbrechungen als Einlass 11 für zu filternde Flüssigkeit aufweist. Mittels des Gewindes 16' ist die Grundplatte 16 mit dem Gewindenippel 63 verschraubt. Mit dem Außengewinde 16" ist das Filtergehäuse 2 verschraubt, welches dazu im unteren Endbereich seiner Umfangswand 20 innen das Schraubgewinde 26 aufweist.

Weiterhin ist auf dem Gewindenippel 63 über der Grundplatte 16 ein Ventilhalter 58 angebracht, an beziehungsweise in welchem die Teile des Filterumgehungsventils 5 angeordnet sind. Der Ventilhalter 58 ist hier zweiteilig mit einem unteren Halterteil 58.1 und einem damit fest verbundenen oberen Halterteil 58.2 ausgeführt. Der Ventilsitz 50 ist hier in einem Boden des unteren Halterteils 58.1 ausgebildet. Der Ventilkörper 51 ist als flache kreisringförmige Scheibe ausgeführt und liegt in seiner in Figur 35 gezeigten Schließstellung dichtend auf dem Ventilsitz 50. Mittels der im Ventilhalter 58 angeordneten Schraubendruckfeder 52 wird der Ventilkörper 51 mit einer in Schließrichtung wirkenden Kraft vorbelastet. Die Feder 52 wird auch hier wieder von dem Filtereinsatz 3 vorgespannt, indem eine mit dem zentralen Stützkörper 37 im Filterstoffkörper 30 einstückige Federstütze 53 mit einem radial nach innen und dann axial nach unten weisenden, ringförmigen Stützkragen von oben her auf die Feder 52 drückt. Der Stützkörper 37 ist hier nur mit der unteren Stirnscheibe 31 verbunden. Das obere Ende des Stützkörpers 37 liegt in einem Abstand von der Unterseite der oberen Stirnscheibe 32.

Der Filtereinsatz 3 hat hier eine untere Stirnscheibe 31, die unterseitig eine umlaufende Dichtung 35 trägt, mit welcher die untere Stirnscheibe 31 dichtend auf den Außenumfang des Ventilhalters 58 aufgesetzt ist. Vom radial äußeren Rand der unteren Stirnscheibe 31 gehen wieder Verbindungsstege 33 in Axialrichtung nach unten hin aus, die einen umlaufenden Dichtringträger 34 tragen, auf dessen Außenumfang ein radial äußerer Dichtring 39 angeordnet ist, welcher das Filtergehäuse 2 gegen den Anschlussflansch 60 abdichtet. Oberseitig besitzt der Filtereinsatz 3 eine geschlossene Stirnscheibe 32.

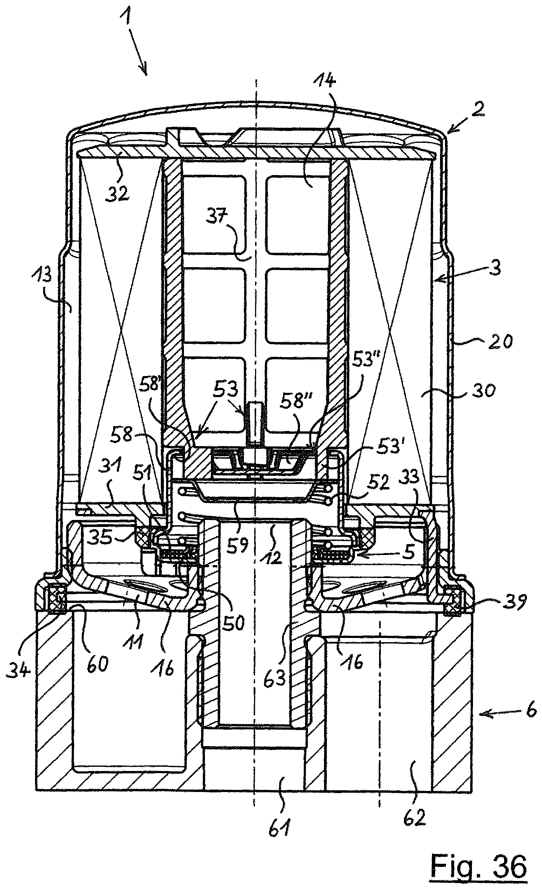

Figur 36 zeigt einen Filter 1 mit dem damit zusammenwirkenden, auswechselbaren Filtereinsatz 3 in einer weiteren Ausführung im Längsschnitt. In vielen Teilen entspricht der Filter 1 dem Beispiel nach Figur 35. Unterschiedlich ist, dass dem Filterumgehungsventil 5 bei dem Beispiel nach Figur 36 ein Abdeckkörper 59 zugeordnet ist, welcher dafür sorgt, dass bei einer Filterwartung mit Entfernen des Filtergehäuses 2 und des Filtereinsatzes 3 der Auslass 12 für gefilterte Flüssigkeit verschlossen wird, um zu verhindern, dass aus dem Filtereinsatz 3 oder dem Filtergehäuse 2 Schmutzpartikel in den Auslass 12 und von diesem in den Reinflüssigkeitskanal 61 der Vorrichtung 6 gelangen. Der Abdeckkörper 59 ist dazu an der Oberseite der Feder 52 angeordnet und wird von der Feder 52 mit einer nach oben hin, das heißt vom Ventilkörper 51 weg weisenden Kraft vorbelastet. In dem in Figur 36 gezeigten zusammengebautem Zustand des Filters 1 drücken die Stützarme 53' der Federstütze 53 durch in der Oberseite des Ventilhalters 58 vorgesehene Einführöffnungen 53" hindurch auf die Oberseite des Abdeckkörpers 59, welcher wiederum mit seiner Unterseite auf das obere Ende der Feder 52 drückt und so die Feder 52 vorgespannt.

Wenn das Filtergehäuse 2 zusammen mit dem Filtereinsatz 3 von dem Anschlussflansch 60 entfernt wird, bleiben die Grundplatte 16 und der Ventilhalter 58 mit dem Filterumgehungsventil 5 am Anschlussflansch 60 zurück. Die Stützarme 53' werden dabei nach oben hin von dem Abdeckkörper 59 entfernt, wodurch sich dieser unter der Wirkung der Kraft der Feder 52 an die Unterseite der oberen Stirnwand des Ventilhalters 58 mit den dort vorgesehenen Durchlässen 58" für gefilterte Flüssigkeit anliegt. Auf diese Weise werden die Durchlässe 58" verschlossen und es können keine Schmutzpartikel in den Auslass 12 für gefilterte Flüssigkeit gelangen.

Damit die Stützarme 53' der am Stützkörper 37 angeordneten Federstütze 53 auf den Abdeckkörper 59 und über diesen auf die Feder 52 des Filterumgehungsventils 5 die nötige Kraft ausüben können, ist der Stützkörper 37 hier mit seinem flanschfernen, oberen Stirnende an der Innenseite der flanschfernen, oberen Stirnscheibe 32 des Filtereinsatzes 3 abgestützt. Der Filtereinsatz 3 wiederum stützt sich mit seiner flanschfernen, oberen Stirnscheibe 32 innen am Filtergehäuse 2 ab.

Weiterhin ist bei diesem Filtereinsatz 3 der Stützkörper 37 im Inneren des Filterstoffkörpers 30 relativ zum übrigen Filtereinsatz 3 drehbar angeordnet. Zu diesem Zweck liegt der Stützkörper 37 mit seinem oberen Ende zwar an der Unterseite der oberen Stirnscheibe 32 des Filtereinsatzes 3 an, ist aber mit dieser Stirnscheibe 32 nicht verbunden. Mit der flanschseitigen, unteren Stirnscheibe 31 des Filtereinsatzes 3 hat der Stützkörper 37 hier keinen unmittelbaren Kontakt. Diese Drehbarkeit des Stützkörpers 37 ist hier erforderlich, weil die Stützarme 53' der Federstütze 53 den Stützkörper 37 an einer Drehung hindern, sobald die Stützarme 53' in die zugehörigen Einführöffnungen 53" des Ventilhalters 58 eingetaucht sind, da der Ventilhalter 58 drehfest auf dem Gewindenippel 63 sitzt. Für das weitere Anschrauben des Filtergehäuses 2 an die Grundplatte 16 muss aber das Filtergehäuse 2 zusammen mit dem darin angeordneten Filtereinsatz 3 weiter gedreht werden, was durch die relativ zum übrigen Filtereinsatz 3 verdrehbare Anordnung des Stützkörpers 37 im Filtereinsatz 3 ermöglicht wird.

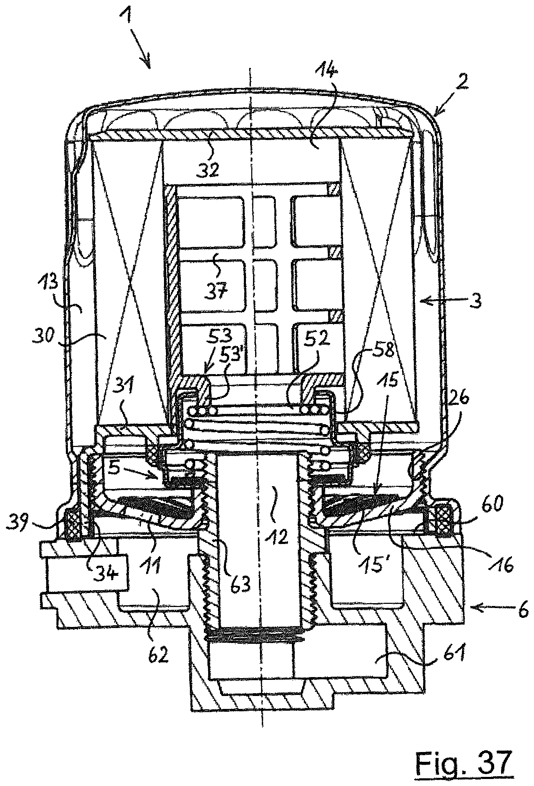

Figur 37 zeigt den Filter 1 in einer weiteren Ausführung im Längsschnitt. Der Filter 1 gemäß Figur 37 entspricht in seinen meisten Teilen dem Beispiel nach Figur 35. Unterschiedlich ist, dass bei dem Beispiel nach Figur 37 dem Einlass 11 ein Rücklaufsperrventil 15 zugeordnet ist. Das Rücklaufsperrventil 15 liegt in Form einer flexiblen Ventilmembran 15' auf der Oberseite der Grundplatte 16 und überdeckt so die den Einlass 11 bildenden Öffnungen in der Grundplatte 16. Durch vom Rohflüssigkeitskanal 62 kommende, zu filternde Flüssigkeit wird das Rücklaufsperrventil 15 selbsttätig geöffnet. Bei Stillstand des Flüssigkeitskreislaufs sorgt das Rücklaufsperrventil 15 dafür, dass der Filter 1 nicht leer läuft.

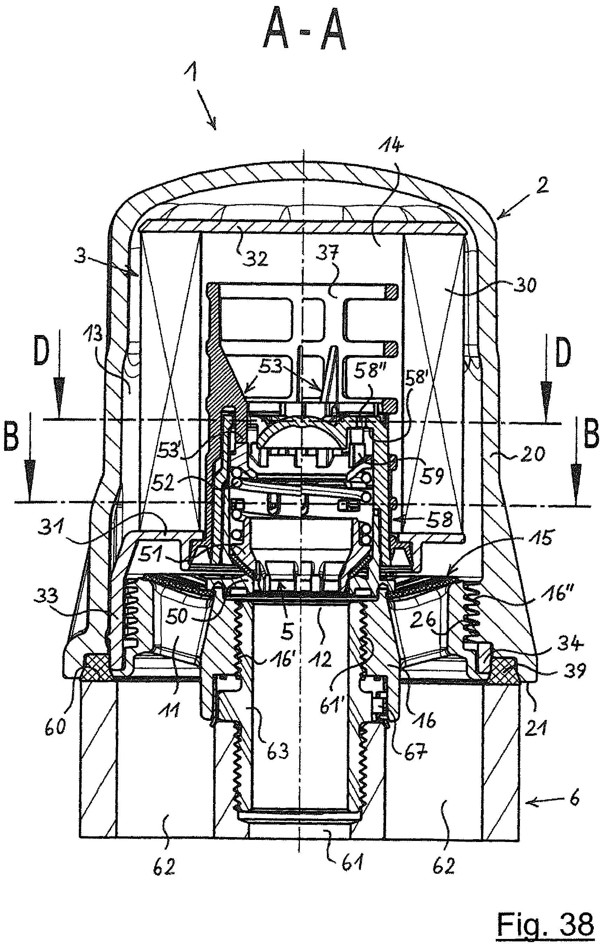

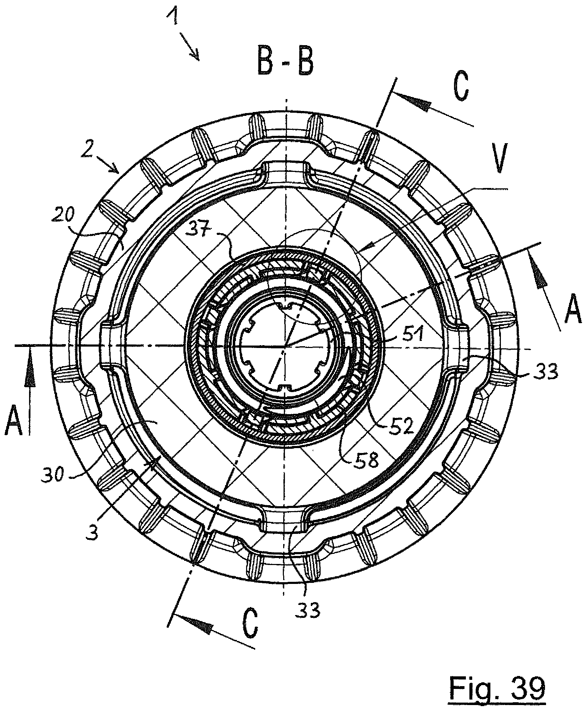

Figur 38 zeigt einen Filter 1 mit dem damit zusammenwirkenden, auswechselbaren Filtereinsatz 3 in einer weiteren Ausführung in einem ersten, abgewinkelten Längsschnitt gemäß der Schnittlinie A - A in Figur 39, wobei der Filter 1 hier in einem an einen Anschlussflansch 60 einer Vorrichtung 6, wie Brennkraftmaschine, angebauten Zustand gezeigt ist. Ein Gewindenippel 63 mit einem oberhalb der Flanschebene liegenden Außengewinde 61' ist Teil des Anschlussflansches 60, wobei hier der Gewindenippel 63 als Doppelnippel ausgeführt ist und seinerseits mit einem unteren Außengewinde in die Vorrichtung 6 dauerhaft eingeschraubt ist.

Mit dem oben liegenden Außengewinde 61' des Gewindenippels 63 ist mittels eines Innengewindes 16' eine Grundplatte 16 des Filters 1 verschraubt, wobei diese Verschraubung bei einer Erstmontage des Filters 1 am Anschlussflansch 60 erfolgt. Durch eine Losdrehsicherung 67 ist ein späteres Lösen dieser Verschraubung unterbunden.

Weiterhin umfasst der Filter 1 ein Filtergehäuse 2, welches hier die Form eines nach unten hin offenen Bechers hat. Im unteren Randteil seiner Umfangswand 20 besitzt das Gehäuse 2 ein Innengewinde 26, welches hier in Schraubeingriff mit dem Außengewinde 16" der Grundplatte 16 steht. Sowohl die Grundplatte 16 als auch das Gehäuse 2 sind hier Teile aus Kunststoff. Die Kunststoffteile sind zweckmäßig als Spritzgussteile hergestellt, was eine formfallende Herstellung ohne nachträgliche spanende Bearbeitung erlaubt. Alternativ können die Grundplatte 16 und das Gehäuse 2 Teile aus Metall, insbesondere Druckgussteile aus Leichtmetall, wie Aluminium, sein.

Im Inneren des Gehäuses 2 ist ein Filtereinsatz 3 angeordnet, der aus einem hohlzylindrischen Filterstoffkörper 30 mit zwei diesen stirnseitig einfassenden Stirnscheiben 31 und 32 besteht. Im Filterstoffkörper 30 befindet sich ein diesen im Betrieb abstützender gitterförmiger Stützkörper 37. Mittels einer zentralen Öffnung in der unteren Stirnscheibe 32 ist der Filtereinsatz 3 unter Abdichtung durch einen Dichtkragen in den Filter 1 eingebaut.

Vom radial äußeren Rand der unteren Stirnscheibe 32 erstrecken sich mehrere über deren Umfang verteilt angeordnete Verbindungsstege 33 in Axialrichtung nach unten. Aufgrund des abgewinkelten Verlaufs der Schnittebene der Figur 38 ist hier nur einer der Verbindungsstege 33 in der linken Hälfte der Figur 38 sichtbar.

An ihrem unteren Ende gehen die Verbindungsstege 33 in einen umlaufenden, eine zylindrische Außenfläche aufweisenden Dichtringträger 34 über, auf welchem eine umlaufende Dichtung 39 in Form eines elastischen, in unbelastetem Zustand im Querschnitt etwa quadratischen Dichtrings angeordnet ist.

Der Filtereinsatz 4 ist mittels seiner Verbindungsstege 33 relativ zum Filtergehäuse 2 in einer definierten, gewünschten Position festgelegt.

In ihrem radial unteren äußeren Randbereich ragt die Grundplatte 2 mit einem äußeren Randvorsprung radial nach außen hin unter den Dichtringträger 34.

Im unteren Randteil des Filtergehäuses 2 ist eine in Axialrichtung nach unten weisende Stützfläche ausgebildet, an welcher die Dichtung 39 mit ihrer Oberseite anliegt. Im an den Anschlussflansch 60 angebauten Zustand des Filters 1, wie er in Figur 38 dargestellt ist, ist die Dichtung 39 in Axialrichtung soweit verpresst, dass sie sich radial nach außen und nach innen ausdehnt und sowohl axial als auch radial dichtet.

Durch den radial äußeren Teil der Grundplatte 16 zwischen deren Innengewinde 16' und deren Außengewinde 16" verlaufen mehrere in Umfangsrichtung der Grundplatte 16 verteilt angeordnete Öffnungen als Einlass 11 für zu filternde Flüssigkeit. Oberseitig ist der Einlass 11 mit einem Rücklaufsperrventil 15 abgedeckt. Zentral durch die Grundplatte 16 und den Gewindenippel 63 verläuft der Auslass 12 für gefilterte Flüssigkeit.

Auf der Grundplatte 16 ist oberseitig zentral ein Filterumgehungsventil 5 angeordnet, welches sich in den Stützkörper 37 hinein erstreckt. Ein einen Teil des Filterumgehungsventils 5 bildender, in seiner Grundform hohlzylindrischer Ventilhalter 58 ist an seinem unteren Ende mit der Grundplatte 16 fest verbunden, z. B. reibverschweißt. Der Ventilhalter 58 besteht hier aus zwei Teilen, nämlich einem ersten, unteren Halterteil 58.1, der fest mit der Grundplatte 16 verbunden ist, und einem zweiten, oberen Halterteil 58.2, der seinerseits mit dem ersten Halterteil 58.1 verbunden ist, hier durch eine Verrastung. Dabei bestehen hier die Halterteile 58.1 und 58.2 aus Kunststoff.

Im Ventilhalter 58 ist unten ein Ventilsitz 50 ausgebildet, der mit einem darüber im Ventilhalter 58 axial beweglich geführten Ventilkörper 51 zusammenwirkt. Über dem Ventilkörper 51 befindet sich im Ventilhalter 53 eine Feder 52, die auf den Ventilkörper 51 eine in dessen Schließrichtung wirkende Kraft ausübt, wenn der Filtereinsatz 3 in den Filter 1 eingebaut ist.

Oberhalb der Feder 52 ist hier im Ventilhalter 58 noch ein axial beweglicher Abdeckkörper 59 angeordnet, an dessen Unterseite das obere Ende der Feder 52 anliegt und an dessen Oberseite, solange der Filtereinsatz 3 in den Filter eingebaut ist, die Federstütze 53 mit ihren Stützarmen 53' anliegt, welche den Abdeckkörper 59 in einer von der Unterseite des oberen Ventilhalterendes beabstandeten Position halten. In dieser Stellung gibt der Abdeckkörper 59 einen Flüssigkeitsdurchlass 58" in einer oberen Stirnwand des Ventilhalters 58 für gefilterte Flüssigkeit in Richtung zum Auslass 12 frei. Bei dem gezeigten Beispiel ist der Flüssigkeitsdurchlass 58" durch mehrere in Umfangsrichtung verteilt angeordnete kleinere Öffnungen gebildet, die insgesamt den nötigen Strömungsquerschnitt zur Verfügung stellen.

Wenn der Filtereinsatz 3 aus dem Filter 1 entfernt ist, drückt die Feder 52 den Abdeckkörper 59 gegen die Stirnwand des Ventilhalters 58 und gegen den dortigen Flüssigkeitsdurchlass 58" und verschließt diesen. Hierdurch wird verhindert, dass Schmutzpartikel bei einer Filterwartung in den Auslass 12 für gefilterte Flüssigkeit fallen können.

Außerdem sorgt der Abdeckkörper 59 für eine günstige Verteilung der zwischen der Ventilfeder 52 und der Federstütze 53 wirkenden Kräfte.

Der Abdeckkörper 59 kann auch weggelassen werden, wenn bei der vorgesehenen Verwendung des Filters 1 die Schutzfunktion gegen Schmutzeinfall und die Funktion der Kräfteverteilung entbehrlich sind.

Am oberen Endbereich des Ventilhalters 58 ist schließlich noch ein radial nach innen weisender Anschlag 58' angeformt, der für eine Begrenzung der Bewegung des Abdeckkörpers 59 und des oberen Endes der Feder 52 nach oben hin, das heißt vom Ventilsitz 50 weg, sorgt.

Der Stützkörper 37 besitzt wieder die Federstütze 53, hier in Form mehrerer in Axialrichtung nach unten weisender Stützarme 53', die über den Innenumfang des Stützkörpers 37 verteilt sind. Aufgrund des abgewinkelten Verlaufs der Schnittebene ist in Figur 38 nur einer der Stützarme 53' in der linken Hälfte der Figur 38 sichtbar. Jeder Stützarm 53' taucht, geführt durch später noch beschriebene Positioniermittel, beim Zusammenbauen des Filters 1 von oben her durch eine passend positionierte und dimensionierte Einführöffnung 53" in der Oberseite des Ventilhalters 58 in diesen ein und gelangt so in Anlage an den Abdeckkörper 59 oder, wenn dieser nicht vorhanden ist, unmittelbar an das obere Ende der Feder 52. Dabei bilden die Stützarme 53' und die Einführöffnungen 53" eine Schlüssel-Schloss-Codierung, die nur das Einbauen eines passenden Filtereinsatzes 3 in den Filter 1 erlaubt.

Beim Anschrauben des Filtergehäuses 2, in welches zuvor der Filtereinsatz 3 eingesetzt wurde, an die Grundplatte 16 bewegt sich der Filtereinsatz 3 zusammen mit dem Gehäuse 2 in Richtung zur Grundplatte 16, wodurch die Stützarme 53' der Federstütze 53 die Feder 52 nach und nach stärker vorspannen, bis das Gehäuse 2 seine Endposition und damit die Feder 52 ihre End-Vorspannung erreicht hat. Die Feder 52 drückt nun den Ventilkörper 51 mit einer vorgebbaren Kraft in Schließrichtung gegen den Ventilsitz 50. Alle Teile des Filterumgehungsventils 5 sind dabei filterfest angeordnet, also nicht Teile des auswechselbaren Filtereinsatzes 3. Nur die Federstütze 53 ist Teil des auswechselbaren Filtereinsatzes 3.

Die Ventilmembran des Rücklaufsperrventils 15 ist an ihrem radial inneren Randbereich zwischen der Grundplatte 16 und dem unteren Halterteil 58.1 des Ventilhalters 58 eingeklemmt, was eigene Haltemittel für das Rücklaufsperrventil 15 entbehrlich macht.

Im Betrieb des Filters 1 strömt zu filternde Flüssigkeit durch einen Rohflüssigkeitskanal 62 im radial äußeren Teil des Anschlussflansches 60 und durch den Einlass 11 sowie durch das Rücklaufsperrventil 15 hindurch auf eine außen vom Filtereinsatz 3 liegende Rohseite 13 des Filters 1. Von dort strömt die Flüssigkeit unter Abscheidung von Feststoffpartikeln durch den Filterstoffkörper 30 des Filtereinsatzes 3 in Radialrichtung nach innen auf die Reinseite 14 des Filters 1. Von dort gelang die gefilterte Flüssigkeit durch das Innere des Stützkörpers 37, durch den Flüssigkeitsdurchlass 58" in den Ventilhalter 58, dann durch den zentralen Auslass 12 und durch das Innere des Gewindenippels 63 in einen Reinflüssigkeitskanal 61 im Anschlussflansch 60.

Falls die Druckdifferenz zwischen der Rohseite 13 und der Reinseite 14 des Filters 1 einen vorgebbaren Grenzwert überschreitet, wird der Ventilkörper 51 gegen die Kraft der Ventilfeder 52 von seinem Ventilsitz 50 abgehoben und es wird ein unmittelbarer Strömungsweg für die Flüssigkeit von der Rohseite 13 zur Reinseite 14 unter Umgehung des Filterstoffkörpers 30 des Filtereinsatzes 3 freigegeben.

Bei Stillstand des Flüssigkeitskreislaufs sorgt das Rücklaufsperrventil 15 dafür, dass keine Flüssigkeit aus dem Inneren des Filters 1 abfließt, so dass bei einem erneuten Start des Flüssigkeitskreislaufs eine unmittelbare Flüssigkeitsversorgung nachgeordneter Verbrauchsstellen mit gefilterter Flüssigkeit gewährleistet ist.

Figur 39 zeigt den Filter 1 aus Figur 38 im Querschnitt gemäß der Schnittlinie B - B in Figur 38. Außen ist in Figur 39 das Filtergehäuse 2 sichtbar, dessen Umfangswand 20 hier geschnitten ist. Radial innen davon liegt der Filtereinsatz 3, durch dessen Filterstoffkörper 30 der Schnitt verläuft. Über den Umfang des Filtereinsatzes 3 verteilt sind die vier Verbindungsstege 33 von oben sichtbar, die sich in Axialrichtung weiter nach unten hin erstrecken. Im Inneren des Filterstoffkörpers 30 liegt der diesen im Betrieb abstützende gitterförmige Stützkörper 37. Weiter radial innen davon ist der Ventilhalter 58 angeordnet, in welchem die Teile des Filterumgehungsventils 5 liegen, von denen hier nur ein Teil der Ventilfeder 52 sowie zentral ein Teil des Ventilkörpers 51 sichtbar sind. Mit der Schnittlinie A - A ist in Figur 39 veranschaulicht, wie der in Figur 38 gezeigte Längsschnitt durch den Filter 1 verläuft.

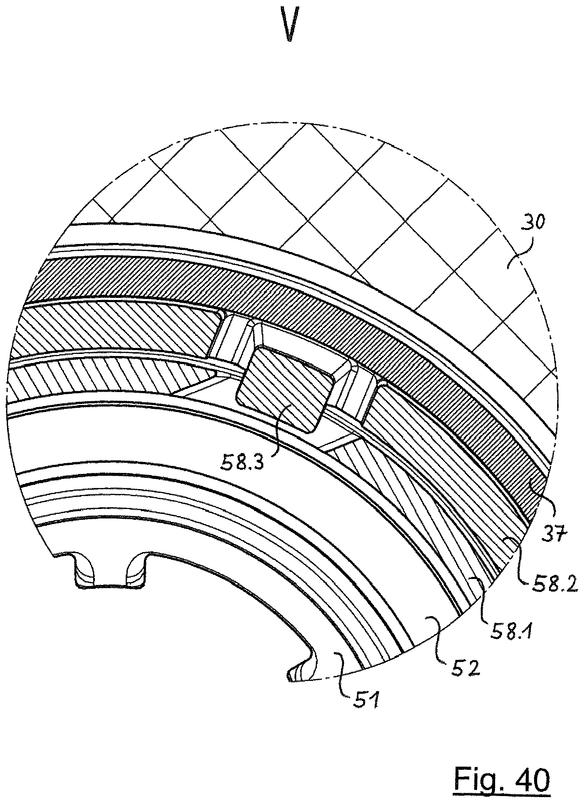

Figur 40 zeigt das Detail V des Filters 1 aus Figur 39 in vergrößerter Darstellung. Rechts oben in Figur 40 ist ein Teil des Filterstoffkörpers 30 des Filtereinsatzes 3 erkennbar. Darunter ist ein Abschnitt des Stützkörpers 37 sichtbar. Noch weiter nach unten ist dann ein Abschnitt des Ventilhalters 58 sichtbar, wobei hier erkennbar wird, dass der Ventilhalter 58 aus einem ersten Halterteil 58.1 und einen zweiten Halterteil 58.2 besteht, die über einen Teil ihrer Höhe ineinander gesteckt sind. Die beiden Halterteile 58.1 und 58.2 sind mittels Rastverbindungen 58.3 miteinander verbunden, von denen in Figur 40 eine im Schnitt sichtbar ist. Noch weiter unten ist schließlich ein Teil des Ventilkörpers 51 sichtbar.

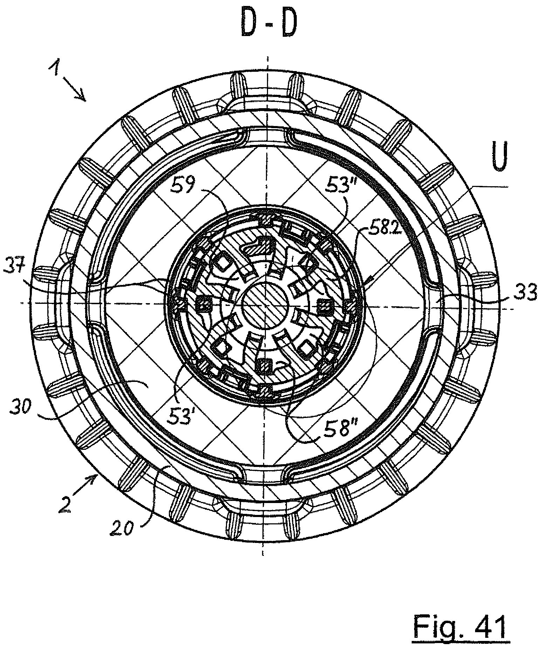

Figur 41 zeigt den Filter 1 aus Figur 38 im Querschnitt gemäß der Schnittlinie D - D in Figur 38. Auch hier ist radial außen wieder das Filtergehäuse 2 sichtbar, dessen Umfangswand 20 geschnitten ist. Radial innen davon liegt wieder der Filtereinsatz 3 mit dem Filterstoffkörper 30 und den sich axial nach unten hin erstreckenden Verbindungsstegen 33. Radial innen vom Filterstoffkörper 30 liegt der zugehörige Stützkörper 37. Wiederum radial innen davon ist der Ventilhalter 58 angeordnet. Wie die Figur 41 veranschaulicht, besitzt der Ventilhalter 58 an seiner hier sichtbaren Oberseite eine Anzahl von Einführöffnungen 53", durch welche die Stützarme 53' der Federstütze 53 des Filtereinsatzes 3 in das Innere des Ventilhalters 58 hineinragen. Außerdem ist neben den Einführöffnungen 53" in der Oberseite des Ventilhalters 58 ein Flüssigkeitsdurchlass 58" in Form mehrerer in Umfangsrichtung verteilt angeordneter Öffnungen vorhanden, durch welche im Betrieb des Filters 1 gefilterte Flüssigkeit strömt.

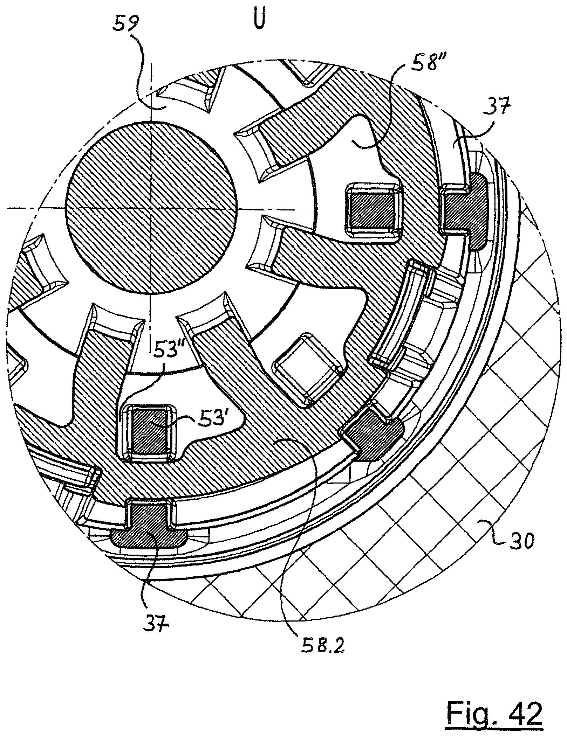

Figur 42 zeigt das Detail U des Filters 1 aus Figur 41 in vergrößerter Darstellung. Rechts unten ist ein Teil des Filterstoffkörpers 30 erkennbar. Radial innen, das heißt in Figur 42 links oben davon, ist ein Teil des Stützkörpers 37 sichtbar. Radial innen davon ist der obere Teil 58.2 des Ventilhalters 58 sichtbar, in dessen Oberseite die Einführöffnungen 53" für die Stützarme 53' und die den Flüssigkeitsdurchlass 58" bildenden Öffnungen erkennbar sind. Dabei bilden die Einführöffnungen 53" und die Stützarme 53' eine Schlüssel-Schloss-Codierung, welche nur das Einbauen eines bestimmten, die Stützarme 53' in einer passenden Anordnung, Anzahl und Formgebung aufweisenden Filtereinsatzes 3 in den Filter 1 gestattet.

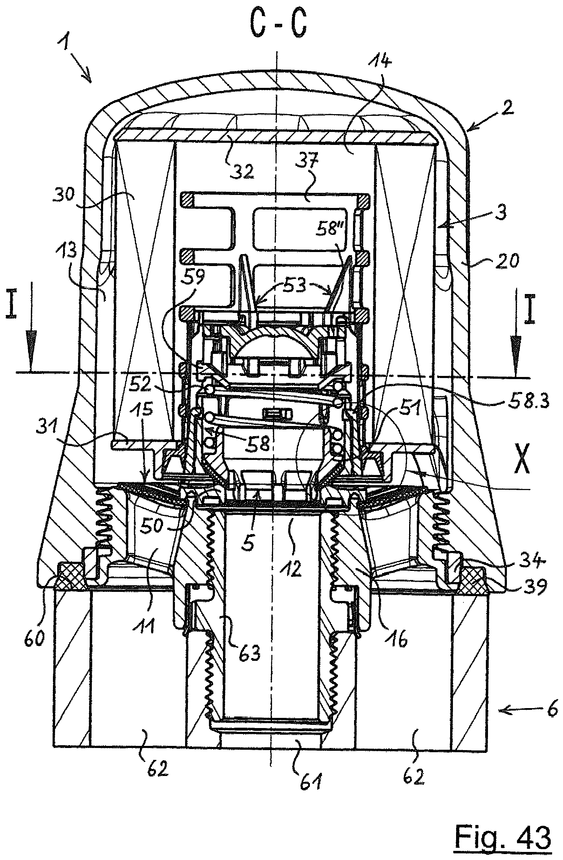

Figur 43 zeigt den Filter 1 aus Figur 38 in einem zweiten, gegenüber Figur 38 verdrehten Längsschnitt gemäß der Schnittlinie C - C in Figur 39. Im Inneren des Ventilhalters 58 sind hier der Ventilkörper 51, die Ventilfeder 52 und der Abdeckkörper 59 erkennbar. Die Stützarme 53' der Federstütze 53 des Filtereinsatzes 3 stehen in Anlage an der Oberseite des Abdeckkörpers 59 und drücken über diesen die Feder 52 zusammen. Hierdurch übt die Feder 52 eine in Schließrichtung wirkende vorgebbare Kraft auf den Ventilkörper 51 des Filterumgehungsventils 5 aus. Rechts oben am Ventilhalter 58 ist eine Öffnung des Flüssigkeitsdurchlasses 58" sichtbar, durch welche im Betrieb des Filters 1 gefilterte Flüssigkeit strömt.

Hinsichtlich der weiteren in Figur 43 erscheinenden Einzelteile und Bezugsziffern wird auf die vorhergehende Beschreibung verwiesen.

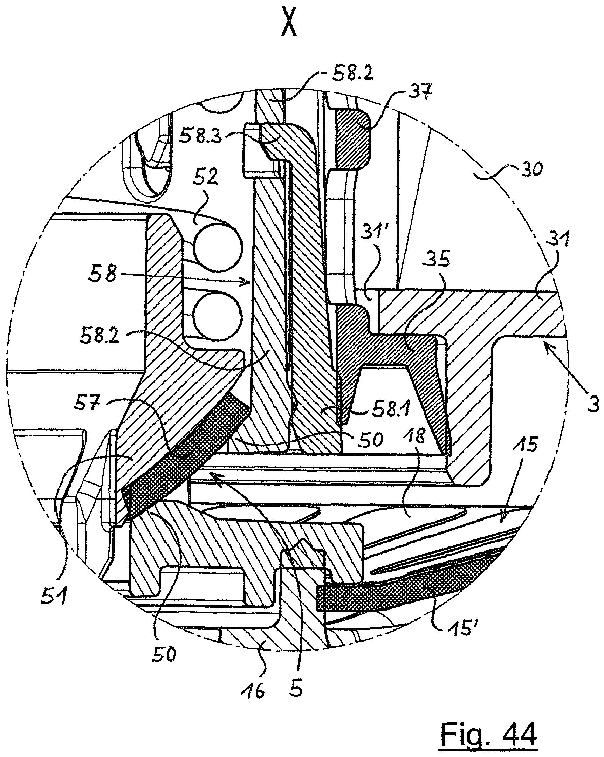

Figur 44 zeigt das Detail X des Filters 1 mit dem damit zusammenwirkenden, auswechselbaren Filtereinsatz 3 aus Figur 43 in vergrößerter Darstellung. Ganz unten ist ein kleiner Teil der Grundplatte 16 erkennbar, mit deren Oberseite der erste Halterteil 58.1 des Ventilhalters 58 fest verbunden, wie verschweißt, ist. Links unten in Figur 44 ist der Ventilsitz 50 sichtbar, der als Teil des ersten Halterteil 58.1 ausgebildet ist. Am Ventilsitz 50 liegt hier der in seiner Schließstellung befindlichen Ventilkörper 51 an, der an seiner dem Ventilsitz 50 zugewandten Oberfläche eine Elastomerauflage 57 zur Verbesserung der Dichtwirkung in Schließstellung trägt. Um einen oberen Teil des Ventilkörpers 51 herum verläuft die Feder 52 in Form einer Schraubendruckfeder. Radial außen, das heißt hier rechts von dem ersten Halterteil 58.1 ist ein Teil des zweiten Halterteils 58.2 erkennbar, wobei die Halterteile 58.1 und 58.2 mittels der Rastverbindungen 58.3, von denen in Figur 44 eine sichtbar ist, miteinander verbunden sind.

Radial außen vom Ventilkörper 53, das heißt in Figur 44 rechts davon, ist ein kleiner Teil des Filtereinsatzes 3 mit dem Filterstoffkörper 30, der unteren Stirnscheibe 31, dem Dichtkragen 35 und dem gitterförmigen Stützkörper 37 sichtbar. Zentral in der unteren Stirnscheibe 31 liegt die Öffnung 31', mittels welcher der Filtereinsatz 3 dichtend auf den zweiten Halterteil 58.2 des Ventilhalters 58 aufgesetzt ist.

Rechts unten in Figur 44 ist schließlich noch ein Teil des Rücklaufsperrventils 15 sichtbar, dessen Ventilmembran 15' an ihrem radial inneren Randbereich dichtend zwischen der Grundplatte 16 und dem Halterteil 58.1 des Ventilhalters 58 eingeklemmt ist.

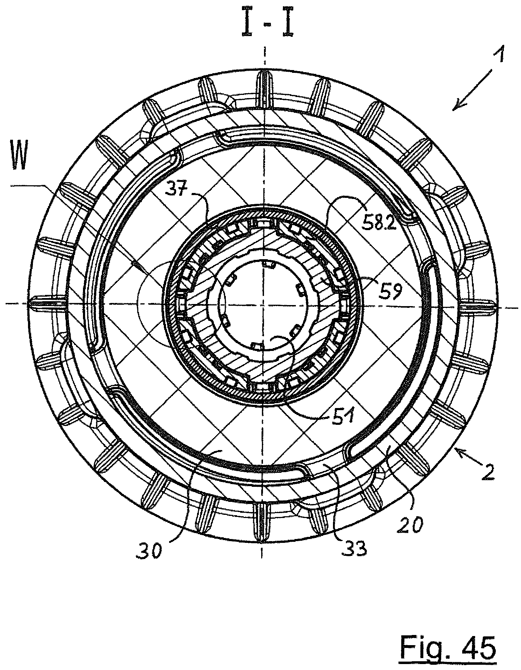

Figur 45 zeigt den Filter 1 aus Figur 43 im Querschnitt gemäß der Schnittlinie I - I in Figur 43. Radial außen liegt das Filtergehäuse 2 des Filters 1, wobei die Umfangswand 20 des Gehäuses 3 hier wieder geschnitten ist. Weiter radial innen ist der Filtereinsatz 3 mit dem hier geschnittenen Filterstoffkörper 30 sichtbar, der radial innen von dem Stützkörper 37 abgestützt ist. Radial innen vom Stützkörper 37 ist der Ventilhalter 58 sichtbar, in welchem der Abdeckkörper 59 liegt. Ganz im Zentrum der Figur 45 ist schließlich der Ventilkörper 51 teilweise von oben sichtbar.

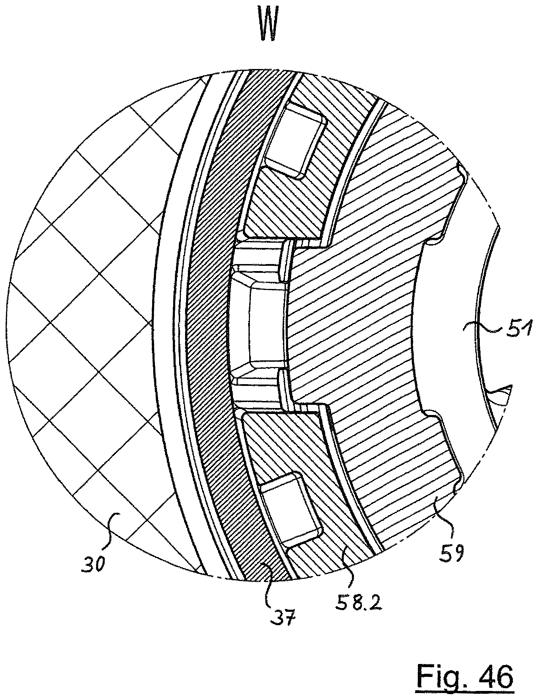

Figur 46 zeigt das Detail W des Filters 1 aus Figur 45 in vergrößerter Darstellung. Links ist ein Teil des Filterstoffkörpers 30 des Filtereinsatzes 3 sichtbar. Rechts davon verläuft der Stützkörper 37. Noch weiter nach rechts folgen dann Abschnitte des Ventilhalters 58 und des Abdeckkörpers 59, der in dem Ventilhalter 58 axial, das heißt senkrecht zur Zeichnungsebene der Figur 46, verschiebbar geführt ist, in Umfangsrichtung aber mittels ineinander greifender Konturen gegen Verdrehen gesichert ist.

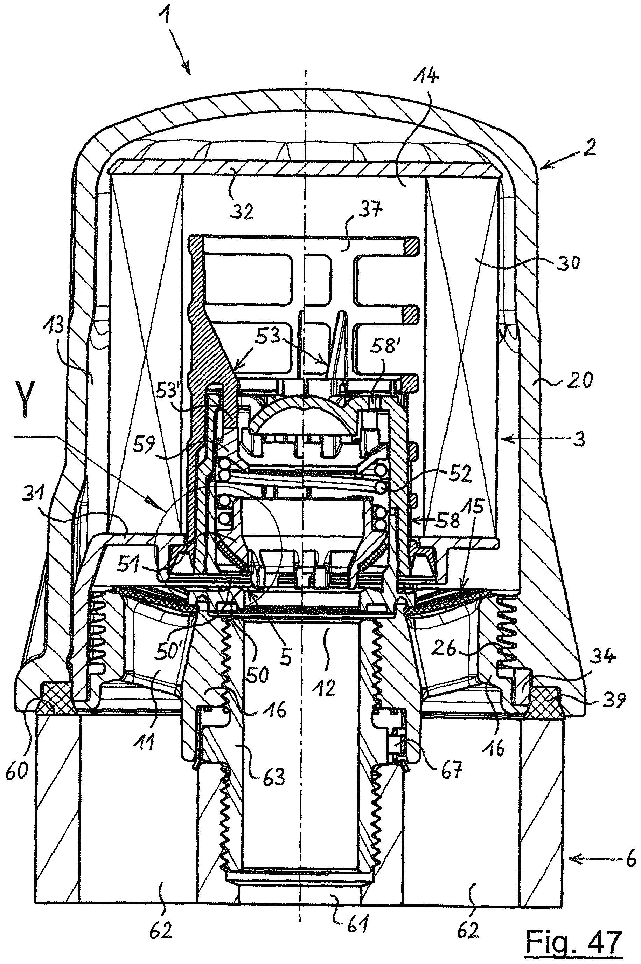

Figur 47 zeigt den Filter 1 mit dem damit zusammenwirkenden, auswechselbaren Filtereinsatz 3 in gleicher Darstellung wie in Figur 38, nun aber mit dem Filterumgehungsventil 5 in Öffnungsstellung. Der in Figur 47 gezeigte Zustand des Filterumgehungsventils 5 stellt sich ein, wenn im Filter 1 zwischen dessen Rohseite 13 und Reinseite 14 eine Druckdifferenz herrscht, die einen vorgebbaren Grenzwert überschreitet, beispielsweise bei Verstopfung des Filterstoffkörpers 30 des Filtereinsatzes 3 mit zuvor abgefilterten Schmutzpartikeln. In diesem Fall übt die Flüssigkeit auf der Rohseite 13 des Filters 1 auf den Ventilkörper 51 des Filterumgehungsventils 5 eine in Öffnungsrichtung wirkende Kraft aus, die größer ist als die von der Ventilfeder 52 in Schließrichtung ausgeübte Kraft. Die in Öffnungsrichtung wirkende Kraft verschiebt den Ventilkörper 51 in Richtung von seinem Ventilsitz 50 weg, wodurch eine unmittelbare Strömungsverbindung von der Rohseite 13 zur Reinseite 14 des

Filters 1 durch eine Ventildurchlassöffnung 50' unter Umgehung des Filterstoffkörpers 30 freigegeben wird. Sobald die Druckdifferenz zwischen Rohseite 13 und Reinseite 14 unter den vorgebbaren Grenzwert abfällt, überwiegt wieder die Kraft der Ventilfeder 52, so dass dann der Ventilkörper 51 wieder in seine Schließstellung bewegt wird, in der er am Ventilsitz 50 dichtend anliegt.

Hinsichtlich der weiteren Einzelteile und Bezugsziffern in Figur 47 wird auf die vorhergehende Beschreibung verwiesen.

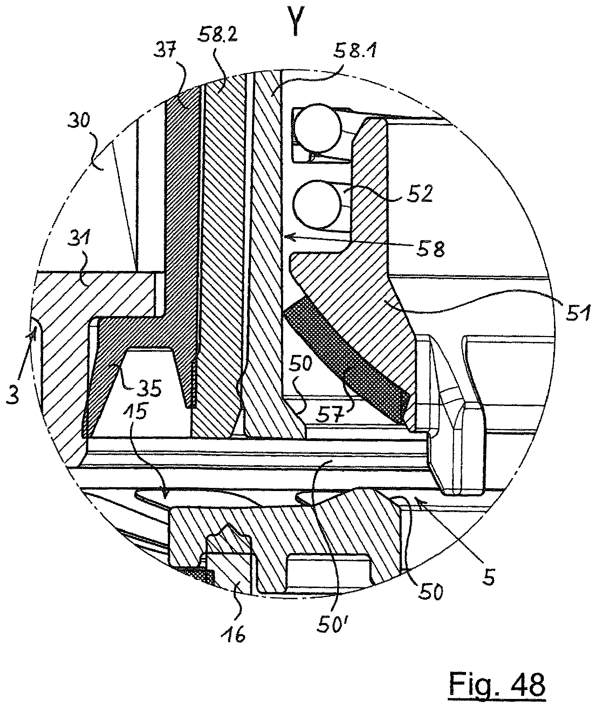

Figur 48 zeigt das Detail Y des Filters 1 aus Figur 47 in vergrößerter Darstellung. Rechts in Figur 48 ist der Ventilkörper 51 mit der Elastomerauflage 57 teilweise sichtbar, der von seinem Ventilsitz 50 Abstand aufweist, wodurch die Ventildurchlassöffnung 50' des Filterumgehungsventils 5 freigegeben ist. Somit besteht hier eine unmittelbare Strömungsverbindung von der Rohseite 13 zur Reinseite 14 des Filters 1. Oben in Figur 48 ist ein Teil der Ventilfeder 52 sichtbar, die hier durch die von der Druckdifferenz zwischen Rohseite 13 und Reinseite 14 erzeugte Kraft komprimiert ist. Links vom Ventilkörper 51 und von der Feder 52 sind die Halterteile 58.1 und 58.2 des Ventilhalters 58 sichtbar. Weiter links davon ist noch ein kleiner Teil des Filtereinsatzes 3 sichtbar. Unten in Figur 48 ist schließlich ein kleiner Teil der Grundplatte 16 sichtbar, welche oberseitig den Ventilhalter 58 mit dem Filterumgehungsventil 5 und das hier nur zu einem kleinen Teil sichtbare Rücklaufsperrventil 15 trägt.

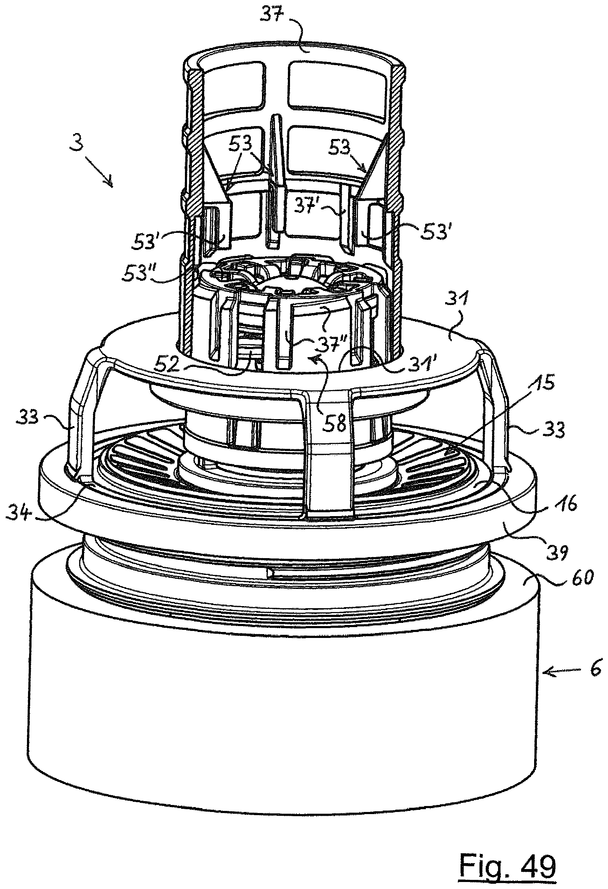

Die Figuren 49 bis 52 zeigen den Filteranschlussflansch 60 mit der daran angebrachten Grundplatte 16 zusammen mit dem Ventilhalter 58 und mit dem aus Übersichtlichkeitsgründen nur teilweise dargestellten Filtereinsatz 3 in verschiedenen Phasen des Einbauens des Filtereinsatzes 3. Dabei sind hier vom Filtereinsatz 3 jeweils nur dessen untere Stirnscheibe 31 mit den Verbindungsstegen 33, dem Dichtungsträger 34 und der Dichtung 39 in Ansicht sowie der gitterförmige Stützkörper 37 im Längsschnitt dargestellt.

Figur 49 zeigt den Filteranschlussflansch 60 mit der daran angeschraubten Grundplatte 16 des Filters 1 in Ansicht und mit dem Filtereinsatz 3 in einer ersten Phase des Einbauens des Filtereinsatzes 3 bei einer Filterwartung. Wie zuvor schon beschriebenen, weist der Filtereinsatz 3 eine Federstütze 53 mit mehreren Stützarmen 53' auf, die durch Einführöffnungen 53" im Ventilhalter 58 in dessen Inneres eintreten. Damit die Stützarme 53' zuverlässig in die in Umfangsrichtung gesehen dafür passende Position gelangen, sind am Filtereinsatz 3 zusätzlich zu den Stützarmen 53' erste Positionierelemente 37' vorgesehen, welche mit zweiten Positionierelementen 37" am Ventilhalter 58 zusammenwirken. Die ersten Positionierelemente 37' sind hier am Innenumfang des Stützkörpers 37 zwischen den Stützarmen 53' angeordnet und haben die Form von in Axialrichtung verlaufenden, radial nach innen vorstehenden länglichen Rippen oder Stegen. Die zweiten Positionierelemente 37" sind jeweils durch eine in Umfangsrichtung des Ventilhalters 58 am oberen Ende von dessen Außenumfang verlaufende abfallende Schräge, die in eine axiale Nut am Außenumfang des Ventilhalters 58 übergeht, gebildet. In Figur 49 ist der Filtereinsatz 3 gerade mittels der zentralen Öffnung 31' seiner unteren Stirnscheibe 31 in einer in Umfangsrichtung betrachtet beliebigen Stellung von oben her auf den Ventilhalter 58 aufgesetzt, wobei hier die Stützarme 53' und die ersten Positionierelemente 37' noch nicht in Kontakt mit dem Ventilhalter 58 getreten sind.

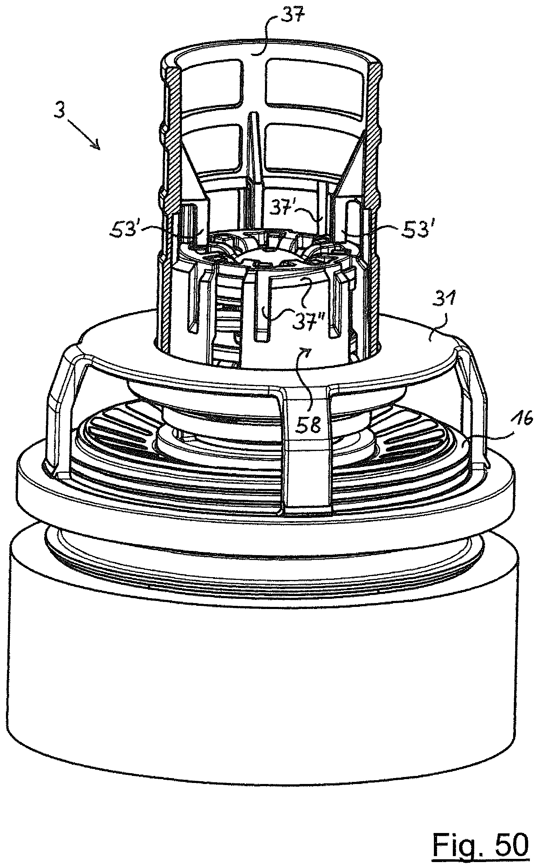

Figur 50 zeigt den Gegenstand der Figur 49 in gleicher Darstellung, nun in einer zweiten Phase des Einbauens des Filtereinsatzes 3. Der Filtereinsatz 3 ist nun relativ zum Ventilhalter 58 weiter nach unten bewegt, wodurch die ersten Positionierelemente 37' in Kontakt mit den zweiten Positionierelementen 37" gelangt sind. Dabei liegen die ersten Positionierelemente 37' mit ihrem nach unten weisenden Stirnende in Umfangsrichtung gesehen an irgendeiner Stelle der einen Teil der zweiten Positionierelemente 37" bildenden Schrägen oben am Ventilhalter 58 an.

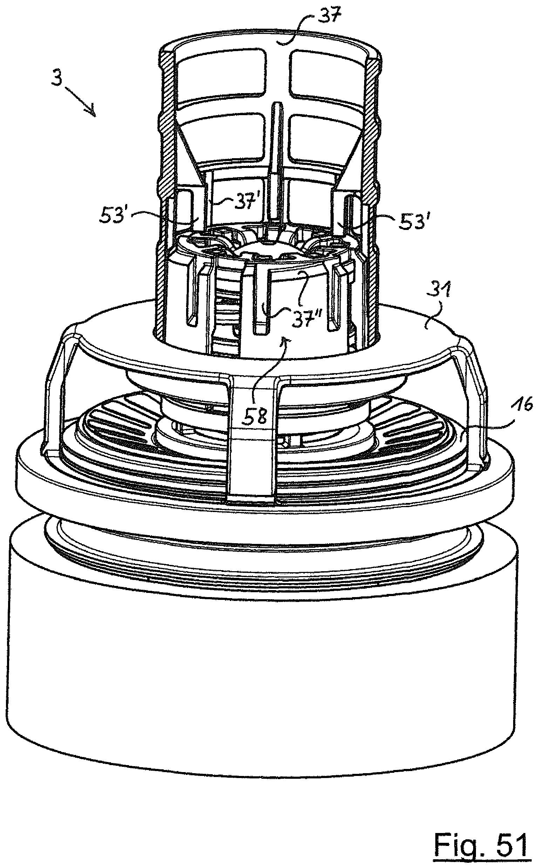

Figur 51 zeigt den Gegenstand der Figuren 49 und 50 in gleicher Darstellung, nun in einer dritten Phase des Anbauens des Filtereinsatzes 3. Der Filtereinsatz 3 ist nun infolge eines Verdrehens in Umfangsrichtung, welches zweckmäßig zusammen mit der Drehbewegung des hier nicht dargestellten Filtergehäuses 2 bei dessen Anschrauben an die Grundplatte 16 erfolgt, in eine Position gelangt, in der die ersten Positionierelemente 37' am unteren Ende der Schrägen der zweiten Positionierelemente 37" angelangt sind und nun in Axialrichtung gesehen exakt über der vertikalen Nut als zweitem Teil der zweiten Positionierelemente 37" stehen. Ein weiteres Verdrehen des Stützkörpers 37 mit den ersten Positionierelementen 37' relativ zum Ventilhalter 58 ist nun nicht mehr möglich. Aus diesem Grund ist der Stützkörper 37 hier relativ zu der unteren Stirnscheibe 31 des Filtereinsatzes 3 verdrehbar im Filtereinsatz 3 angeordnet.

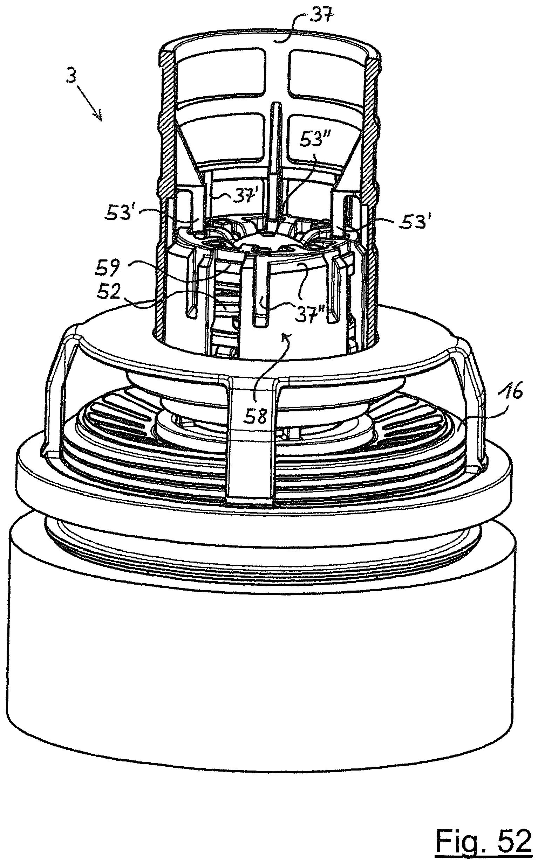

Figur 52 zeigt den Gegenstand der Figuren 49 bis 51 in gleicher Darstellung, nun in einer vierten Phase des Einbauens des Filtereinsatzes 3. Die ersten Positionierelemente 37' tauchen nun in die Teil der zweiten Positionierelemente 37" bildenden axialen Nuten am Außenumfang des Ventilhalters 58 ein. Gleichzeitig treten die Stützarme 53' der Federstütze 53 durch für diese vorgesehene Einführöffnungen 53" in das Innere des Ventilhalters 58 ein und bewegen den dort angeordneten, weiter oben schon erläuterten Abdeckkörper 59 nach unten und spannen so die Ventilfeder 52 des Filterumgehungsventils 5 vor. Die gegenseitige passende Findung von Stützkörper 37 und Ventilhalter 58 wird also selbsttätig bewirkt, ohne dass vom Wartungspersonal eine besondere Aufmerksamkeit hinsichtlich der gegenseitigen Positionierung der genannten Teile erforderlich ist.

Dadurch, dass separate Positionierelemente 37' am Filtereinsatz 3 vorgesehen sind, werden die Stützarme 53' der Federstütze 53 von allen mit der Positionierung zusammenhängenden, insbesondere in Umfangsrichtung wirkenden, Kräften entlastet.

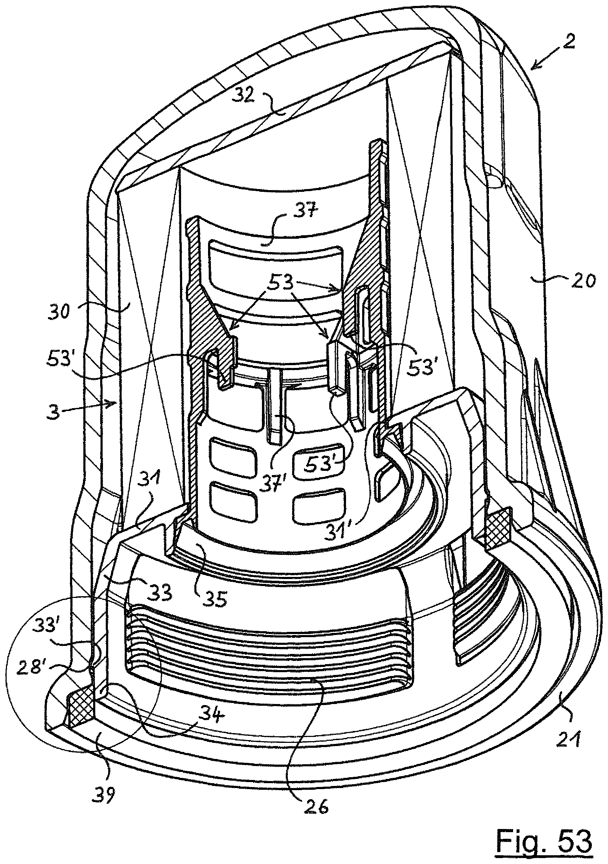

Figur 53 zeigt das Filtergehäuse 2 mit darin angeordnetem Filtereinsatz 3 in einer längs geschnittenen Ansicht. Radial außen ist das Schraubgehäuse 2 des Filters 1 mit der Umfangswand 20 erkennbar. Im Inneren des Filters 1 ist der Filtereinsatz 3 mit seinen zuvor schon beschriebenen Einzelteilen angeordnet. Im Inneren des Filterstoffkörpers 30 des Filtereinsatzes 3 ist der Stützkörper 37 angeordnet, der an seinem Innenumfang die Federstütze 53 mit den in Umfangsrichtung verteilten Stützarmen 53' und die ersten Positionierelemente 37' einstückig angeformt aufweist. Der Stützkörper 37 ist hier von unten her durch die zentrale Öffnung 31' in der unteren Stirnscheibe 31 in das Innere des Filtereinsatzes 3 und des Filterstoffkörpers 30 eingeführt und stützt den Filterstoffkörper 30 im Betrieb des Filters 1 radial innen gegen ein Zusammenfallen ab. Der Stützkörper 37 endet hier in einem Abstand von der oberen Stirnscheibe 32; er kann alternativ aber auch bis zu dieser Stirnscheibe 32 geführt sein.

Vom radial äußeren Rand der unteren Stirnscheibe 31 des Filtereinsatzes 3 gehen die vier gleichmäßig in Umfangsrichtung voneinander beabstandeten Verbindungsstege 33 in Axialrichtung nach unten hin ab. Am Innenumfang der Umfangswand 20 des Filtergehäuses 2 ist nahe deren unterer Stirnseite 21 das Innengewinde 26 vorgesehen. Auf der radial nach außen weisenden Oberfläche der Verbindungsstege 33 ist etwas oberhalb des umlaufenden Dichtungsträgers 34 jeweils ein Wulst oder Rastnocken 33' angeformt, welcher im Zusammenwirken mit einer Rasteintiefung 28' am Innenumfang der Umfangswand 20 zu einer leicht lösbaren Verrastung des Filtereinsatzes 3 im Filtergehäuse 2 dient. Der Filtereinsatz 3 ist somit mittels seiner Verbindungsstege 33 relativ zum Schraubgehäuse 3 in seiner Position definiert festgelegt.

An ihrem axial unteren Ende gehen die Verbindungsstege 33 in den hier einstückig damit ausgeführten, umlaufenden Dichtungsträger 34 über, auf dem der Dichtring 39 angeordnet ist.

Die in Figur 53 dargestellte Einheit aus Filtergehäuse 2 und Filtereinsatz 3 wird bei einer Filterwartung vom Anschlussflansch 60 beziehungsweise von der daran dauerhaft angebrachten Grundplatte 16 abgeschraubt. Alle Teile des Filterumgehungsventils 5 mit Ausnahme der Federstütze 53 verbleiben dabei an der Grundplatte 16, sind also filterfeste Elemente. Danach kann der verbrauchte Filtereinsatz 3 aus dem Gehäuse 2 herausgezogen und durch einen frischen Filtereinsatz 3 ersetzt werden. Da die Dichtung 39 Teil des Filtereinsatzes 3 ist, wird dabei auch die Dichtung 39 automatisch mit erneuert. Nach Anschrauben der Einheit aus dem Gehäuse 2 und dem frischen Filtereinsatz 3 an die Grundplatte 16 ist der Filter 1 wieder betriebsbereit.

Bezüglich der weiteren in Figur 53 dargestellten Einzelteile und Bezugsziffern wird auf die vorhergehende Beschreibung verwiesen.

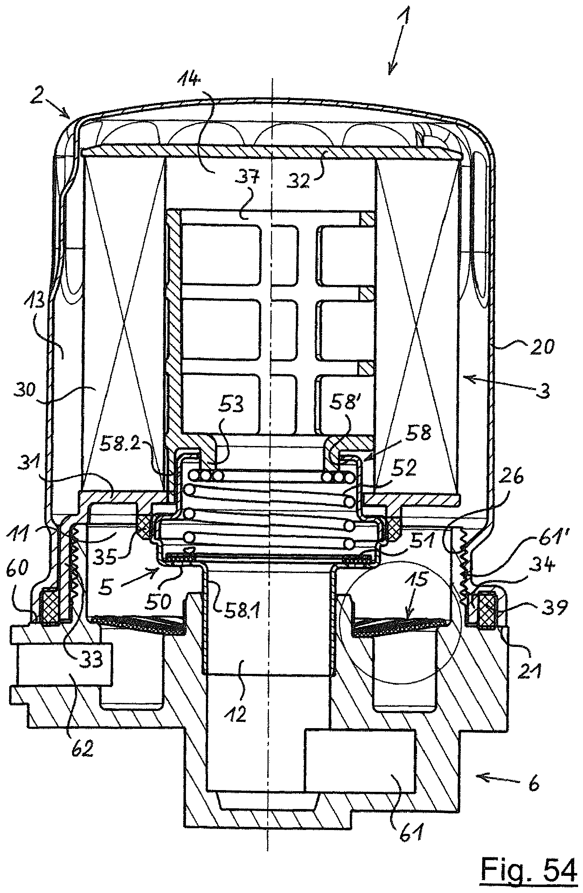

Figur 54 zeigt einen Filter 1 mit dem damit zusammenwirkenden, auswechselbaren Filtereinsatz 3 in einer weiteren Ausführung im Längsschnitt. In weiten Teilen entspricht der Filter 1 dem Ausführungsbeispiel nach Figur 37, wobei insbesondere das Filtergehäuse 2 und der Filtereinsatz 3 bei beiden Beispielen identisch sind. Unterschiedlich ist bei den beiden Ausführungsbeispielen, dass der Filter 1 nach Figur 54 keine Grundplatte aufweist und für einen Anschlussflansch 60 ohne zentralen Gewindenippel ausgelegt ist. Statt des zentralen Gewindenippels hat der Anschlussflansch 60 in Figur 54 radial außen einen Kragen mit einem Außengewinde 61', mit welchem ein Innengewinde 26 am Filtergehäuse 2 verschraubbar ist. Abgedichtet wird diese Schraubverbindung durch den Dichtring 39, der von dem über die Verbindungsstege 33 mit der unteren Stirnscheibe 31 des Filtereinsatzes 3 verbundenen Dichtringträger 34 getragen wird.

Auch der Filter 1 nach Figur 54 besitzt ein Filterumgehungsventil 5, welches hier wieder in einem Ventilhalter 58 angeordnet ist. Der Ventilhalter 58 ist hier wieder zweiteilig mit einem ersten, unteren Halterteil 58.1 und einem zweiten, oberen Halterteil 58.2 ausgeführt, die hier beispielsweise Blechteile sind. Der unteren Halterteil 58.1 besitzt einen nach unten vorragenden hohlzylindrischen Abschnitt, welcher den Auslass 12 bildet und in eine passend geformte und bemaßte Öffnung im Zentrum des Anschlussflansches 60 eingepresst ist. Nach der Erstmontage sitzt also der Ventilhalter 58 im Presssitz im Anschlussflansch 60, aus dem er im normalen Betrieb des Filters 1 nicht mehr gelöst wird. In seinen übrigen Teilen und Funktionen entspricht das Filterumgehungsventil 5 in Figur 54 dem Filterumgehungsventil 5, welches in Figur 35 schon beschrieben wurde. Hinsichtlich der sonstigen in Figur 54 dargestellten Teile und eingetragenen Bezugsziffern wird auf die vorhergehende Beschreibung verwiesen.

Ein Rücklaufsperrventil 15 ist hier unmittelbar am Anschlussflansch 60 angebracht und somit hier nicht integraler Bestandteil des Filters 1.

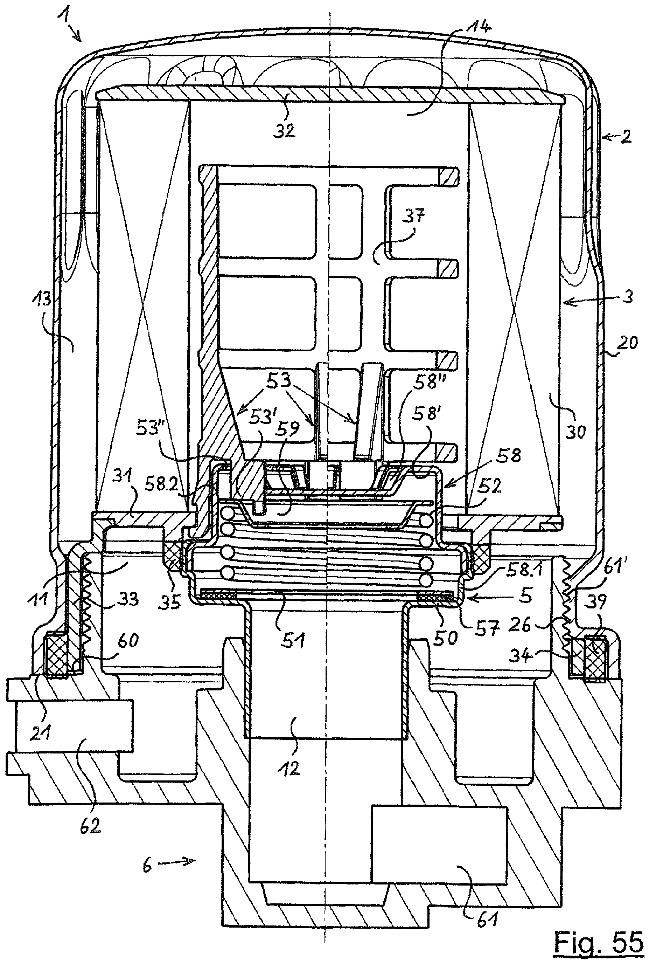

Figur 55 zeigt einen Filter 1 mit dem damit zusammenwirkenden, auswechselbaren Filtereinsatz 3 in einer weiteren Ausführung im Längsschnitt, wobei dieser Filter 1 mit dem Filtereinsatz 3 in weiten Teilen dem Ausführungsbeispiel nach Figur 54 entspricht. Unterschiedlich zu dem Beispiel nach Figur 54 ist bei dem Beispiel nach Figur 55, dass im Ventilhalter 58 zusätzlich ein Abdeckkörper 59 angeordnet ist. Der Abdeckkörper 59 liegt zwischen dem oberen Ende der Feder 52 des Filterumgehungsventils 5 und der Unterseite des oberen Stirnendes des Ventilhalters 58. Im zusammengebauten, betriebsbereiten Zustand des Filters 1, wie ihn die Figur 55 zeigt, greifen die Stützarme 53' der Federstütze 53 des Filtereinsatzes 3 von oben her durch die Einführöffnungen 53" des Ventilhalters 58 in diesen hinein und drücken über den Abdeckkörper 59 auf die Feder 52. Hierdurch wird die Feder 52 vorgespannt und übt auf den Ventilkörper 51 des Filterumgehungsventils 5 eine vorgebbare Vorbelastungskraft aus. Gleichzeitig wird so der Abdeckkörper 59 in einem axialen Abstand von den Durchlässen 58" in der Oberseite des Ventilhalters 58 gehalten, wodurch eine Strömung von gefilterter Flüssigkeit aus dem Inneren des Filtereinsatzes 3 durch den Auslass 12 zum Reinflüssigkeitskanal 61 im Anschlussflansch 60 der Vorrichtung 6 möglich ist.

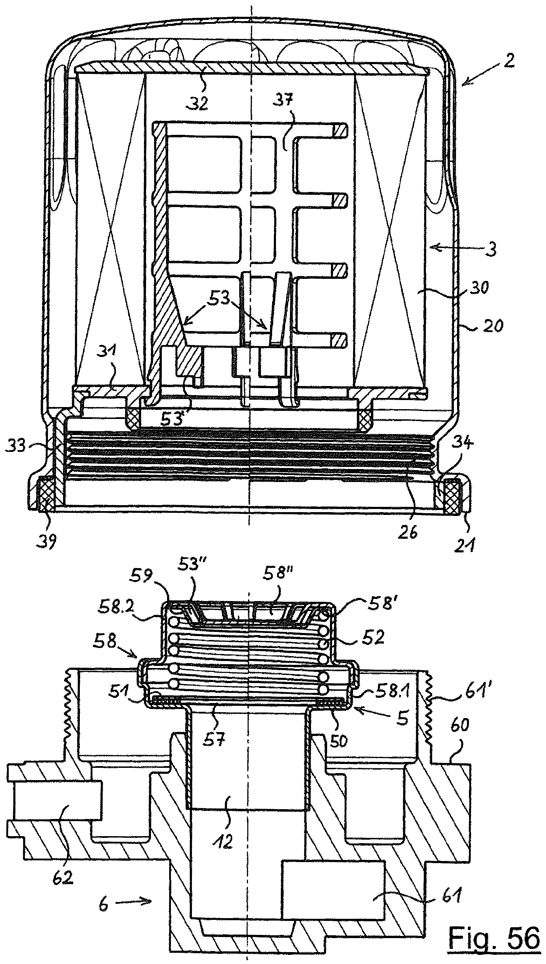

Wenn, wie in Figur 56 gezeigt, das Filtergehäuse 2 zusammen mit dem Filtereinsatz 3 vom Anschlussflansch 60 abgeschraubt ist, drückt die Feder 52 den Abdeckkörper 59 nach oben gegen die Unterseite des oberen Stirnendes des Ventilhalters 58 und verschließt dann die dort angeordneten Durchlässen 58". Auf diese Weise wird ein Hineinfallen von Schmutzpartikeln in den Auslass 12 und in den Reinflüssigkeitskanal 61 sicher vermieden.

Hinsichtlich der weiteren Einzelteile und Funktionen des Filters 1 nach Figur 55 und 56 wird auf die vorhergehende Beschreibung, insbesondere der Figur 54, verwiesen.

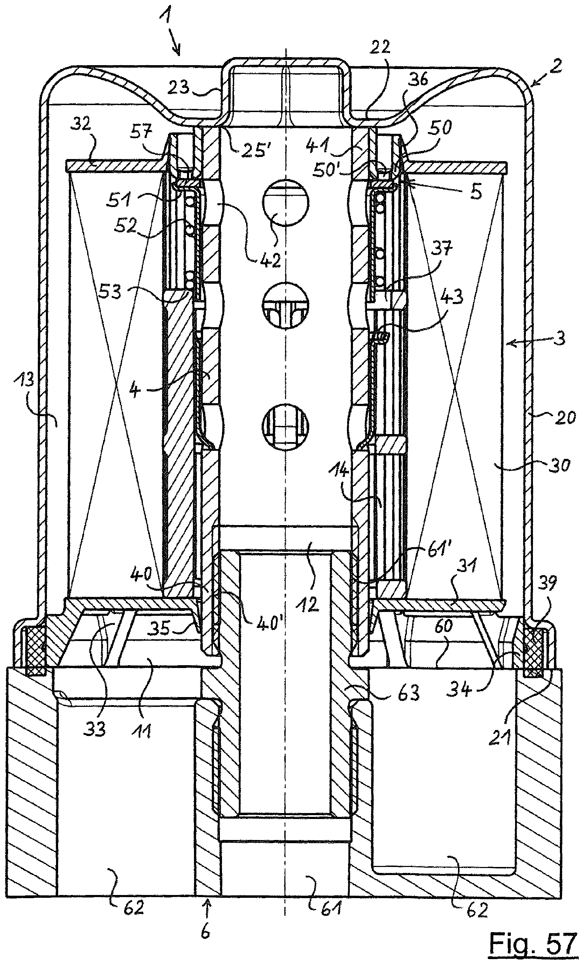

Figur 57 zeigt einen Filter 1 mit dem damit zusammenwirkenden, auswechselbaren Filtereinsatz 3 in einer weiteren Ausführung, in einem an einen Anschlussflansch 60 angebauten Zustand, im Längsschnitt. Der Filter 1 besitzt einen einteiligen zentralen Rohrstutzen 4, der an seinem oberen Endbereich 41 fest mit der flanschfernen Stirnseite 22 des Filtergehäuses 2 verbunden, beispielsweise verschweißt, ist. Charakteristisch für dieses Ausführungsbeispiel ist, dass der zentrale Rohrstutzen 4 in seinem unteren, flanschseitigen Endbereich 40 ein Innengewinde 40' besitzt, mittels welchem das Filtergehäuse 2 auf ein passendes Außengewinde 61' an einem zentral im Anschlussflansch 60 angebrachten Gewindenippel 63 geschraubt ist.

Das Filterumgehungsventil 5 des Filters 1 gemäß Figur 57 ist im oberen Bereich des zentralen Rohrstutzens 4 angeordnet und entspricht der Ausführung, wie sie in den Figuren 1, 3 und 4 schon beschrieben wurde, auf welche diesbezüglich verwiesen wird.

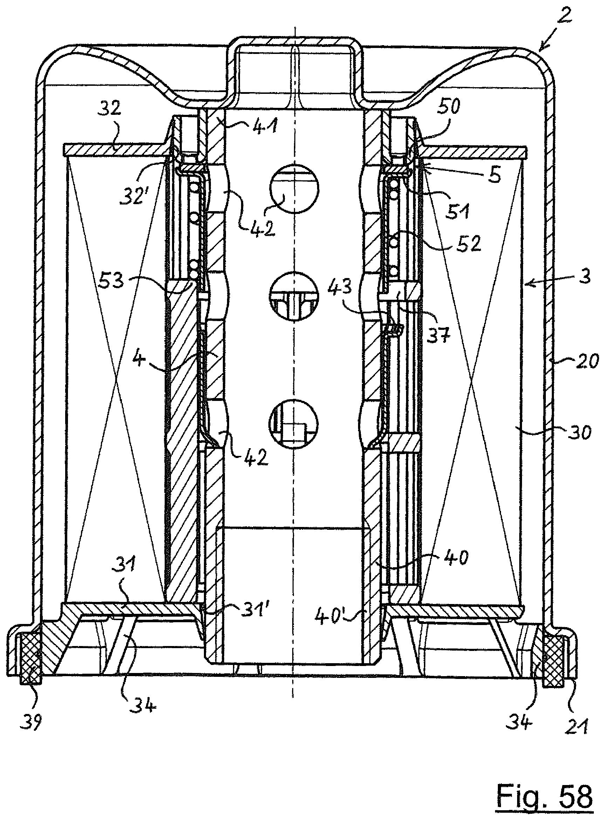

Figur 58 der Zeichnung schließlich zeigt den Filter 1 aus Figur 57 in einem vom Anschlussflansch 60 abgebautem Zustand im Längsschnitt. Der Filtereinsatz 3 sitzt reibschlüssig auf dem zentralen Rohrstutzen 4 im Inneren des Filtergehäuses 2, so dass beim Abschrauben des Filtergehäuses 2 vom Gewindenippel 63 der Filtereinsatz 3 mitgenommen wird. In dem in Figur 58 gezeigten Zustand kann der Filtereinsatz 3 nach unten hin aus dem Filtergehäuse 2 herausgezogen und durch einen neuen, frischen Filtereinsatz 3 ersetzt werden. Die Federstütze 53, die die Feder 52 des Filterumgehungsventils 5 vorgespannt, ist auch hier am Filtereinsatz 3, konkret an dessen zentralem Stützkörper 37, vorgesehen. Beim Herausziehen des Filtereinsatzes 3 aus dem Filtergehäuse 2 wird die Feder 52 so weit entspannt, bis sie sich mit ihrem unteren Ende an den Anschlag 43 anlegt. Der Anschlag 43 ist hier in Form einer Blechhülse ausgeführt, die auf dem Außenumfang des Rohrstutzens 4 axial unverschieblich angebracht ist und die sich an ihrem unteren Ende in einigen der im Rohrstutzen 4 angebrachten Durchbrechungen 42 axial abstützt. Somit sind die Feder 52 und der Ventilkörper 51 des Filterumgehungsventils 5 auch hier gegen Verlieren gesichert.

Die Dichtung 39 ist auch hier wieder Teil des Filtereinsatzes 3 und auf einem umlaufenden Dichtringträger 34 angeordnet, welcher wieder über Verbindungsstege 33 mit der unteren, flanschseitigen Stirnscheibe 31 des Filtereinsatzes 3 verbunden oder einstückig ausgeführt ist.

### Bezugszeichenliste:

- Zeichen: Bezeichnung

- 1: Filter
- 10: Verbindungsflansch
- 11: Einlass
- 12: Auslass
- 13: Rohseite
- 14: Reinseite
- 15: Rücklaufsperrventil
- 15': Ventilmembran
- 15": Membranträger
- 16: Grundplatte
- 16': Schraubgewinde innen an 16
- 16": Schraubgewinde außen an 16
- 17: Rastverbindung zwischen 15" und 50
- 18: Federzungenscheibe

- 2: Filtergehäuse
- 20: Umfangswand
- 20': Schraubdeckel
- 21: flanschseitige Stirnseite
- 22: flanschferne Stirnseite
- 23: Werkzeugansatz
- 24: Innendurchmesserstufe
- 25: Gewindestutzen an 22
- 25': Schweißnaht
- 26: Schraubgewinde
- 28: Eintiefungen in 25
- 28': Rasteintiefungen innen in 20

- 3: Filtereinsatz
- 30: Filterstoffkörper
- 31: untere, flanschseitige Stirnscheibe
- 31': zentrale Durchbrechung in 31
- 32: obere, flanschferne Stirnscheibe
- 32': zentrale Durchbrechung in 32
- 33: Verbindungsstege
- 33': Rastnocken an 33
- 34: Dichtringträger
- 35: Dichtung/Dichtlippe an 31
- 36: Dichtung/Dichtlippe an 32
- 37: innerer Stützkörper
- 37': erste Positioniermittel an 3
- 37": zweite Positioniermittel an 58
- 38: axiale Streben von 37
- 39: erster Dichtring (außen)
- 39': zweiter Dichtring (innen)

- 4: zentraler Rohrstutzen
- 4.1: erster, flanschseitiger Rohrstutzenabschnitt
- 4.2: zweiter, flanschferner Rohrstutzenabschnitt
- 40: äußerer Endbereich
- 40': Schraubgewinde an 40
- 40": Gewinde an 4.1 für 4.2
- 41: innerer Endbereich
- 41': Gewinde an 41
- 41": Gewinde an 4.2 für 4.1
- 42: Durchbrechungen
- 43: Anschlag
- 43.1: Anschlagkragen
- 43.2: Anschlagzungen
- 43.3: Anschlaglasche
- 44: Zwischenräume
- 45: Längsrippe auf 4
- 46: Einführschrägen
- 47: Losdrehsicherung
- 47': Losdrehsicherungsring
- 48: Nocken auf 47'
- 49: Längsführung für 37

- 5: Filterumgehungsventil
- 50: Ventilsitz
- 50': Durchlassöffnung(en)
- 51: Ventilkörper
- 52: Feder
- 53: Federstütze
- 53': Stützarme
- 53": Einführöffnung(en) für 53' in 58
- 54: Zwischenring
- 55: Längsnut in 51
- 56: Innengewinde in 50
- 57: Elastomerauflage an 50, 51
- 58: Ventilhalter
- 58.1: erster, unterer Halterteil
- 58.2: zweiter, oberer Halterteil
- 58.3: Rastverbindung zwischen 58.1 und 58.2
- 58': Anschlag für 52 in 58
- 58": Durchlass
- 59: Abdeckkörper

- 6: Vorrichtung mit Flüssigkeitskreislauf
- 6': Sockel
- 60: Anschlussflansch
- 61: Reinflüssigkeitskanal
- 61': Gegengewinde in/an 61
- 62: Rohflüssigkeitskanal
- 63: Gewindenippel
- 65: Anschlag für 50
- 67: Losdrehsicherung

## Patentansprüche

1. Filtereinsatz (3), der zum Zusammenwirken mit einem Filter (1) ausgebildet ist, der ein Filtergehäuse (2), einen Einlass (11) für zu filternde Flüssigkeit, eine Auslass (12) für gefilterte Flüssigkeit und ein Filterumgehungsventil (5), das aus einem Ventilsitz (50) und aus einem relativ dazu beweglich geführten, in Schließrichtung vorbelasteten Ventilkörper (51) besteht, aufweist, wobei der Ventilsitz (50) filterfest im Filter (1) angeordnet ist, wobei der Ventilkörper (51) filterfest im Filter (1) geführt ist, wobei eine den Ventilkörper (51) in Schließrichtung vorbelastende Feder (52) filterfest im Filter (1) geführt ist, wobei der Filtereinsatz (3) im in den Filter (1) eingebauten Zustand eine Rohseite (13) und eine Reinseite (14) des Filters (1) voneinander trennt und wobei der Filtereinsatz (3) austauschbar ist,
**dadurch gekennzeichnet,**
**dass** der Filtereinsatz (3) eine Federstütze (53) aufweist, mittels welcher im in das Filtergehäuse (2) eingebauten Zustand des Filtereinsatzes (3) die Feder (52) des Filterumgehungsventils (5) an ihrem von dem Ventilkörper (51) abgewandten Ende abstützbar und vorspannbar ist,
**dass** der Filtereinsatz (3) aus einem hohlzylindrischen Filterstoffkörper (30) sowie zwei diesen stirnseitig einfassenden Stirnscheiben (31, 32) besteht, wobei eine oder jede Stirnscheibe (31, 32) eine zentrale Durchbrechung (31', 32') besitzt und wobei am Innenumfang des Filterstoffkörpers (30) ein innerer, gitterförmiger Stützkörper (37) zur radialen Abstützung des Filterstoffkörpers (30) bei seiner Durchströmung durch zu filternde Flüssigkeit in radialer Richtung von außen nach innen angeordnet ist und
**dass** die Federstütze (53) durch den oder an dem einen Teil des Filtereinsatzes (3) bildenden Stützkörper (37) ausgebildet ist.

2. Filtereinsatz nach Anspruch 1, **dadurch gekennzeichnet, dass** die Federstütze (53) mit dem zentralen Stützkörper (37) im Filterstoffkörper (30) einstückig sowie in Form eines radial nach innen und im Einbauzustand axial nach unten weisenden, ringförmigen Stützkragens ausgeführt ist, dass der Stützkörper (37) nur mit der im Einbauzustand unteren Stirnscheibe (31) verbunden ist und dass das im Einbauzustand obere Ende des Stützkörpers (37) in einem Abstand von der Unterseite der im Einbauzustand oberen Stirnscheibe (32) liegt oder an der Unterseite der oberen Stirnscheibe (32) abgestützt ist.

3. Filtereinsatz nach Anspruch 1, **dadurch gekennzeichnet, dass** die Federstütze (53) in Form von radial nach innen vorragenden Rippen einstückig mit dem gitterförmige Stützkörper (37) ausgeführt ist und dass der Stützkörper (37) mit beiden Stirnscheiben (31, 32) verbunden ist.

4. Filtereinsatz nach einem der Ansprüche 1 bis 3, **dadurch gekennzeichnet, dass** er in verschiedenen Ausführungen mit unterschiedlicher axialer Länge oder Lage seiner Federstütze (53) herstellbar ist und dass dadurch eine Vorspannung der Feder (52) und so ein Öffnungsdruck des Filterumgehungsventils (5) veränderbar ist.

5. Filtereinsatz nach einem der Ansprüche 1 bis 4, **dadurch gekennzeichnet, dass** die Federstütze (53) mehrere Stützarme (53') aufweist, die entsprechend der Form und Anordnung von offenen Zwischenräumen (44) in einem Anschlag (43) oder von Einführöffnungen (53") in einem Ventilhalter (58) des zugehörigen Filters (1) geformt und angeordnet sind, wobei die Stützarme (53') beim Einbauen des Filtereinsatzes (3) in das Filtergehäuse (2) durch die offenen Zwischenräume (44) oder die Einführöffnungen (53") hindurchführbar sind und wobei die Stützarme (53') mit den offenen Zwischenräume (44) oder mit den Einführöffnungen (53") eine Schlüssel-Schloss-Codierung bilden.

6. Filtereinsatz nach Anspruch 5, **dadurch gekennzeichnet, dass** der Filtereinsatz (3) zusätzlich zu den die Federstütze (53) bildenden Stützarmen (53') erste Positionierelemente (37') aufweist und dass mittels der ersten Positionierelemente (37') und mittels damit zusammenwirkender zweiter, am Ventilhalter (58) zusätzlich zu den Einführöffnungen (53") vorgesehener Positionierelemente (37") der Filtereinsatz (3) bei seinem Einbauen in den Filter (1) in eine in Umfangsrichtung eingriffsgerechte Stellung seiner Stützarme (53') relativ zu den Einführöffnungen (53") des Ventilhalters (58) führbar ist.

7. Filtereinsatz nach Anspruch 6, **dadurch gekennzeichnet, dass** die ersten Positionierelemente (37') am Innenumfang des Stützkörpers (37) zwischen den Stützarmen (53') angeordnet sind und die Form von in Axialrichtung verlaufenden, radial nach innen vorstehenden länglichen Rippen oder Stegen haben.

8. Filtereinsatz nach einem der Ansprüche 1 bis 7, der zum Zusammenwirken mit einem Filter (1), der ein Rücklaufsperrventil (15) mit einer flexible Ventilmembran (15') und einen starren Membranträger (15") aufweist, ausgebildet ist, **dadurch gekennzeichnet, dass** bei in den Filter (1) eingebautem Filtereinsatz (3) die Ventilmembran (15') an ihrem radial inneren Randbereich mittels des Filtereinsatzes (3) gegen den Membranträger (15") einklemmbar ist.

9. Filtereinsatz nach Anspruch 8, **dadurch gekennzeichnet, dass** mittels eines radial innen am Filtereinsatz (3) angeordneten Dichtrings (39') die Ventilmembran (15') an ihrem radial inneren Randbereich gegen den Membranträger (15") einklemmbar ist.

10. Filtereinsatz nach einem der Ansprüche 1 bis 9, der zum Zusammenwirken mit einem Filter (1) ausgebildet ist, der als Anschraubwechselfilter ausgeführt ist und dessen eine Stirnseite (21) als Verbindungsflansch (10) zum Verbinden des Filters (1) mit einem Anschlussflansch (60) einer einen Kreislauf mit zu filternder Flüssigkeit besitzenden Vorrichtung (6) ausgeführt ist, **dadurch gekennzeichnet, dass** mit einer im in den Filter (1) eingebauten Zustand flanschseitigen Stirnscheibe (31) des Filtereinsatzes (3) radial außen ein Dichtringträger (34) verbunden oder einstückig ausgeführt ist, auf dem ein Dichtring (39) angebracht oder anbringbar ist, mittels welchem der Filter (1) gegen den Anschlussflansch (60) der den Kreislauf mit zu filternder Flüssigkeit besitzenden Vorrichtung (6) abdichtbar ist.

11. Filtereinsatz nach Anspruch 10, **dadurch gekennzeichnet, dass** der Dichtringträger (34) mit der Stirnscheibe (31) über in Umfangsrichtung gesehen in Abständen voneinander angeordnete Verbindungsstege (33) verbunden ist.

12. Filtereinsatz nach Anspruch 11, **dadurch gekennzeichnet, dass** auf einer radial nach außen weisenden Oberfläche der Verbindungsstege (33) oberhalb des umlaufenden Dichtungsträgers (34) jeweils ein Wulst oder Rastnocken (33') angeformt ist.

13. Filtereinsatz nach Anspruch 1, **dadurch gekennzeichnet, dass** die/jede Durchbrechung (31', 32') eine diese radial außen umgreifende Dichtlippe (35, 36) besitzt.

14. Filtereinsatz nach Anspruch 1, **dadurch gekennzeichnet, dass** der Stützkörper (37) im Inneren des Filterstoffkörpers (30) relativ zum übrigen Filtereinsatz (3) drehbar und/oder in Axialrichtung verschiebbar angeordnet ist.

15. Filtereinsatz nach Anspruch 1, **dadurch gekennzeichnet, dass** der Stützkörper (37) des Filtereinsatzes (3) als separates Einzelteil am Innenumfang des Filterstoffkörpers (30) angeordnet ist und sich mit seinem im Einbauzustand oberen Ende gegen die Unterseite der oberen Stirnscheibe (32) abstützt und dass das andere Ende des Stützkörpers (37) die Federstütze (53) bildet.

16. Filtereinsatz nach Anspruch 1, **dadurch gekennzeichnet, dass** ein im Einbauzustand des Filtereinsatzes (3) oberes Ende des Stützkörpers (37) als Losdrehsicherungsring (47') ausgebildet ist, an dessen Stirnseite Nocken (48) einstückig angeformt sind, die im Einbauzustand des Filtereinsatzes (3) mit Eintiefungen (28) an einem radial innen vom Filterstoffkörper (30) liegenden Gewindestutzen (25) des als Schraubgehäuse ausgebildeten Filtergehäuses (2) in Eingriff stehen und eine Losdrehsicherung (47) bilden.

17. Filtereinsatz nach Anspruch 16, **dadurch gekennzeichnet, dass** der Stützkörper (37) im Filtereinsatz (3) in Axialrichtung verschiebbar und relativ zum übrigen Filtereinsatz (3) verdrehbar ist, dass der Stützkörper (37) im Einbauzustand des Filtereinsatzes (3) relativ zu einem einen Teil des Filters (1) bildenden, den Filtereinsatz (3) tragenden, verdrehfesten zentralen Rohrstutzen (4) in Umfangsrichtung nicht oder nur sehr begrenzt verdrehbar ist und dass der Stützkörper (37) im Einbauzustand des Filtereinsatzes (3) von der Feder (52) in Eingriffsrichtung der Losdrehsicherung (47) beaufschlagt ist.

18. Filtereinsatz nach Anspruch 1, **dadurch gekennzeichnet, dass** der Stützkörper (37) des Filtereinsatzes (3) einstückig mit der im Einbauzustand oberen Stirnscheibe (32) ausgeführt ist.

19. Filtereinsatz nach Anspruch 1, **dadurch gekennzeichnet, dass** der Stützkörper (37) sowohl mit der unteren Stirnscheibe (31) als auch mit der oberen Stirnscheibe (32) verbunden ist.

20. Filtereinsatz nach Anspruch 1, **dadurch gekennzeichnet, dass** der Stützkörper (37) nur mit der unteren Stirnscheibe (31) verbunden ist und dass das obere Ende des Stützkörpers (37) in einem Abstand von der Unterseite der oberen Stirnscheibe 32 liegt.

21. Filtereinsatz nach Anspruch 1, **dadurch gekennzeichnet, dass** an der Stirnscheibe (31) des Filtereinsatzes (3) Rastarme angeordnet sind, mittels welcher der Filtereinsatz (3) mit einem Schraubdeckel (20') des den Filtereinsatz (3) aufnehmenden Filtergehäuses (2) des Filters (1) lösbar verrastbar ist.
